# EUROPÄISCHE PATENTSCHRIFT

(11) **EP 4 085 235 B1**
(45) Veröffentlichungstag und Bekanntmachung des Hinweises auf die Patenterteilung: **22.11.2023**
(21) Anmeldenummer: 20817299.9
(22) Anmeldetag: 01.12.2020
(51) Int. Cl.: G01F 1/84

(54) **VIBRONISCHES MESSSYSTEM**
VIBRONIC MEASURING SYSTEM
SYSTÈME DE MESURE VIBRONIQUE

(30) Priorität: 30.12.2019 DE 102019009024
(43) Veröffentlichungstag der Anmeldung: 09.11.2022
(73) Patentinhaber: Endress + Hauser Flowtec AG, 4153 Reinach (CH)
(72) Erfinder: RIEDER, Alfred, 84032 Landshut (DE); KIRST, Michael, 79540 Lörrach (DE)
(74) Vertreter: Hahn, Christian
(86) Internationale Anmeldenummer: PCT/EP2020/084119
(87) Internationale Veröffentlichungsnummer: WO 2021/136626

(56) Entgegenhaltungen:
- WO-A1-2019/081170
- CN-U- 204 854 846
- DE-A1- 19 601 349
- US-A1- 2019 383 658

## Beschreibung

Die Erfindung betrifft ein mittels eines Meßwandler vom Vibrationstyp und einer daran elektrisch angeschlossenen Meßsystem-Elektronik gebildetes vibronisches Meßsystem, insb. ein Coriolis-Massedurchfluß-Meßgerät oder Coriolis-Massedurchfluß-/Dichte-Meßgerät, zum Messen und/oder Überwachen wenigstens einer Meßgröße eines strömenden Meßstoffs.

Gattungsgemäße vibronische Meßsysteme sind beispielsweise in der US-A 2006/0266129, der US-A 2007/0113678, der US-A 2010/0011882, der US-A 2012/0123705, der US-A 2017/0356777, der US-B 63 11 136, der US-A 56 02 345, der US-A 59 26 096, der WO-A 2009/136943, der WO-A 2019/017891, der WO-A 2019/081169, der WO-A 2019/081170, der WO-A 87/06691, der WO-A 96/05484, der WO-A 96/08697, der WO-A 97/26508, der WO-A 99/39164 oder der eigenen nicht vorveröffentlichten internationalen Patentanmeldung PCT/EP2019/082044 beschrieben. Jedes der vorbezeichneten Meßsysteme weist einen Meßwandler mit einer Rohranordnung zum Führen des strömenden Fluids, mit einer Erregeranordnung zum Wandeln elektrischer Leistung in dem Anregen und Aufrechterhalten erzwungener mechanischer Schwingungen der Rohranordnung dienliche mechanische Leistung und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen sowie eine mit dem Meßwandler, nämlich sowohl mit dessen Erregeranordnung als auch mit dessen Sensoranordnung elektrisch gekoppelte Meßsystem-Elektronik zum Ansteuern des Meßwandlers und zum Auswerten von vom Meßwandler gelieferten Schwingungsmeßsignalen.

In der US-A 2012/0123705, der US-A 56 02 345, der US-A 59 26 096, der WO-A 2009/136943, der WO-A 87/06691, der WO-A 96/05484, der WO-A 96/08697, der WO-A 97/26508, der WO-A 99/39164 oder der WO-A 2019/017891 gezeigte Rohranordnungen weisen jeweils einen - hier als Leitungsverzweigung dienlichen bzw. einlaßseitigen - ersten Strömungsteiler mit genau zwei Strömungsöffnungen, einen dem ersten Strömungsteiler baugleichen - hier als Leitungsvereinigung dienlichen bzw. auslaßseitigen - zweiten Strömungsteiler mit genau zwei Strömungsöffnungen sowie zwei Rohre, nämlich ein erstes Rohr sowie ein zweites Rohr auf, während in der US-A 56 02 345, der WO-A 96/08697, der US-A 2017/0356777, der WO-A 2019/081169, der WO-A 2019/081170 oder der erwähnten Patentanmeldung PCT/EP2019/082044 gezeigte Rohranordnungen jeweils einen - hier als Leitungsverzweigung dienlichen bzw. einlaßseitigen - ersten Strömungsteiler mit genau zwei Strömungsöffnungen, einen dem ersten Strömungsteiler baugleichen - hier als Leitungsvereinigung dienlichen bzw. auslaßseitigen - zweiten Strömungsteiler mit genau zwei Strömungsöffnungen sowie zwei Rohre, nämlich ein erstes Rohr sowie ein zweites Rohr aufweisen. Jedes der Rohre der Rohranordnungen erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer metallischen Rohrwandung umschlossenes, sich jeweils vom jeweiligen ersten Ende des jeweiligen Rohrs bis zum jeweiligen zweiten Ende nämlichen Rohrs erstreckenden Lumen auf. Zudem ist jedes der Rohre jeweils an jeden der ersten und zweiten Strömungsteiler angeschlossen, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers münden bzw. daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden. Darüberhinaus ist jedes der Rohre jeder der Rohranordnungen jeweils auch eingerichtet, von Meßstoff durchströmt und währenddessen vibrieren gelassen zu werden.

Bei den in der US-A 56 02 345, der WO-A 2009/136943, der WO-A 96/08697, der WO-A 97/26508, der WO-A 99/39164 oder der WO-A 2019/017891 gezeigten Meßsystemen weist jede der Erregeranordnungen zudem jeweils zwei elektrodynamische Schwingungserreger auf, von denen ein erster Schwingungserreger mechanisch mit dem ersten Rohr sowie elektrisch mit der Meßsystem-Elektronik verbunden ist und ein zweiter Schwingungserreger mechanisch mit dem zweiten Rohr sowie elektrisch mit der Meßsystem-Elektronik verbunden ist. Jeder der ersten und zweiten Schwingungserreger ist zudem jeweils eingerichtet, elektrische in dem Anregen von Schwingungen der jeweiligen Rohre dienliche mechanische Leistung zu wandeln bzw. an einem jeweiligen, mittels des jeweiligen Schwingungserregers am damit jeweils mechanisch verbundenen Rohr gebildeten Angriffspunkt eine zeitlich veränderliche Antriebskraft in das jeweilige Rohr einzuleiten.

Die Meßsystem-Elektronik jedes der Meßsysteme wiederum ist dafür jeweils auch eingerichtet, die jewiligen Schwingunsgerreger zu bestromen, nämlich elektrische Treibersignale zu generieren und in die Schwingungserreger einzuspeisen, derart, daß die ersten und zweiten Rohre bzw. die ersten, zweiten, dritten und vierten Rohre zumindest anteilig Nutzschwingungen, nämlich erzwungene mechanische Schwingungen mit wenigstens einer oder mehreren Nutzfrequenzen, nämlich durch die Treibersignale vorgegebenen, beispielsweise auch einer bzw. mehreren Resonanzfrequenzen der Rohranordnung entsprechenden Schwingungsfrequenzen ausführen, wobei die Nutzschwingungen u.a. auch geeignet sind, im durch Rohre jeweils hindurchströmenden Meßstoff vom Massenstrom abhängige Corioliskräfte zu bewirken. Zum Erfassen von Schwingungen der Rohranordnung weist die Sensoranordnung vier voneinander beabstandete, beispielsweise elektrodynamische, Schwingungssensoren auf, von denen ein erster Schwingungssensor und ein zweiter Schwingungssensor mechanisch jeweils mit dem ersten Rohr bzw. mit dem ersten und dritten Rohr und ein dritter Schwingungssensor und ein vierter Schwingungssensor mechanisch jeweils mit dem zweiten Rohr bzw. mit dem zweiten und vierten Rohr verbunden sind. Jeder der Schwingungssensoren ist zudem jeweils eingerichtet, Schwingungsbewegungen der damit mechanische jeweils verbundenen ersten, zweiten, dritten bzw. vierten Rohre zu erfassen und ein nämliche Schwingungsbewegungen repräsentierendes erstes, zweites, drittes bzw. viertes Schwingungsmeßsignal bereitzustellen und an die Meßsystem-Elektronik zu übermitteln.

Ferner umfaßt jedes der vorbezeichneten Meßsystem auch ein als ein Wandler-Schutzgehäuse ausgebildetes Trägergerüst, das an den Strömungsteilern der Rohranordnung befestigt ist. Bei in der WO-A 96/08697 oder WO-A 2019/017891 sind das Trägergerüst und die Rohranordnung im besonderen wieder lösbar miteinander verbunden, beispielsweise um einen Austausch einer defekten oder verschlissenen Rohranordnung gegen eine intakte Rohranordnung vor Ort zu ermöglichen.

Wie u.a. in den eingangs erwähnten der US-A 2012/0123705, der US-A 2006/0266129 bzw. der WO-A 99/39164 diskutiert, können Meßwandler vom Vibrationstyp, mithin die damit gebildeten Meßsysteme während ihrer, ggf. auch mehrere Jahre umfassenden, Laufzeit einer Vielzahl von Belastungen ausgesetzt sein, die erhebliche Abweichungen des Meßsystems von einem dafür vorab, etwa bei einer Kalibrierung im Herstellerwerk und/oder bei einer Inbetriebnahme des Meßsystems, ermittelten Referenzzustand bewirken und damit einhergehend die Meßgenauigkeit des Meßsystems, mit der dieses die zu erfassenden Mediumsparameter in die entsprechenden Meßwerte schlußendlich abbildet, signifikant herabsetzen können. Als Beispiele für solche, im Ergebnis ein Schwingungsverhalten des wenigstens einen Meßrohrs insgesamt irreversible verändernde Belastungen, seien sie nun einmalig oder mehrfach wiederkehrend bzw. dauerhaft oder nur kurzzeitig auftretend, können exemplarisch Übertemperaturen, hohe Temperaturshocks oder andere thermisch bedingte Überbelastungen des wenigstens einen Meßrohrs, hohe Druckstöße im Medium, seitens der Prozeßleitung auf den Meßwandler ausgeübte zu hohe Einspannkräfte und/oder Rüttelkräfte und damit einhergehende Rißbildung und/oder plastische Deformation im wenigstens einen Meßrohr, seitens des im Meßwandler geführten Mediums, beispielsweise durch Korrosion und/oder Abrasion, bewirkte Erodierung des wenigstens einen Meßrohrs von innen heraus, mithin eine Reduzierung von dessen Wandstärke, die Bildung von Belag auf der mediumsberührenden Innenseite des wenigstens einen Meßrohrs, Materialermüdung oder andere Abnutzungserscheinungen am wenigstens einen Meßrohr zu nennen. Darüberhinaus können während der Laufzeit des Meßsystems auch der wenigstens einen Schwingungserreger wie auch jeder der Schwingungssensoren, etwa durch thermisch bedingte Überlastung bzw. Alterung, für die Meßgenauigkeit relevanten Veränderungen unterworfen sein, etwa derart, daß im Ergebnis auch eine elektrische Impedanz des Meßwandlers verändert ist. Im Ergebnis solcher Belastungen variiert schlußendlich stets eine dem Meßwandler immanente Meßwandler-Übertragungsfunktion, gemäß der der vom wenigstens einen Treibersignal angesteuerte Meßwandler letztlich den jeweils zu erfassenden Mediumsparameter in die jeweiligen Schwingungssignale konvertiert, in einer zunächst nicht ohne weiteres erkenn- oder vorhersehbaren, jedoch gelegentlich hinsichtlich der angestrebten hohen Meßgenauigkeit nicht mehr zu vernachlässigenden Weise, arbeitet also das Meßsystem insgesamt fehlerhaft. Zudem müssen infolge solcher, nicht zuletzt auch die strukturelle Integrität des Meßwandlers insgesamt beeinflussende Überlastungen, Beeinträchtigungen der Funktionstüchtigkeit des Meßsystems oder unter Umständen sogar auch zu Leckage oder Explosion führende Zerstörungen des Meßwandlers besorgt werden. Solche auch die Betriebssicherheit von Meßsystemen der in Rede stehenden Art betreffenden Veränderungen gegenüber dem Referenzzustand, können, nicht zuletzt im Falle toxischer und/oder leicht entflammbarer Medien bzw. im Falle von unter hohem Druck stehenden Gasen, durchaus auch katastrophale Folgen für die gesamte Prozeßanlage sowie sich darin aufhaltende Personen haben. Dem Rechnung tragend werden Meßsysteme der in Rede stehenden Art üblicherweise wiederkehrend entsprechenden Nachprüfungen unterzogen, etwa im Zuge von mit der vorausschauenden Instandhaltung verbundenen Maßnahmen, und bei Bedarf, etwa bei diagnostizierte erhöhter Meßungenauigkeit, gelegentlich entsprechend nachkalibriert oder ausgetauscht.

Zwecks möglichst frühzeitiger Erkennung einer ein vorgegebenes Toleranzmaß überschreitenden Abweichung des Meßsystems von einem dafür vorab ermittelten oder, etwa im Fall einer nachträglich bzw., wie u.a. in der WO-A 2019/017891 vorgeschlagen, vor Ort einzusetzenden Rohranordnung, einem dafür vorgebenen Referenzzustand, mithin einer Diagnose von seitens des Meßwandlers bedingten Fehlern des Meßsystems, und der damit einhergehend sich anbahnenden signifikanten Verringerung der Meßgenauigkeit bzw. der Betriebssicherheit von Meßsystemen der in Rede stehenden Art ist beispielsweise in der US-A 2012/0123705, der 20-A 2010/0011882, der US-A 2007/0113678, WO-A 96/05484, WO-A 99/39164, oder der US-A 59 26 096 vorgeschlagen, vorgenannte Veränderungen von solchen Meßsystemen anhand von Vergleichen aktueller, nämlich im Betrieb ermittelter, Schwingungsantworten ausgewählter Komponenten des Meßwandlers bzw. nämliche Schwingungsantworten repräsentierender Systemparameter, beispielsweise eine Meßrohrsteifigkeit, eine Vielzahl von, ggf. auch frequenzselektiv erfaßten, Dämpfungsfaktoren, Verhältnisse von mechanischen Eigen- bzw. Resonanzfrequenzen des wenigstens Meßrohrs oder andere, vorbestimmte Meßwandler-Übertragungsfunktionen beschreibende, mithin das Meßsystem charakterisierende Systemparameter etc., auf ausgewählte - breitbandige bzw. frequenzselektive - Schwingungsanregungen, wie etwa eine Schlag oder eine kontinuierliche, ggf. auch multi-modale, Schwingungsanregung einer bzw. mehrerer der Eigenfrequenzen der Rohre, mit dafür zuvor im Referenzzustand des Meßsystems passend ermittelten Meßwandler-Übertragungsfunktionen (Systemfunktionen des Meßwandlers) bzw. diese repräsentierende Referenz-Systemparameter zu vergleichen, um beispielsweise bei Überschreiten eines entsprechend vorgegebenen, ein noch akzeptables Toleranzmaß repräsentierenden, Schwellenwerts, mithin bei Diagnostizieren eines Fehlers, eine dies entsprechend signalisierende Systemstatus- bzw. Störungsmeldung, beispielsweise einen Alarm, zu generieren.

Ein Aufgabe der Erfindung besteht daher darin, vibronische Meßsysteme der vorgenannten Art dahingehend zu verbessern, daß damit - nicht zuletzt aber auch mit den bereits konventionellen, mithin etablierten Meßsystemen der in Rede stehenden Art "bordeigenen" Schwingungserregern und -sensoren und möglichst auch ohne den eigentlichen Meßbetrieb nennenswert zu beeinflussen oder gar unterbrechen zu müssen - das Auftreten von allfälligen Störungen des Meßsystem, wie etwa die Meßgenauigkeit und/oder die Betriebssicherheit des Meßsystems herabsetzenden Verschleiß- bzw. Alterungserscheinungen des jeweiligen Meßwandlers, möglichst frühzeitig und zuverlässig detektiert, ggf. auch signalisiert werden können; dies im besonderen auch weitgehend unabhängig vom im Meßwandler strömenden Medium sowie unter weitgehender, ggf. auch ausschließlicher Verwendung der für solche Meßsystemen, nicht zuletzt auch für die darin bis anhin verbauten Meßwandler, bewährten Designs wie auch unter gleichermaßen weitgehender Beibehaltung bewährten Technologien und Architekturen bereits etablierter Meßsystem-Elektroniken.

Zur Lösung der Aufgabe besteht die Erfindung in einem vibronisches Meßsystem, insb. Coriolis-Massedurchfluß-Meßgerät oder Coriolis-Massedurchfluß-/Dichte-Meßgerät, zum Messen und/oder Überwachen wenigstens eines, insb. zeitlich veränderlichen, Strömungsparameters, insb. eines Massenstrome, eines Volumenstroms und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Meßstoffs, insb. eines Gases, einer Flüssigkeit oder einer Dispersion, gemäß Anspruch 1.

Das, beispielsweise als In-Line-Meßgerät und/oder Meßgerät in Kompaktbauweise ausgebildete, Meßsystem umfaßt:
- einen Meßwandler mit einer Rohranordnung zum Führen des strömenden Meßstoffs, mit einer Erregeranordnung zum Wandeln elektrischer Leistung in dem Anregen und Aufrechterhalten erzwungener mechanischer Schwingungen der Rohranordnung dienliche mechanische Leistung und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen, sowie eine mit dem Meßwandler, nämlich sowohl mit dessen Erregeranordnung als auch mit dessen Sensoranordnung, beispielsweise mittels elektrischer Verbindungsleitungen, elektrisch gekoppelte, beispielsweise mittels wenigstens eines Mikroprozessors gebildete und/oder in Elektronik-Schutzgehäuse angeordnete, Meßsystem-Elektronik zum Ansteuern des Meßwandlers und zum Auswerten von vom Meßwandler gelieferten Schwingungsmeßsignalen. Die Rohranordnung weist einen, beispielsweise als Leitungsverzweigung dienlichen und/oder einlaßseitigen, ersten Strömungsteiler mit wenigstens zwei Strömungsöffnungen, einen, beispielsweise dem ersten Strömungsteiler baugleichen und/oder als Leitungsvereinigung dienlichen und/oder auslaßseitigen, zweiten Strömungsteiler mit wenigstens zwei Strömungsöffnungen sowie ein, beispielsweise zumindest abschnittsweise gekrümmtes und/oder zumindest abschnittsweise gerades, erstes Rohr und ein, beispielsweise zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr auf. Jedes der ersten und zweiten Rohre der Rohranordnung erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen auf, wobei jedes der ersten und zweiten Rohre der Rohranordnung jeweils an jeden der ersten und zweiten Strömungsteiler angeschlossen ist, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers und das zweite Rohr mit dessen ersten Ende in eine zweite Strömungsöffnung des ersten Strömungsteilers und mit dessen zweiten Ende in eine zweite Strömungsöffnung des zweiten Strömungsteilers mündet, und wobei jedes der ersten und zweiten Rohre der Rohranordnung jeweils eingerichtet ist, von Meßstoff durchströmt und währenddessen vibrieren gelassen zu werden. Die ersten und zweiten Rohre der Rohranordnung sind so zumindest über die ersten und zweiten Strömungsteiler miteinander mechanisch gekoppelt, derart, daß erzwungene mechanische Schwingungen des ersten Rohrs damit gekoppelte mechanische Schwingungen des zweiten Rohrs und erzwungene mechanische Schwingungen des zweiten Rohrs damit gekoppelte mechanische Schwingungen des ersten Rohrs bewirken. Die Erregeranordnung weist zwei, beispielsweise elektrodynamische und/oder baugleiche, Schwingungserreger auf, von denen ein erster Schwingungserreger mechanisch mit dem ersten Rohr verbunden, beispielsweise mittig am ersten Rohr positioniert, und ein zweiter Schwingungserreger mechanisch mit dem zweiten Rohr verbunden, beispielsweise mittig am zweiten Rohr positioniert, ist, und von denen jeder jeweils eingerichtet ist, elektrische Leistung mit einem zeitlich veränderlichen elektrischen Strom in mechanische Leistung zu wandeln, insb. derart, daß an einem jeweiligen, mittels des jeweiligen Schwingungserregers am damit jeweils mechanisch verbundenen Rohr gebildeten Angriffspunkt eine zeitlich veränderliche Antriebskraft auf das erste bzw. zweite Rohr wirkt. Die Sensoranordnung weist wenigstens vier, beispielsweise elektrodynamische und/oder baugleiche und/oder voneinander beabstandete, Schwingungssensoren auf, von denen ein erster Schwingungssensor und ein zweiter Schwingungssensor voneinander beabstandet, beispielsweise symmetrisch zum ersten Schwingungserreger, am ersten Rohr positioniert, beispielsweise nämlich zumindest anteilig mit dem ersten Rohr mechanisch verbunden, und ein dritter Schwingungssensor und ein vierter Schwingungssensor voneinander beabstandet, beispielsweise symmetrisch zum zweiten Schwingungserreger, am zweiten Rohr positioniert, beispielsweise nämlich zumindest anteilig mit dem zweiten Rohr mechanisch verbunden, sind. Jeder der ersten und zweiten Schwingungssensoren ist jeweils eingerichtet, Schwingungsbewegungen des ersten Rohrs zu erfassen und in ein nämliche Schwingungsbewegungen repräsentierendes, beispielsweise elektrisches oder optisches, erstes bzw. zweites Schwingungsmeßsignal zu wandeln, beispielsweise derart, daß jedes der ersten und zweiten Schwingungsmeßsignale jeweils eine oder mehrere sinusförmige Signalkomponenten mit jeweils einer einer Schwingungsfrequenz von Schwingungsbewegungen des ersten Rohrs entsprechenden Frequenz enthält, und jeder der dritten und vierten Schwingungssensoren ist jeweils eingerichtet, Schwingungsbewegungen des zweiten Rohrs zu erfassen und in ein nämliche Schwingungsbewegungen repräsentierendes, beispielsweise elektrisches oder optisches, drittes bzw. viertes Schwingungsmeßsignal zu wandeln, beispielsweise derart, daß jedes der dritten und vierten Schwingungsmeßsignale jeweils eine oder mehrere sinusförmige Signalkomponenten mit jeweils einer einer Schwingungsfrequenz von Schwingungsbewegungen des zweiten Rohrs entsprechenden Frequenz enthält.

Die Meßsystem-Elektronik wiederum ist eingerichtet, den ersten Schwingungserreger zu bestromen, nämlich ein elektrisches erstes Treibersignal in den ersten Schwingungserreger einzuspeisen, wodurch das erste Rohr erzwungene mechanische Schwingungen, beispielsweise Biegeschwingungen, mit einer oder mehreren durch das erste Treibersignal vorgegebenen Schwingungsfrequenzen und das zweite Rohr mit wenigstens einer der Schwingungen des ersten Rohrs gekoppelte mechanische Schwingungen ausführt, sowie den zweiten Schwingungserreger zu bestromen, nämlich ein elektrisches zweites Treibersignal in den zweiten Schwingungserreger einzuspeisen, wodurch das zweite Rohr erzwungene mechanische Schwingungen, beispielsweise Biegeschwingungen, mit einer oder mehreren durch das zweite Treibersignals vorgegebenen Schwingungsfrequenzen und das erste Rohr mit Schwingungen des zweiten Rohrs gekoppelte mechanische Schwingungen ausführt.

Beim erfindungsgemäßen Meßsystem ist die Meßsystem-Elektronik ferner eingerichtet: in einem ersten Betriebsmodus sowohl das erste Treibersignal mit einer ersten Nutz-Stromkomponenten, nämlich einer hinsichtlich einer Stromstärke dominierenden oder einzigen sinusförmigen Stromkomponente mit einer (Wechselstrom-)Frequenz zu erzeugen und in den ersten Schwingungserreger einzuspeisen, als auch das zweite Treibersignal mit wenigstens einer zweiten Nutz-Stromkomponenten, nämlich einer hinsichtlich einer Stromstärke dominierenden oder einzigen sinusförmigen Stromkomponente mit einer (Wechselstrom-)Frequenz zu erzeugen und in den zweiten Schwingungserreger einzuspeisen, derart, daß das erste Rohr zumindest anteilig, beispielsweise überwiegend, erste Nutzschwingungen, nämlich durch den (bestromten) ersten Schwingungserreger erzwungene mechanische Schwingungen mit wenigstens einer ersten Nutzfrequenz, nämlich einer der (Wechselstrom-)Frequenz der ersten Nutz-Stromkomponenten entsprechenden Schwingungsfrequenz und das zweite Rohr zumindest anteilig, beispielsweise überwiegend, zweite Nutzschwingungen, nämlich durch den (bestromten) zweiten Schwingungserreger erzwungene mechanische Schwingungen mit wenigstens einer zweiten Nutzfrequenz, nämlich einer der (Wechselstrom-)Frequenz der zweiten Nutz-Stromkomponenten entsprechenden Schwingungsfrequenz ausführt, beispielsweise derart, daß die ersten Nutzschwingungen und/oder zweiten Nutzschwingungen geeignet sind, im strömenden Meßstoff vom Massestrom abhängige Corioliskräfte zu bewirken, und daß jedes der ersten und zweiten Schwingungssignale, jeweils eine erste bzw. zweite Nutz-Signalkomponente, nämlich eine jeweilige sinusförmige Signalkomponente mit einer der ersten Nutzfrequenz entsprechenden Frequenz und jedes der dritten und vierten Schwingungssignale, jeweils eine dritte bzw. vierte Nutz-Signalkomponente, nämlich eine jeweilige sinusförmige Signalkomponente mit einer der zweiten Nutzfrequenz entsprechenden Frequenz aufweist.

Darüberhinaus ist die Meßsystem-Elektronik im besonderen auch eingerichtet, in einem, beispielsweise dem ersten Betriebsmodus zeitlich vorausgehend und/oder zeitlich nachfolgend aktivierten, zweiten Betriebsmodus zumindest vorübergehend das erste Treibersignal mit der ersten Nutz-Stromkomponenten zu erzeugen und in den ersten Schwingungserreger einzuspeisen, beispielsweise nämlich den ersten Schwingungserreger gleichermaßen wie im ersten Betriebsmodus zu bestromen, und zugleich kein die zweite Nutz-Stromkomponente enthaltendes Treibersignal in den zweiten Schwingungserreger einzuspeisen, derart, daß das erste Rohr zumindest anteilig erste Nutzschwingungen und das zweite Rohr mit nämlichen ersten Nutzschwingungen gekoppelte mechanische Schwingungen mit der ersten Nutzfrequenz, gleichwohl keine zweiten Nutzschwingungen ausführt, und daß jedes der ersten und zweiten Schwingungssignale, jeweils die Nutz-Signalkomponente und jedes der dritten und vierten Schwingungssignale jeweils eine Koppel-Signalkomponente, nämlich eine jeweilige sinusförmigen Signalkomponente mit einer der (Wechselstrom-)Frequenz der ersten Nutz-Stromkomponenten entsprechenden Frequenz aufweist.

Beim erfindungsgemäßen Meßsystem ist die Meßsystem-Elektronik zudem eingerichtet, im ersten Betriebsmodus die ersten, zweiten, dritten und vierten Schwingungssignale zu empfangen und auszuwerten, nämlich anhand der Schwingungssignale, beispielsweise nämlich zumindest anhand jeweils einer der Nutz-Signalkomponenten, die wenigstens ein physikalische Meßgröße (zeitlich aufeinanderfolgend) quantifizierende Meßwerte zu ermitteln, sowie im zweiten Betriebsmodus zumindest das dritte Schwingungssignal und/oder das vierte Schwingungssignal, beispielsweise sowohl das dritte Schwingungssignal als auch das vierte Schwingungssignal, zu empfangen und auszuwerten, beispielsweise nämlich die ersten, zweiten, dritten und vierten Schwingungssignale zu empfangen und auszuwerten.

Desweiteren besteht die Erfindung auch darin das vorbezeichnete Meßsystems zum Messen wenigstens eines Strömungsparameters, beispielsweise eines Massestroms und/oder eines Volumenstroms, und/oder wenigstens eines Stoffparameters, beispielsweise einer Dichte und/oder einer Viskosität, eines, insb. in einer Rohrleitung strömenden, fluiden Meßstoffs, insb. eines Gases, einer Flüssigkeit oder einer Dispersion, zu verwenden.

Nach einer ersten Ausgestaltung der Erfindung ist ferner vorgesehen, daß die Meßsystem-Elektronik eingerichtet ist, im zweiten Betriebsmodus auch das erste Schwingungssignal und/oder das zweite Schwingungssignal zu empfangen und auszuwerten.

Nach einer zweiten Ausgestaltung der Erfindung ist ferner vorgesehen, daß die Meßsystem-Elektronik eingerichtet ist, anhand zumindest eines der im zweiten Betriebsmodus empfangenen dritten und vierten Schwingungssignale, beispielsweise nämlich jedem der dritten und vierten Schwingungssignale, die wenigstens ein physikalische Meßgröße (zeitlich aufeinanderfolgend) quantifizierende Meßwerte zu ermitteln, beispielsweise auch mit anhand von im ersten Betriebsmodus empfangenen Schwingungssignalen ermittelten Meßwerten für nämliche Meßgröße zu vergleichen.

Nach einer dritten Ausgestaltung der Erfindung ist ferner vorgesehen, daß die Meßsystem-Elektronik eingerichtet ist, sowohl von wenigstens einem der im ersten Betriebsmodus, beispielsweise nämlich sowohl im ersten Betriebsmodus als auch im zweiten Betriebsmodus, empfangenen ersten und zweiten Schwingungssignale, beispielsweise von jedem der ersten und zweiten Schwingungssignale, die jeweilige Nutz-Signalkomponente zu gewinnen bzw. zu ermitteln als auch von wenigstens einem der im ersten Betriebsmodus empfangenen dritten und vierten Schwingungssignale, beispielsweise von jedem der dritten und vierten Schwingungssignale, die jeweilige Nutz-Signalkomponente zu gewinnen bzw. zu ermitteln.

Nach einer vierten Ausgestaltung der Erfindung ist ferner vorgesehen, daß jede der Nutz-Signalkomponenten der ersten, zweiten, dritten und vierten Schwingungssignale jeweils einen von einem Massestrom des Meßstoffs abhängigen Phasenwinkel aufweist. Diese Ausgestaltung der Erfindung weiterbildend ist ferner vorgesehen, daß die Meßsystem-Elektronik eingerichtet ist, zumindest im ersten Betriebsmodus anhand einer ersten Phasendifferenz, nämlich einer Differenz zwischen dem Phasenwinkel der Nutz-Signalkomponente des ersten Schwingungssignals und dem Phasenwinkel der Nutzkomponente des zweiten Schwingungssignals sowie anhand einer zweiten Phasendifferenz, nämlich einer Differenz zwischen dem Phasenwinkel der Nutz-Signalkomponente des dritten Schwingungssignals und dem Phasenwinkel der Nutz-Signalkomponente des vierten Schwingungssignals Massestrom-Meßwerte, nämlich den Massestrom des strömenden Meßstoffs repräsentierende Meßwerte zu ermitteln, beispielsweise nämlich zu berechnen.

Nach einer fünften Ausgestaltung der Erfindung ist ferner vorgesehen, daß die Meßsystem-Elektronik eingerichtet ist, von wenigstens einem der im zweiten Betriebsmodus empfangenen dritten und vierten Schwingungssignale, beispielsweise von jedem der dritten und vierten Schwingungssignale, die jeweilige Koppel-Signalkomponente zu gewinnen bzw. zu ermitteln.

Nach einer sechsten Ausgestaltung der Erfindung ist ferner vorgesehen, daß jede der Koppel-Signalkomponenten der dritten und vierten Schwingungssignale jeweils einen von einem Massestrom des Meßstoffs abhängigen Phasenwinkel aufweist.

Nach einer siebenten Ausgestaltung der Erfindung ist ferner vorgesehen, daß jede der Nutz-Signalkomponenten der ersten, zweiten, dritten und vierten Schwingungssignale jeweils einen von einem Massestrom des Meßstoffs abhängigen Phasenwinkel und jede der Koppel-Signalkomponenten der dritten und vierten Schwingungssignale jeweils einen von einem Massestrom des Meßstoffs abhängigen Phasenwinkel aufweist, und daß die Meßsystem-Elektronik eingerichtet ist, zumindest im ersten Betriebsmodus anhand einer ersten Phasendifferenz, nämlich einer Differenz zwischen dem Phasenwinkel der Nutz-Signalkomponente des ersten Schwingungssignals und dem Phasenwinkel der Nutzkomponente des zweiten Schwingungssignals sowie anhand einer zweiten Phasendifferenz, nämlich einer Differenz zwischen dem Phasenwinkel der Nutz-Signalkomponente des dritten Schwingungssignals und dem Phasenwinkel der Nutz-Signalkomponente des vierten Schwingungssignals Massestrom-Meßwerte, nämlich den Massestrom des strömenden Meßstoffs repräsentierende Meßwerte zu ermitteln, beispielsweise nämlich zu berechnen, und zumindest im zweiten Betriebsmodus anhand der ersten Phasendifferenz sowie anhand einer dritten Phasendifferenz, nämlich einer Differenz zwischen dem Phasenwinkel der Koppel-Signalkomponente des dritten Schwingungssignals und dem Phasenwinkel der Koppel-Signalkomponente des vierten Schwingungssignals Massestrom-Meßwerte zu ermitteln, beispielsweise nämlich zu berechnen und/oder mit anhand der ersten und zweiten Phasendifferenzen ermittelten Massestrom-Meßwerten zu vergleichen. Diese Ausgestaltung der Erfindung weiterbildend ist ferner vorgesehen, daß die Meßsystem-Elektronik eingerichtet ist, die erste Phasendifferenz und die dritte Phasendifferenz miteinander zu vergleichen, und bei einer zu großen, nämlich einen dafür vorgegebenen Bezugswert überschreitenden Abweichung eine, beispielsweise als (Störungs-)Alarm deklarierte, Meldung auszugeben.

Nach einer achten Ausgestaltung der Erfindung ist ferner vorgesehen, daß die Meßsystem-Elektronik eingerichtet ist, anhand zumindest eines der im zweiten Betriebsmodus empfangenen dritten und vierten Schwingungssignale, beispielsweise nämlich deren jeweiliger Koppel-Signalkomponente, zu detektieren, ob eine, beispielsweise eine Funktionstüchtigkeit des Meßsystems vermindernde und/oder eine Fehlfunktion des Meßsystems bewirkende und/oder eine Integrität zumindest eines der ersten, zweiten, dritten und vierten Schwingungsmeßsignale bzw. daraus gewonner Meßwerte herabsetzende und/oder einen Meßfehler daraus gewonnener Meßwerte provozierende, Störung des Meßsystems, beispielsweise aufgrund eines Belags auf einer Innenseite der Rohrwandung eines oder mehrerer der Rohre und/oder aufgrund einer Reduzierung einer Wandstärke der Rohrwandung eines oder mehrerer der Rohre und/oder aufgrund einer Alterung eines oder mehrerer der Schwingungssensoren und/oder Schwingungserreger, vorliegt, beispielsweise mittels eines Vergleiches von anhand von im ersten Betriebsmodus empfangenen Schwingungssignalen ermittelten Meßwerten für die wenigstens eine Meßgröße mit anhand von im zweiten Betriebsmodus empfangenen Schwingungssignalen ermittelten Meßwerten für nämliche Meßgröße. Diese Ausgestaltung der Erfindung weiterbildend ist ferner vorgesehen, daß die Störung des Meßsystems eine, beispielsweise irreversible, Veränderung einer oder mehrerer Schwingungseigenschaften der Rohranordnung, beispielsweise aufgrund einer Reduzierung einer Wandstärke der Rohrwandung eines oder mehrerer der Rohre und/oder aufgrund einer plastischen Verformung eines oder mehrerer der Rohre und/oder aufgrund eines Belags auf einer Innenseite der Rohrwandung eines oder mehrerer der Rohre und/oder aufgrund eines Risses in der Rohrwandung eines oder mehrerer der Rohre, umfaßt und/oder daß die Störung des Meßsystems eine, beispielsweise irreversible, Veränderung einer oder mehrerer Strömungseigenschaften der Rohranordnung, beispielsweise aufgrund einer Reduzierung eines Strömungsquerschnitts der Rohranordnung, beispielsweise infolge einer Verstopfung eines oder mehrerer der Rohre und/oder infolge eines Belags auf einer Innenseite der Rohrwandung eines oder mehrerer der Rohre, umfaßt, und/oder daß die Störung des Meßsystems eine, beispielsweise irreversible, Veränderung einer oder mehrerer elektro-mechanischer Wandlereigenschaften, beispielsweise aufgrund einer Alterung eines oder mehrerer der Schwingungssensoren und/oder Schwingungserreger und/oder aufgrund einer Änderung einer jeweiligen mechanischer Verbindung zwischen einem oder mehreren Schwingungssensoren bzw. einem oder mehreren Schwingungserregern und dem jeweiligen Rohr, umfaßt, und/oder daß die Störung des Meßsystems eine, beispielsweise irreversible, Veränderung eines (Skalen-)Nullpunkts des Meßsystems, der einer bei ruhendem Meßstoff gemessenen ersten und/oder zweiten Phasendifferenz entspricht, und/oder einer (Meß-)Empfindlichkeit des Meßsystems umfaßt.

Nach einer neunten Ausgestaltung der Erfindung ist ferner vorgesehen, daß die Meßsystem-Elektronik eingerichtet ist, anhand eines oder mehrerer der im zweiten Betriebsmodus empfangenen Schwingungsmeßsignale einen oder mehrere Kennzahlenwerte für wenigstens eine Meßsystem-Kennzahl zu berechnen, die einen, beispielsweise eine dem Meßsystem innewohnende, eine oder mehrere funktionelle Abhängigkeiten eines oder mehrerer der Schwingungsmeßsignale von einem oder mehreren der Treibersignale bestimmende Systemfunktion (Übertragungsfunktion) bzw. eine Funktionstüchtigkeit des Meßsystems bestimmenden, Betriebszustand charakterisiert, beispielsweise derart, daß nämliche Meßsystem-Kennzahl von einem oder mehreren Parametern einer zwischen der ersten Nutz-Stromkomponenten des ersten Treibersignals und der Koppel-Signalkomponente des dritten und/oder vierten Schwingungsmeßsignals vermittelnden Systemfunktion des Meßsystems abhängig ist. Diese Ausgestaltung der Erfindung weiterbildend ist ferner vorgesehen, daß die Meßsystem-Kennzahl von einem System-Amplitudenverhältnis zwischen der ersten Nutz-Stromkomponenten des ersten Treibersignals und der Koppel-Signalkomponente wenigstens eines des dritten und vierten Schwingungsmeßsignale, beispielsweise einer Summe der Koppel-Signalkomponente der dritten und vierten Schwingungsmeßsignale, abhängig ist, beispielsweise nämliches System-Amplitudenverhältnis quantifiziert, und/oder daß die Meßsystem-Kennzahl von einer System-Phasendifferenz zwischen der Nutz-Signalkomponente wenigstens eines der ersten und zweiten Schwingungmeßsignale, beispielsweise einer Summe der Nutz-Signalkomponente der ersten und zweiten Schwingungsmeßsignale, und der Koppel-Signalkomponente wenigstens eines der dritten und vierten Schwingungmeßsignale, beispielsweise einer Summe der Koppel-Signalkomponente der dritten und vierten Schwingungsmeßsignale, abhängig ist, beispielsweise nämliche System-Phasendifferenz quantifiziert, und/oder ist vorgesehen, daß die Meßsystem-Elektronik eingerichtet ist, einen oder mehrere Kennzahlenwerte für die Meßsystem-Kennzahl jeweils mit einem oder mehreren für die Meßsystem-Kennzahl, beispielsweise vom Hersteller des Meßsystems und/oder bei der Herstellung und/oder einer Inbetriebnahme des Meßsystems, ermittelten Bezugswerten, beispielsweise einem oder mehreren eine verminderte Funktionstüchtigkeit des Meßwandlers repräsentierenden Bezugswerten und/oder einem oder mehreren eine Fehlfunktion des Meßwandlers repräsentierenden Bezugswerten und/oder einem oder mehreren einen defekten Meßwandler repräsentierenden Bezugswerten, zu vergleichen, beispielsweise eine Abweichung eines oder mehrere der Kennzahlenwerte von einem oder mehreren der Bezugswerte zu bewerten und/oder zu quantifizieren. Zudem kann die Meßsystem-Elektronik ferner eingerichtet sein, zu ermitteln, ob eine oder mehrere Kennzahlenwerte für die Meßsystem-Kennzahl größer als der wenigstens eine Bezugswert für die Meßsystem-Kennzahl ist, beispielsweise nämlich falls ein oder mehrere Kennzahlenwerte für die Meßsystem-Kennzahl größer als ein oder mehrere eine verminderte Funktionstüchtigkeit des Meßwandlers repräsentierende Bezugswerte und/oder größer als ein oder mehrere eine Fehlfunktion des Meßwandlers repräsentierende Bezugswerte ist und/oder größer als ein oder mehrere ein nicht mehr intakten Meßwandler repräsentierenden Bezugswerten ist, eine dies signalisierende, beispielsweise als (Störungs-)Alarm deklarierte, Meldung auszugeben.

Nach einer zehnten Ausgestaltung der Erfindung ist ferner vorgesehen, daß die Meßsystem-Elektronik einen nicht-flüchtigen elektronischen Datenspeicher (EEPROM) aufweist, der dafür eingerichtet ist, digitale Daten, beispielsweise auch ohne eine angelegte Betriebsspannung, vorzuhalten, beispielsweise nämlich einen oder mehrere vorab ermittelte Bezugswerte für die Meßsystem-Kennzahl zu speichern.

Nach einer elften Ausgestaltung der Erfindung ist ferner vorgesehen, daß die Meßsystem-Elektronik eingerichtet ist, die erste Nutz-Stromkomponente des ersten Treibersignals mit einer (Wechselstrom-)Frequenz bereitzustellen, die von einer Resonanzfrequenz des ersten Rohrs um weniger als 1% nämlicher Resonanzfrequenz und/oder um weniger als 1 Hz abweicht.

Nach einer zwölften Ausgestaltung der Erfindung ist ferner vorgesehen, daß die Meßsystem-Elektronik eingerichtet ist, die zweite Nutz-Stromkomponente des zweiten Treibersignals mit einer (Wechselstrom-)Frequenz bereitzustellen, die von einer Resonanzfrequenz, fr2, des zweiten Rohrs um weniger als 1% nämlicher Resonanzfrequenz, fr2, und/oder um weniger als 1 Hz abweicht.

Nach einer dreizehnten Ausgestaltung der Erfindung ist ferner vorgesehen, daß die Meßsystem-Elektronik eingerichtet ist, die des Nutz-Stromkomponente des ersten Treibersignals mit einer (Wechselstrom-)Frequenz bereitzustellen, die von einer Resonanzfrequenz, fr2, des zweiten Rohrs um weniger als 1% nämlicher Resonanzfrequenz, fr2, und/oder um weniger als 1 Hz abweicht.

Nach einer vierzehnten Ausgestaltung der Erfindung ist ferner vorgesehen, daß die Meßsystem-Elektronik eingerichtet ist, die zweite Nutz-Stromkomponente des zweiten Treibersignals mit einer (Wechselstrom-)Frequenz bereitzustellen, die von einer Resonanzfrequenz, fr1, des ersten Rohrs um weniger als 1% nämlicher Resonanzfrequenz, fr1, und/oder um weniger als 1 Hz abweicht.

Nach einer fünfzehnten Ausgestaltung der Erfindung ist ferner vorgesehen, daß die ersten und zweiten Rohre wenigstens eine gemeinsame Resonanzfrequenz, fr12, aufweisen, und wobei die Meßsystem-Elektronik eingerichtet ist, die ersten und zweiten Nutz-Stromkomponente des ersten bzw. zweiten Treibersignals jeweils mit einer (Wechselstrom-)Frequenz bereitzustellen, die von nämlicher gemeinsamen Resonanzfrequenz, fr12, der ersten und zweiten Rohr um weniger als 1% nämlicher Resonanzfrequenz, fr12, und/oder um weniger als 1 Hz abweicht.

Nach einer sechzehnten Ausgestaltung der Erfindung ist ferner vorgesehen, daß die Rohranordnung ein, beispielsweise vom zweiten Strömungsteiler weiter entfernt als vom ersten Strömungsteiler positioniertes, mit jedem der Rohre mechanisch verbundenes, beispielsweise plattenförmiges, erstes Kopplerelement sowie ein, beispielsweise vom ersten Strömungsteiler weiter entfernt als vom zweiten Strömungsteiler positioniertes, mit jedem der Rohre mechanisch verbundenes, beispielsweise plattenförmiges und/oder zum ersten Kopplerelement baugleiches, zweites Kopplerelement aufweist.

Nach einer siebzehnten Ausgestaltung der Erfindung ist ferner vorgesehen, daß dem Meßwandler ein natürlicher Biegeschwingungsmode, beispielsweise ein Biegeschwingungsgrundmode, innewohnt, in dem die ersten und zweiten Rohre gegenphasige mechanische Schwingungen ausführen können bzw. ausführen, und wobei die Meßsystem-Elektronik eingerichtet ist, im ersten Betriebsmodus nämliche gegenphasigen mechanischen Schwingungen erzwingende erste und zweite Treibersignale in die ersten bzw. zweiten Schwingungserreger einzuspeisen, beispielsweise nämlich die ersten und zweiten Nutz-Stromkomponenten mit einer (Wechselstrom-)Frequenz bereitzustellen, die von einer Resonanzfrequenz, fr12, des Biegeschwingungsmodes um weniger als 1% nämlicher Resonanzfrequenz und/oder um weniger als 1 Hz abweicht.

Nach einer achtzehnten Ausgestaltung der Erfindung ist ferner vorgesehen, daß die Meßsystem-Elektronik eingerichtet ist, in einem, beispielsweise dem zweiten Betriebsmodus zeitlich nachfolgend aktivierten, dritten Betriebsmodus: zumindest vorübergehend das zweite Treibersignal mit der zweiten Nutz-Stromkomponenten zu erzeugen und in den zweiten Schwingungserreger einzuspeisen, beispielsweise nämlich den zweiten Schwingungserreger gleichermaßen wie im ersten Betriebsmodus zu bestromen, und zugleich kein die erste Nutz-Stromkomponente enthaltendes Treibersignal in den ersten Schwingungserreger einzuspeisen, derart, daß das zweite Rohr zumindest anteilig zweite Nutzschwingungen und das erste Rohr mit nämlichen zweiten Nutzschwingungen gekoppelte mechanische Schwingungen mit der zweiten Nutzfrequenz, gleichwohl keine ersten Nutzschwingungen ausführt, und daß jedes der dritten und vierten Schwingungssignale, jeweils die Nutz-Signalkomponente und jedes der ersten und zweiten Schwingungssignale jeweils eine Koppel-Signalkomponente, nämlich eine jeweilige sinusförmigen Signalkomponente mit einer der (Wechselstrom-)Frequenz der zweiten Nutz-Stromkomponenten entsprechenden Frequenz aufweist und daß die Meßsystem-Elektronik eingerichtet ist, im dritten Betriebsmodus, zumindest das erste Schwingungssignal und/oder das zweite Schwingungssignal, beispielsweise sowohl das erste Schwingungssignal als auch das zweite Schwingungssignal, zu empfangen und auszuwerten, beispielsweise nämlich die ersten, zweiten, dritten und vierten Schwingungssignale zu empfangen und auszuwerten.

Nach einer ersten Weiterbildung der Erfindung weist sowohl der erste Strömungsteiler als auch der zweite Strömungsteiler jeweils, beispielsweise genau, vier Strömungsöffnungen auf, und weist die Rohranordnung ein, beispielsweise zumindest abschnittsweise gekrümmtes und/oder zumindest abschnittsweise gerades und/oder zum ersten Rohr zumindest abschnittsweise paralleles, drittes Rohr und ein, beispielsweise zumindest abschnittsweise gekrümmtes und/oder zumindest abschnittsweise gerades und/oder zum dritten Rohr baugleiches und/oder zum dritten Rohr zumindest abschnittsweise paralleles, viertes Rohr auf, wobei jedes der dritten und vierten Rohre der Rohranordnung sich jeweils von einem jeweiligen ersten Ende des jeweiligen Rohrs bis zu einem jeweiligen zweiten Ende nämlichen Rohrs mit einer jeweiligen Rohrlänge erstreckt und jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen aufweist, und wobei jedes der dritten und vierten Rohre der Rohranordnung jeweils an jeden der ersten und zweiten Strömungsteiler angeschlossen ist, derart, daß das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers mündet, und daß jedes der dritten und vierten Rohre der Rohranordnung jeweils eingerichtet ist, von Meßstoff durchströmt und währenddessen vibrieren gelassen zu werden.

Nach einer ersten Ausgestaltung der ersten Weiterbildung der Erfindung ist ferner vorgesehen, daß die dritten und vierten Rohre der Rohranordnung zumindest über die ersten und zweiten Strömungsteiler miteinander mechanisch gekoppelt sind, derart, daß erzwungene mechanische Schwingungen des dritten Rohrs damit gekoppelte mechanische Schwingungen des vierten Rohrs und erzwungene mechanische Schwingungen des vierten Rohrs damit gekoppelte mechanische Schwingungen des dritten Rohrs bewirken, und/oder daß erzwungene mechanische Schwingungen der ersten und dritten Rohre, beispielsweise gegengleiche Biegeschwingungen der ersten und dritten Rohre, damit gekoppelte mechanische Schwingungen jedes der zweiten und vierten Rohre, beispielsweise gegengleiche Biegeschwingungen der zweiten und vierten Rohre, und erzwungene mechanische Schwingungen der zweiten und vierten Rohre, beispielsweise gegengleiche Biegeschwingungen der zweiten und vierten Rohre, damit gekoppelte mechanische Schwingungen jedes der ersten und dritten Rohre, beispielsweise gegengleiche Biegeschwingungen der ersten und dritten Rohre, bewirken, und/oder daß erzwungene mechanische Schwingungen jedes der ersten, zweiten, dritten und vierten Rohr damit jeweils gekoppelte mechanische Schwingungen jedes der anderen ersten, zweiten, dritten bzw. vierten Rohr bewirken. Der erste Schwingungserreger kann ferner eingerichtet sein, mechanische Schwingungen der ersten und dritten Rohre, beispielsweise differenziell, anzuregen, und der zweite Schwingungserreger kann eingerichtet sein, mechanische Schwingungen der zweiten und vierten Rohre, beispielsweise differenziell, anzuregen.

Nach einer zweiten Ausgestaltung der ersten Weiterbildung der Erfindung ist ferner vorgesehen, daß der erste Schwingungserreger mechanisch sowohl mit dem ersten Rohr als mit dem dritten Rohr verbunden ist und daß der zweite Schwingungserreger mechanisch sowohl mit dem zweiten Rohr als auch mit dem vierten Rohr verbunden ist.

Nach einer dritten Ausgestaltung der ersten Weiterbildung der Erfindung ist ferner vorgesehen, daß jeder der ersten und zweiten Schwingungssensoren jeweils eingerichtet ist, Schwingungsbewegungen der ersten und dritten Rohre, beispielsweise differenziell, zu erfassen, derart, daß jedes der ersten und zweiten Schwingungsmeßsignale, beispielsweise gegenphasige, Schwingungsbewegungen der ersten und dritten Rohre repräsentiert;
- und wobei jeder der dritten und vierten Schwingungssensoren jeweils eingerichtet ist, Schwingungsbewegungen der zweiten und vierten Rohre, beispielsweise differenziell, zu erfassen, derart, daß jedes der dritten und vierten Schwingungsmeßsignale, beispielsweise gegenphasige, Schwingungsbewegungen der zweiten und vierten Rohre repräsentiert.

Nach einer vierten Ausgestaltung der ersten Weiterbildung der Erfindung ist ferner vorgesehen, daß die ersten und zweiten Schwingungssensoren mechanisch jeweils sowohl mit dem ersten Rohr als auch dem dritten Rohr verbunden sind, und daß die dritten und vierten Schwingungssensoren mechanisch jeweils sowohl mit dem zweiten Rohr als auch dem vierten Rohr verbunden sind.

Nach einer fünften Ausgestaltung der ersten Weiterbildung der Erfindung ist ferner vorgesehen, daß die ersten, zweiten, dritten und vierten Rohre lediglich paarweise baugleich sind, beispielsweise derart, daß das erste Rohr lediglich zum dritten Rohr baugleich ist und daß das zweite Rohr lediglich zum vierten Rohr baugleich ist.

Nach einer sechsten Ausgestaltung der ersten Weiterbildung der Erfindung ist ferner vorgesehen, daß jedes der vier Rohre ein Kaliber aufweist, das gleich einem Kaliber jedes der anderen Rohre ist.

Nach einer siebenten Ausgestaltung der ersten Weiterbildung der Erfindung ist ferner vorgesehen, daß die Rohrwandung jedes der vier Rohre eine Wandstärke aufweist, die gleich einer Wandstärke jedes der anderen Rohre ist.

Nach einer zweiten Weiterbildung der Erfindung umfaßt das Meßsystem weiters ein, beispielsweise als ein Wandler-Schutzgehäuse ausgebildetes, Trägergerüst, wobei Trägergerüst und Rohranordnung mittels deren ersten und zweiten Strömungsteiler aneinander, beispielsweise wieder lösbar, befestigt ist.

Nach einer ersten Ausgestaltung der zweiten Weiterbildung der Erfindung ist ferner vorgesehen, daß die ersten und zweiten Schwingungserreger mechanisch mit dem Trägergerüst verbunden sind.

Nach einer zweiten Ausgestaltung der zweiten Weiterbildung der Erfindung ist ferner vorgesehen, daß die ersten, zweiten, dritten und vierten Schwingungssensoren mechanisch mit dem Trägergerüst verbunden sind.

Nach einer dritten Weiterbildung der Erfindung umfaßt das Meßsystem weiters ein, beispielsweise an einem Trägergerüst des Meßwandlers befestigtes, Elektronik-Schutzgehäuse für die Meßsystem-Elektronik.

Ein Grundgedanke der Erfindung besteht darin, die Empfindlichkeit von in Meßwandlern vom Vibrationstyp regelmäßig auftretenden mechanischen Kopplungen zwischen den jeweiligen Rohren auf Veränderungen der Meßgröße, aber auch des Meßwandlers dafür zu nutzen, um die Funktionstüchtigkeit des damit gebildeten vibronischen Meßsystems zu überwachen; dies ggf. auch wiederkehrend und ohne Unterbrechung des eigentlichen Meßbetriebs.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: schematisch ein Ausführungsbeispiel für ein erfindungsgemäßes Meßsystem;
- Fig. 2, 3: schematisch eine weitere Variante für ein erfindungsgemäßes Meßsystem; und
- Fig. 4, 5: Zeigerdiagramme für im Betrieb eines Meßsystem gemäß Fig. 1 oder gemäß den Fig. 2 und 3 generierte Treiber- und Schwingungsmeßsignale.

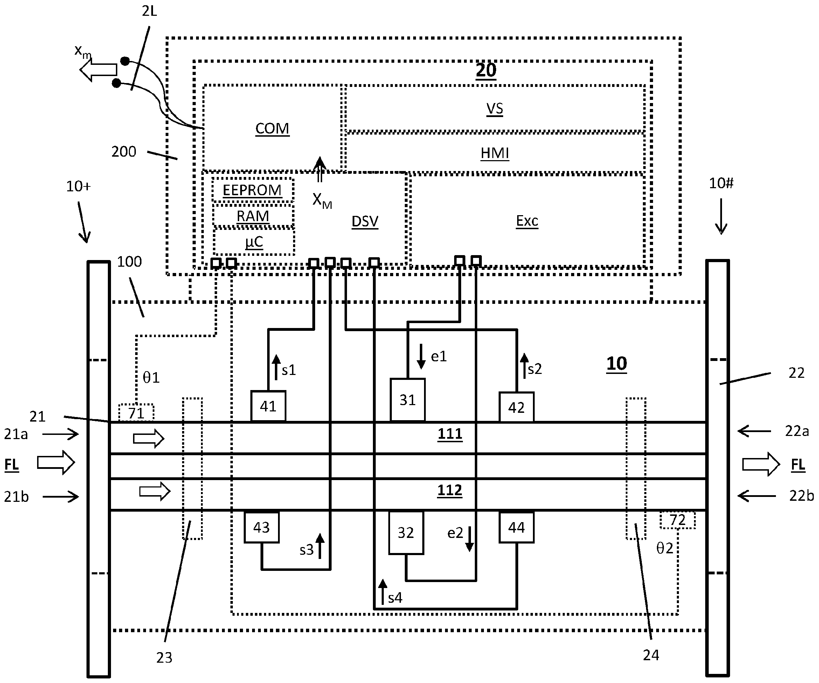

In Fig. 1 bzw. 2 und 3, sind Ausführungsbeispiele bzw. Ausgestaltungvarianten für ein dem Messen und/oder Überwachen wenigstens einer, insb. zeitlich veränderlichen, Meßgröße eines zumindest zeitweise strömenden, beispielsweise nämlich auch eines zumindest zeitweise zwei- oder mehrphasigen bzw. inhomogenen, Meßstoffs FL dienliches vibronisches Meßsystems schematisch dargestellt, wobei es sich bei der Meßgröße beispielsweise um einen Strömungsparameter, wie z.B. einem Massenstrom ṁ, einem Volumenstrom und/oder einer Strömungsgeschwindigkeit, oder beispielsweise einen Stoffparameter, wie z.B. einer Dichte ρ und/oder einer Viskosität η, des Meßstoffs FL handeln kann. Das Meßsystem ist im besonderen dafür vorgesehen bzw. eingerichtet, in den Verlauf einer ein als Meßstoff dienliches Fluid FL - beispielsweise nämlich ein Gas, eine Flüssigkeit oder eine Dispersion - führenden Prozeßleitung eingegliedert und im Betrieb von dem via Prozeßleitung zu- bzw. wieder abgeführten Fluid FL zumindest zeitweise durchströmt zu werden. Zudem ist das Meßsystem dafür vorgesehen, die wenigstens ein physikalische Meßgröße (zeitlich aufeinanderfolgend) quantifizierende, ggf. auch digitale Meßwerte X_{M} ermitteln, insb. nämlich zu berechnen und/oder auszugeben. Die Prozeßleitung kann beispielsweise Rohrleitung, beispielsweise nämlich eine Rohrleitung einer Abfüllanlage, einer Betankungsvorrichtung oder einer anderen industriellen Anlage sein.

Wie in Fig. 1, 2 bzw. 3 jeweils dargestellt bzw. aus deren Zusammenschau ohne weiters ersichtlich, umfaßt das Meßsystem einen Meßwandler 10 vom Vibrationstyp, nämlich einen Meßwandler mit einer mittels wenigstens zwei, beispielsweise nämlich mittels genau zwei oder genau vier - beispielsweise zumindest paarweise baugleichen - Rohren (111, 121, 112, 122) sowie zwei daran jeweils angeschlossener Strömungsteiler (21, 22) gebildete Rohranordnung, eine Erregeranordnung (31, 32) zum Wandeln elektrischer Leistung in dem Anregen und Aufrechterhalten erzwungener mechanischer Schwingungen der Rohre sowie eine Sensoranordnung (41, 42, 43, 44) zum Erfassen von mechanischen Schwingungen der Rohranordnung und zum Bereitstellen von jeweils Schwingungsbewegungen der Rohranordnung, insb. nämlich von deren Rohren, repräsentierenden, beispielsweise elektrischen oder optischen, Schwingungsmeßsignalen (s1, s2, s3, s4). Der Meßwandler MW ist zudem auch dafür vorgesehen, über ein durch einen der vorbezeichneten Strömungsteiler gebildetes, beispielsweise auch von einem Anschlußflansch eingefaßtes, Einlaßende 10+ sowie ein durch den anderen der vorbezeichneten Strömungsteiler gebildetes, beispielsweise von einem Anschlußflansch eingefaßtes, Auslaßende 10# an die vorbezeichnete Prozeßleitung angeschlossenen und im Betrieb vom Meßstoff FL durchströmt zu werden. Zudem ist jedes der Rohre von dessen Rohranordnung ferner jeweils dafür eingerichtet, in dessen jeweiligen Lumen jeweils ein Teilvolumen des Meßstoffs FL zu führen und währenddessen vibrieren gelassen zu werden, beispielsweise nämlich jeweils - insb. einen mit der wenigstens einen Meßgröße korrespondierenden Meßeffekt bewirkende und/oder mittels der Erregeranordnung angeregte - erzwungene mechanische Schwingungen um eine jeweils zughörige statische Ruhelage auszuführen; dies im besonderen in der Weise, daß jedes der Rohre der Rohranordnung vibrieren gelassenen und währenddessen ausgehend von dessen jeweiligen ersten Ende in Richtung von dessen jeweiligen zweiten Ende von Fluid durchströmt wird. Die vorbezeichneten erzwungenen mechanischen Schwingungen können, wie bei Meßwandlern der in Rede stehenden Art durchaus üblich, zumindest anteilig erzwungene Biegeschwingungen der Rohre um eine jeweilige gedachte, nämlich das jeweiligen Rohr imaginär schneidende Schwingungsachse der Rohranordnung sein; dies im besonderen auch in der Weise, daß die vorbezeichneten (zwei bzw. vier) gedachten Schwingungsachsen - beispielsweise bei in statischer Ruhelage befindlichen Rohren - zueinander im wesentlichen parallel sind. Neben dem Meßwandler 10 umfaßt das Meßsystem ferner eine damit, nämlich sowohl mit der vorbezeichneten Erregeranordnung des Meßwandlers als auch mit der vorbezeichneten Sensoranordnung des Meßwandlers, beispielsweise nämlich mittels entsprechender elektrischer Verbindungsleitungen, elektrisch gekoppelte, insb. mittels wenigstens eines Mikroprozessors (µC) gebildete und/oder in einem Elektronik-Schutzgehäuse (200) angeordnete und/oder als Transmitter dienliche, Meßsystem-Elektronik 20 zum Ansteuern des Meßwandlers, insb. nämlich zum Bewirken der vorbezeichneten mechanischen Schwingungen der Rohre, und zum Auswerten von vom Meßwandler gelieferten Schwingungsmeßsignalen, beispielsweise nämlich zum Ermitteln der vorbezeichneten Meßwerte.

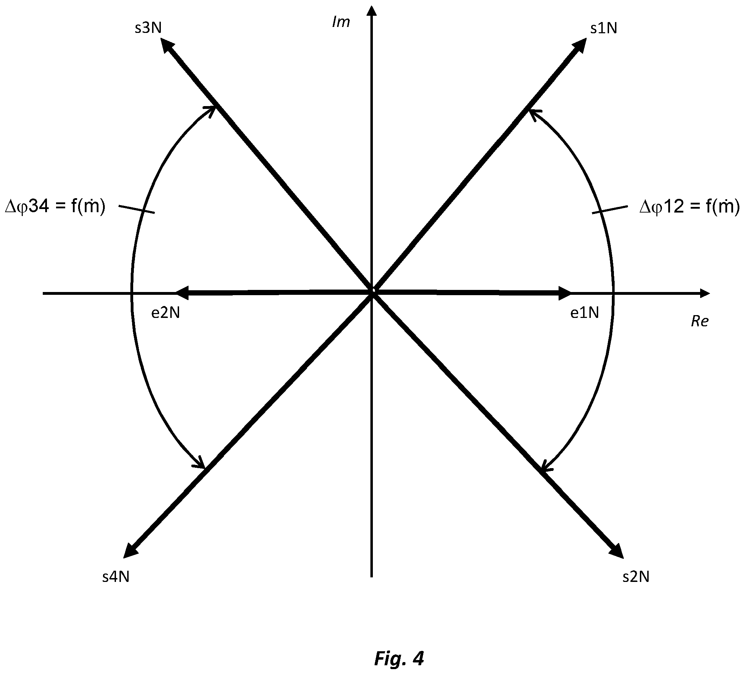

Die vorbezeichnete Erregeranordnung des Meßwandlers 10 ist im besonderen dafür vorgesehen bzw. eingerichtet, dorthin (von der Meßsystem-Elektronik 20) eingespeiste elektrische Leistung in mechanische Leistung zu wandeln, derart, daß die Rohranordnung, insb. nämlich jedes von deren Rohren zumindest zeitweise, erzwungene mechanische Schwingungen um eine statische Ruhelage ausführt, während die Sensoranordnung dafür vorgesehen bzw. eingerichtet ist, mechanische Schwingungen der Rohranordnung, nicht zuletzt mittels der Erregeranordnung erzwungene mechanische Schwingungen und/oder Biegeschwingungen der Rohre, zu erfassen und ein erstes Schwingungsmeßsignal s1, ein zweites Schwingungsmeßsignal s2, ein drittes Schwingungsmeßsignal s3 sowie ein viertes Schwingungsmeßsignal s4 bereitzustellen, von welchen - beispielsweise elektrischen - Schwingungsmeßsignalen s1, s2, s3, s4 jedes zumindest anteilig Schwingungsbewegungen eines oder mehrerer der Rohre der Rohranordnung repräsentiert, beispielsweise jeweils mittels einer jeweiligen, mit Schwingungsbewegungen der Rohre korrespondierenden veränderlichen elektrischen Spannung; dies im besonderen in der Weise, daß - wie in Fig. 4 angedeutet - die Schwingungsmeßsignale s1, s2 (bzw. jeweils eine spektrale Signalkomponente sN1 bzw. sN2 davon) einer Änderung einer Massenstrom des in der Rohranordnung geführten Meßstoffs mit einer Änderung einer ersten Phasendifferenz Δcp12, nämlich einer Änderung einer Differenz zwischen einem Phasenwinkel des Schwingungsmeßsignals s1 und einem Phasenwinkel des Schwingungsmeßsignals s2 folgen und daß die Schwingungsmeßsignale s3, s4 (bzw. jeweils eine spektrale Signalkomponente sN3 bzw. sN4 davon) einer Änderung eines Massenstroms des in der Rohranordnung geführten Meßstoffs mit einer Änderung einer zweiten Phasendifferenz Δcp34, nämlich einer Änderung einer Differenz zwischen einem Phasenwinkel des Schwingungsmeßsignals s3 und einem Phasenwinkel des Schwingungsmeßsignals s4 folgen, und/oder in der Weise, daß jedes der vorbezeichneten Schwingungsmeßsignale s1, s2, s3, s4 einer Änderung einer Dichte des in der Rohranordnung geführten Meßstoffs jeweilis mit einer Änderung einer jeweiligen Signalfrequenz wenigstens einer spektrale Signalkomponente folgt.

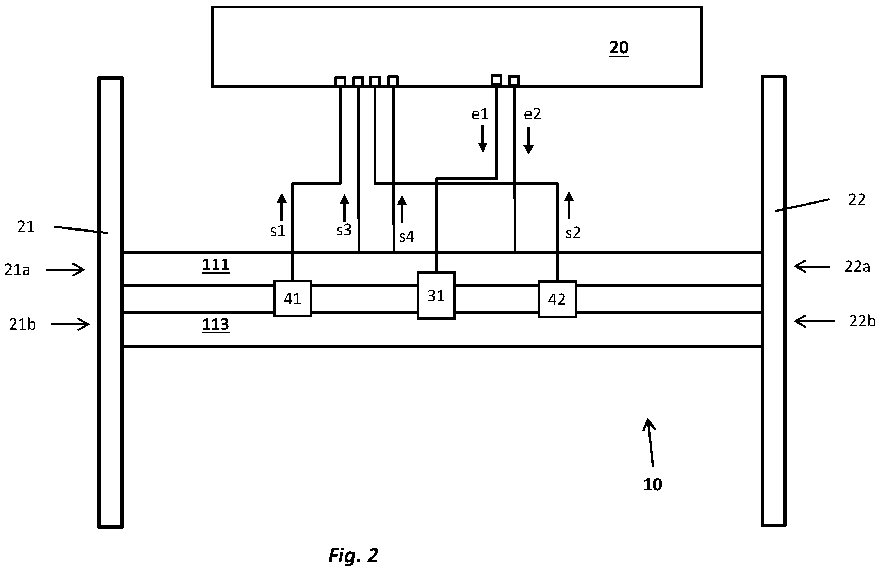

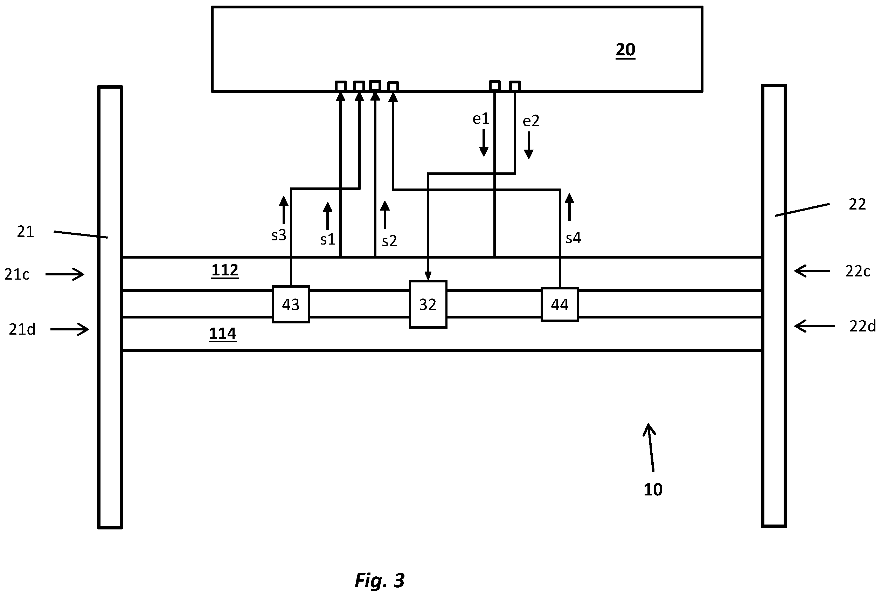

Die Rohranordnung des erfindungsgemäßen Meßwandlers 10 weist, wie bereits angedeutet, einen, beispielsweise als Leitungsverzweigung dienlichen und/oder einlaßseitigen, ersten Strömungsteiler 21 mit wenigstens zwei Strömungsöffnungen (21a, 21b), einen, beispielsweise dem ersten Strömungsteiler 21 baugleichen und/oder als Leitungsvereinigung dienlichen und/oder auslaßseitigen, zweiten Strömungsteiler 22 mit wenigstens zwei Strömungsöffnungen (22a, 22b) sowie ein, insb. zumindest abschnittsweise gekrümmtes und/oder zumindest abschnittsweise gerades, erstes Rohr 111 und ein, beispielsweise zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr 112 auf. Jedes der Rohre 111, 112 erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen auf. Jedes der Rohre 111, 112 der Rohranordnung ist jeweils an jeden der Strömungsteiler 21, 22 angeschlossen, derart, daß das Rohr 111 mit dessen ersten Ende in eine erste Strömungsöffnung 21a des Strömungsteilers 21 und mit dessen zweiten Ende in eine erste Strömungsöffnung 22a des Strömungsteilers 22 und das Rohr 112 mit dessen ersten Ende in eine zweite Strömungsöffnung 21b des Strömungsteilers 21 und mit dessen zweiten Ende in eine zweite Strömungsöffnung 22b des Strömungsteilers 22 mündet. Zusätzlich zu den Rohren 111, 112 kann die Rohranordnung noch weitere Rohre beispielsweise nämlich - wie auch in Fig. 3 angedeutet bzw. aus einer Zusammenschau der Fig. 2 und 3 ersichtlich - weitere zwei Rohre, mithin, wie u.a. auch in den eingangs erwähnten US-A 56 02 345, WO-A 96/08697, US-A 2017/0356777, WO-A 2019/081169 oder WO-A 2019/081170 gezeigt, insgesamt vier Rohre aufweisen. Dementsprechend weist nach einer weiteren Ausgestaltung der Erfindung sowohl der Strömungsteiler 21 als auch der Strömungsteiler 22 jeweils, insb. genau, vier Strömungsöffnungen auf und weist die Rohranordnung ein, insb. zumindest abschnittsweise gekrümmtes und/oder zumindest abschnittsweise gerades und/oder zum Rohr 111 zumindest abschnittsweise paralleles, drittes Rohr 113 und ein, insb. zumindest abschnittsweise gekrümmtes und/oder zumindest abschnittsweise gerades und/oder zum Rohr 113 baugleiches und/oder zum Rohr 113 zumindest abschnittsweise paralleles, viertes Rohr 114 auf. Jedes der vorbezeichneten Rohre 113, 114 der Rohranordnung erstreckt sich zudem jeweils von einem jeweiligen ersten Ende des jeweiligen Rohrs bis zu einem jeweiligen zweiten Ende nämlichen Rohrs mit einer jeweiligen Rohrlänge und weist jeweils ein von einer, beispielsweise metallischen, Rohrwandung umschlossenes, sich jeweils vom jeweiligen ersten Ende des jeweiligen Rohrs bis zum jeweiligen zweiten Ende nämlichen Rohrs erstreckenden Lumen auf. Auch jedes der Rohre 113, 114 ist zudem jeweils an jeden der Strömungsteiler 21, 22 angeschlossen, derart, daß das Rohr 113 mit dessen ersten Ende in eine dritte Strömungsöffnung 21c des Strömungsteilers 21 und mit dessen zweiten Ende in eine dritte Strömungsöffnung des Strömungsteilers 22 und das Rohr 114 mit dessen ersten Ende in eine vierte Strömungsöffnung 21d des Strömungsteilers 21 und mit dessen zweiten Ende in eine vierte Strömungsöffnung 22d des Strömungsteilers 22 mündet; dies im besonderen in der Weises, daß die Rohranordnung genau vier Rohre, mithin außer den vorbezeichneten Rohren 111, 112, 121, 122 kein weiteres an den Strömungsteiler 21 und den Strömungsteiler 22 angeschlossenes Rohr aufweist.

Für den erwähnten Fall, daß die Rohre der Rohranordnung gekrümmt sind, entspricht die vorbezeichnete Rohrlänge einer gestreckten Länge bzw. einer Länge einer gedachten Mittellinie des jeweiligen Rohrs. Die Rohrlänge des Rohrs 111 ist vorzugsweise gleich der Rohrlänge des Rohrs 112. Im Fall von einer Rohranordnung mit vier Rohren ist die Rohrlänge des Rohrs 113 vorzugsweise gleich der Rohrlänge des Rohrs 1114; dies beispielsweise auch derart, daß die Rohrlänge des Rohrs 111 lediglich gleich der Rohrlänge des Rohrs 112, gleichwohl größer als die Rohrlänge sowohl des Rohrs 113 als auch des Rohrs 114, bzw. ist die Rohrlänge des Rohrs 113 lediglich gleich der Rohrlänge des Rohrs 114, gleichwohl kleiner als die Rohrlänge sowohl des Rohrs 111 als auch des Rohrs 112. Die Rohrwandung jedes der Rohre der Rohranordnung weist nach einer weiteren Ausgestaltung der Erfindung jeweils eine vorgegebene - beispielsweise auch im wesentlichen einheitliche - Wandstärke auf und kann - wie bei Rohranordnungen der in Rede stehenden Art bzw. damit gebildeten Meßwandlern bzw. Meßsystemen durchaus üblich - beispielsweise aus gleichem Material und/oder einem Metall, insb. nämlich jeweils einem Edelstahl oder jeweils einer Nickelbasislegierung, bestehen; dies beispielsweise auch derart, daß die Rohrwandung jedes der Rohre der Rohranordnung eine Wandstärke aufweist, die gleich einer Wandstärke des anderen Rohrs bzw. jedes der anderen Rohre ist und/oder daß jedes der Rohre der Rohranordnung ein Kaliber, nämlich einen Innendurchmesser aufweist, das gleich einem Kaliber des anderen Rohrs bzw. jedes der anderen Rohre ist. Nach einer weiteren Ausgestaltung der Erfindung weist jedes der Rohre jeweils ein Kaliber, das nicht weniger als 1 mm, beispielsweise auch jeweils mehr als 10 mm beträgt und/oder weist die Rohrwandung jedes der Rohre jeweils eine kleinste Wandstärke auf, die nicht weniger als 0,5 mm, beispielsweise auch mehr als 1,5 mm beträgt und/oder die gleich ist der kleinsten Wandstärke der Rohrwandung jedes der anderen der Rohre. Die Rohre der Rohranordnung können zudem beispielsweise jeweils einstückig ausgebildet, beispielsweise nämlich nahtlos oder zumindest im Falle einer Rohrwandung aus Metall mit einer geschweißten Naht hergestellt sein, und/oder jeweils durch Biegen eines rohrförmigen Halbzeugs geformt sein, beispielsweise derart, daß jedes der Rohre im wesentlichen V-förmig ausgebildet ist bzw. eine V-förmige Silhouette aufweist und/oder daß jedes der Rohre im Ergebnis eine in einer einzigen (Biege-)Ebene liegende Rohrform aufweist. Für den vorbezeichneten Fall, daß die Rohranordnung vier Rohre aufweist, können die Rohre beispielsweise auch so ausgebildet sein, daß sie lediglich paarweise baugleich sind, beispielsweise derart, daß das Rohr 111 lediglich zum Rohr 112 baugleich ist und daß das Rohr 113 lediglich zum Rohr 114 baugleich ist.

Zum Einstellen mechanischer Schwingungseigenschaften der Rohranordnung, nicht zuletzt zum Abstimmen einer oder mehrerer Resonanzfrequenzen von deren Rohren, kann die Rohranordnung, wie auch in Fig. 1 angedeutet, ferner ein, insb. vom Strömungsteiler 22 weiter entfernt als vom Strömungsteiler 21 positioniertes, mit jedem von deren Rohren mechanisch verbundenes, beispielsweise plattenförmiges, erstes Kopplerelement 23 sowie wenigstens ein, insb. vom Strömungsteiler 21 weiter entfernt als vom Strömungsteiler 22 positioniertes, mit jedem von deren Rohren mechanisch verbundenes, beispielsweise plattenförmiges und/oder zum Kopplerelement 23 baugleiches, zweites Kopplerelement 24 aufweisen. Zum Verbinden der Rohranordnung bzw. des damit gebildeten Meßwandlers oder Meßsystems mit der vorbezeichneten, den Meßstoff FL führenden Prozeßleitung können zudem der Strömungsteiler 21 einen - beispielsweise dem Anschluß der Rohranordnung an ein im Betrieb das Fluid FL zuführendes Leitungssegment nämlicher Prozeßleitung dienlichen - ersten Anschlußflansch und der Strömungsteiler 22 einen - beispielsweise dem Anschluß der Rohranordnung an ein das Fluid FL wieder abführendes Leitungssegment der Prozeßleitung dienlichen - zweiten Anschlußflansch aufweisen. An jedem der vorbezeichneten Anschlußflansche kann beispielsweise jeweils eine Dichtfläche zum fluiddichten bzw. leckagefreien Verbinden der Rohranordnung mit dem jeweils korrespondierenden Leitungssegment der Prozeßleitung ausgebildet sein.

Nach einer weiteren Ausgestaltung der Erfindung weist das Meßsystem ferner ein, insb. bieg- und/oder verwindungssteifes, Trägergerüst 100 auf, wobei - wie auch in Fig. 1 schematisch dargestellt - nämliches Trägergerüst 100 und die Rohranordnung mittels deren Strömungsteiler 21, 21 aneinander, beispielsweise wieder lösbar, befestigt sind. Zum Schutz des Meßwandlers bzw. dessen Komponenten vor schädlichen Umwelteinflüssen, zur Vermeidung von unerwünschten Schallemissionen durch die vibrierenden Rohre oder auch zum Auffangen von aus einer leckgeschlagenen Rohranordnung ausgetretenem Meßstoff kann, wie bei vibronischen Meßsystemen der in Rede stehenden Art durchaus üblich, das vorbezeichnete Trägergerüst 100 auch als ein die Rohre 111, 112 der Rohranordnung umhüllendes Wandler-Schutzgehäuse ausgebildet sein, beispielsweise auch derart, daß nämliches Wandler-Schutzgehäuse eine Druckfestigkeit aufweist, die größer als eine größte Druckfestigkeit der Rohre der Rohranordnung ist und/oder die mehr als 50 bar beträgt.

Beim erfindungsgemäßen Meßsystem ist, wie bereits erwähnte, jedes der Rohre der Rohranordnung, mithin ist jedes der Rohre 111, 112 und ggf. auch der Rohre 113, 114 im besonderen jeweils eingerichtet, von Meßstoff FL (bzw. einem Teilvolumen davon) durchströmt und währenddessen vibrieren gelassen zu werden. Dafür weist die Erregeranordnung beim erfindungsgemäßen Meßsystem zwei, beispielsweise elektrodynamische und/oder einander baugleiche, Schwingungserreger 31, 32 auf, von denen ein, beispielsweise elektrodynamischer oder piezoelektrischer, erster Schwingungserreger 31 mechanisch mit dem Rohr 112 (gleichwohl nicht mit dem Rohr 112) verbunden, beispielsweise nämlich mittig am Rohr 111 positioniert, ist und von denen ein, beispielsweise elektrodynamischer oder piezoelektrischer, zweiter Schwingungserreger 32 mechanisch mit dem Rohr 112 (gleichwohl nicht mit dem Rohr 111) verbunden, beispielsweise nämlich mittig am Rohr 112 positioniert, ist. Jeder der Schwingungserreger 31, 32 ist zudem jeweils eingerichtet, elektrische Leistung mit einem zeitlich veränderlichen elektrischen Strom in mechanische Leistung zu wandeln, insb. derart, daß an einem jeweiligen, nämlich mittels des jeweiligen Schwingungserregers am damit jeweils mechanisch verbundenen Rohr gebildeten Angriffspunkt eine zeitlich veränderliche Antriebskraft auf das jeweilige Rohr wirkt. Für den vorbezeichneten Fall, daß die Rohranordnung vier Rohre aufweist, ist nach einer weiteren Ausgestaltung der Erfindung der Schwingungserreger 31 eingerichtet, mechanische Schwingungen der beiden Rohre 111, 113 anzuregen und ist der Schwingungserreger 32 eingerichtet, mechanische Schwingungen der beiden anderen Rohre 112, 114 anzuregen; dies im besonderen in der Weise, daß der Schwingungserreger 31 differenziell auf die die beiden Rohre 111, 113 wirkt, nämlich lediglich gegengleiche Anregungskräfte in die beiden Rohre 111, 113 einleiten kann bzw. einleitet, und daß der Schwingungserreger 32 differenziell auf die beiden Rohre 112, 114 wirkt, nämlich lediglich gegengleiche Anregungskräfte in die beiden Rohre 112, 114 einleiten kann bzw. einleitet. Der Schwingungserreger 31 kann dafür beispielsweise sowohl mit dem Rohr 111 als auch mit dem Rohr 113 mechanisch verbunden sein und der Schwingungserreger 32 kann entsprechend sowohl mit dem Rohr 112 als auch mit dem Rohr 114 mechanisch verbunden sein, beispielsweise nämlich derart, daß die vorbezeichnete jeweilige Antriebskraft auf sowohl das Rohr 111 als auch das Rohr 113 bzw. auf sowohl das Rohr 112 als auch das Rohr 114 wirkt. Nicht zuletzt für den anderen Fall, daß das Meßsystem das vorbezeichnete Trägergerüst und die Rohranordnung genau zwei Rohre aufweist, können die Schwingungserreger 31, 32, beispielsweise anteilig mit dem Trägergerüst 100 mechanisch verbunden sein, beispielsweise derart, daß die vorbezeichnete jeweilige Antriebskraft auf sowohl das Rohr 111 bzw. das Rohr 112 als auch jeweils auf das Trägergerüst wirkt.

Zum Erzeugen der vorbezeichneten Schwingungsmeßsignale s1, s2, s3, s4 weist die Sensoranordnung wenigstens vier, beispielsweise baugleiche und/oder voneinander beabstandete, Schwingungssensoren auf, von denen ein, beispielsweise elektrodynamischer oder optischer, erster Schwingungssensor 41 und ein zweiter Schwingungssensor 42 voneinander beabstandet, beispielsweise auch symmetrisch zum Schwingungserreger 31, am Rohr 111 positioniert sind und von dene ein, beispielsweise elektrodynamischer oder optischer, dritter Schwingungssensor 43 und ein, beispielsweise elektrodynamischer oder optischer, vierter Schwingungssensor 44 voneinander beabstandet, insb. symmetrisch zum Schwingungserreger 32, am Rohr 112 positioniert sind. Jeder der Schwingungssensoren 41, 42 ist jeweils eingerichtet, Schwingungsbewegungen des Rohrs 111 zu erfassen und entsprechend in das vorbezeichnete Schwingungsmeßsignal s1 bzw. das vorbezeichnete Schwingungsmeßsignal s2 zu wandeln und jeder der Schwingungssensoren 41, 42 ist jeweils eingerichtet, Schwingungsbewegungen des Rohrs 112 zu erfassen und entsprechend in das vorbezeichnete Schwingungsmeßsignal s3 bzw. das vorbezeichnete Schwingungsmeßsignal s4 zu wandeln; dies im besonderen in der Weise, daß jedes Schwingungsmeßsignale s1, s2, s3, s4 die entsprechenden Schwingungsbewegungen repräsentiert bzw. daß jedes der Schwingungsmeßsignale s1, s2, s3, s4 jeweils eine oder mehrere sinusförmige Signalkomponenten mit jeweils einer einer Schwingungsfrequenz von Schwingungsbewegungen des jeweiligen Rohrs 111 bzw. 112 entsprechenden Frequenz enthält. Wie auch in Fig. 1 angedeutet bzw. aus einer Zusammenschau der Fig. 1, 2 und 3 ohne weiteres ersichtlich, können die Schwingungsensoren 41, 42, 43, 44 zudem beispielsweise auch so positioniert sein, daß der Schwingungssensor 41 und der der Schwingungssensor 43 jeweils einlaßseitige Schwingungsbewegungen des Rohrs 111 erfassen und daß der Schwingungssensor 42 und der Schwingungssensor 44 jeweils ausaßseitige Schwingungsbewegungen des Rohrs 112 erfassen. Zudem können die Schwingungssensoren beispielsweise auch in der Weise positioniert sein, daß der Schwingungssensor 41 gleichweit vom Strömungsteiler 21 beabstandet ist wie der Schwingungssensor 42 vom Strömungsteiler 22 und/oder daß der Schwingungssensor 43 gleichweit vom Strömungsteiler 21 beabstandet ist wie der Schwingungssensor 44 vom Strömungsteiler 22, und/oder in der Weise, daß die beiden Schwingungssensoren 41, 42 jeweils gleichweit vom vorbezeichneten Schwingungserreger 31 und/oder die beiden Schwingungssensoren 43, 44 jeweils gleichweit vom vorbezeichneten Schwingungserreger 32 positioniert sind.

Nicht zuletzt für den vorbezeichneten Fall, daß es sich bei den Schwingungssensoren um elektrodynamische, mithin nach Art einer Schwing- bzw. Tauchspule aufgebaute Schwingungssensoren handelt, ist nach einer weiteren Ausgestaltung der Erfindung vorgesehen, daß sowohl der Schwingungssensor 41 als auch der Schwingungssensor 42 zumindest anteilig wenigstens mit dem Rohre 111, insb. aber nicht mit dem Rohr 112, mechanischen verbunden ist und daß sowohl der Schwingungssensor 43 als auch der Schwingungssensor 44 zumindest anteilig wenigstens mit dem Rohr 112, insb. aber nicht mit dem Rohr 111, mechanischen verbunden ist. Für den anderen Fall, daß das Meßsystem ein Trägergerüst und die Rohranordnung genau zwei Rohre aufweist, können die Schwingungssensoren entsprechend auch anteilige mit dem Trägergerüst mechanischen verbunden sein; beispielsweise derart, daß die Schwingungssensoren 41, 42, 43, und 44 jeweils Schwingungsbewegungen der Rohre 111 bzw.112 relativ zum Trägergerüst erfassen.

Dafür können die Schwingungssensoren 51, 52 mechanisch jeweils sowohl mit dem Rohr 111 als auch dem Trägergerüst verbunden sein und können die Schwingungssensoren 53, 54 mechanisch jeweils sowohl mit dem Rohr 112 als auch dem Trägergerüst verbunden sein. Für den anderen vorbezeichneten Fall, daß die Rohranordnung vier Rohre aufweist, kann, wie auch in Fig. 2 und 3 angedeutet bzw. aus deren Zusammenschau ohne weiteres ersichtlich, sowohl der Schwingungssensor 41 als auch der Schwingungssensor 42 mit jedem der beiden Rohre 111, 113 mechanischen verbunden sein und kann sowohl der Schwingungssensor 43 als auch der Schwingungssensor 44 mit jedem der beiden Rohre 112, 114 mechanischen verbunden sein, beispielsweise derart, daß der Schwingungssensor 41 und der Schwingungssensor 43 jeweils einlaßseitige Schwingungsbewegungen der Rohre 111, 112, 113 bzw. 114 erfassen und daß der Schwingungssensor 42 und der Schwingungssensor 44 jeweils auslaßseitige Schwingungsbewegungen der Rohre 111, 112, 113 bzw. 114 erfassen. Zudem können die Schwingungssensoren 41, 42 für diesen Fall dafür eingerichtet sein, entgegengesetzte, mithin gegenphasige, ggf. auch gegengleiche Schwingungsbewegungen der Rohre 111, 1113 zu erfasssen und in das (nämliche Schwingungsbewegungen jeweils repräsentierende) jeweilige Schwingungsmeßsignal s41, s42 zu wandeln und kann dementsprechend auch jeder der vorbezeichneten Schwingungssensoren 43, 44 dafür eingerichtet sein, entgegengesetzte, mithin gegenphasige, ggf. auch gegengleiche Schwingungsbewegungen der Rohre 112, 114 zu erfasssen und in das (nämliche Schwingungsbewegungen jeweils repräsentierende) jeweilige Schwingungsmeßsignal zu wandeln; dies beispielsweise auch derart, daß die Schwingungssensoren 41, 42 eingerichtet sind, die Schwingungsbewegungen der beiden Rohr 111, 113 differenziell zu erfassen, nämlich lediglich entgegengesetzte Schwingungsbewegungen nämlicher Rohre 111, 113 in das jeweilige Schwingungsmeßsignal s1, s2 zu wandeln, und daß die Schwingungssensoren 43, 44 eingerichtet sind, die Schwingungsbewegungen der beiden Rohr 112, 114 differenziell zu erfassen, nämlich lediglich entgegengesetzte Schwingungsbewegungen nämlicher Rohre 112, 114 in das jeweilige Schwingungsmeßsignal s3, s4 zu wandeln. Dafür können die Schwingungssensoren 51, 52 mechanisch jeweils sowohl mit dem Rohr 111 als auch dem Rohr 113 verbunden sein und können die Schwingungssensoren 53, 54 mechanisch jeweils sowohl mit dem Rohr 112 als auch dem Rohr 114 verbunden sein.

Zur weiteren Verbesserung der Genauigkeit mit der die Meßwerte X_{M} ermittelt werden, kann der Meßwandler - wie auch in Fig. 1 schematisch dargestellt - ferner auch dem Erfassen von Temperaturen innerhalb der Rohranordnung und dem Bereitstellen von dementsprechenden Temperaturmeßsignalen θ1, θ2 dienliche, beispielsweise jeweils direkt an einem der Rohre der Rohranordnung angebrachte, Temperatursensoren 71, 72 und/oder eine dem Erfassen von mechanischen Spannungen innerhalb der Rohranordnung und dem Bereitstellen von dementsprechenden Dehnungsmeßsignalen dienliche, beispielsweise jeweils direkt an einem der Rohre der Rohranordnung angebrachte, Dehnungssensoren aufweisen.

Wie bereits erwähnt umfaßt das Meßsystem zusätzlich zum Meßwandler 10 ein damit, mit der Erregeranordnung des Meßwandlers 10 als auch mit dessen Sensoranordnung elektrisch gekoppelte Meßsystem-Elektronik 20. Die Meßsystem-Elektronik 20 kann beispielsweise programmierbar und/oder fernparametrierbar ausgebildet, beispielsweise nämlich entsprechend mittels wenigstens einem Mikroprozessor und/oder wenigstens einem digitalen Signalprozessor (DSP) und/oder mittels eines programmierbaren Logikbausteins (FPGA) und/oder mittels eines kundenspezifisch programmierten Logikbausteins (ASIC) gebildet sein. Desweiteren kann die Meßsystem-Elektronik 20 mittels interner Energiespeicher und/oder von extern der Meßsystem-Elektronik 20 via Anschlußkabel mit der im Betrieb benötigten elektrischen Energie versorgt sein. Das elektrische Koppeln bzw. Anschließen des Meßwandlers 10 an die Meßsystem-Elektronik 20 kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein. Die Meßsystem-Elektronik 20 kann zudem - wie auch in Fig. 1 schematisch dargestellt - beispielsweise in einem entsprechenden, insb. schlag- und/oder auch explosionsfest und/oder zumindest gegen Spritzwasser schützenden, eigenen Elektronik-Gehäuse 200 untergebracht und zudem so ausgelegt sein, daß sie im Betrieb des Meßsystems mit einem diesem übergeordneten (hier nicht dargestellten) elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten, beispielsweise auch Statusmeldungen, austauschen kann, wie etwa jeweils aktuelle Meßwerte oder der Steuerung des Meßsystems dienende Einstell- und/oder Diagnosewerte. Dementsprechend kann die Meßsystem-Elektronik 20 beispielsweise eine solche Sende- und Empfangsschaltung COM aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Meßsystem-Elektronik 20 (bzw. deren vorbezeichnete Sende- und Empfangsschaltung COM zudem so ausgebildet sein, daß sie über eine, ggf. auch als 4-20 mA-Stromschleife konfigurierte Zweileiter-Verbindung 2L mit dem vorbezeichneten externen elektronischen Datenverarbeitungssystem elektrisch verbindbar ist und darüber sowohl die für den Betrieb des Meßsystems erforderliche elektrische Leistung von der vorbezeichneten Auswerte- und Versorgungseinheit des Datenverarbeitungssystems beziehen als auch, ggf. digitalisierte Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Meßsystem-Elektronik 20 auch so ausgebildet sein, daß sie nominell mit einer maximalen Leistung von 1 W oder weniger betrieben werden kann und/oder eigensicher ist. Die Meßsystem-Elektronik 20 kann zudem beispielsweise auch modular aufgebaut sein, derart, daß diverse Elektronik-Komponenten der Meßsystem-Elektronik 20, wie etwa eine, beispielsweise mittels eines oder mehrerer Mikroprozessoren und/oder mittels eines oder mehrerer digitaler Signalprozessoren gebildete, Meß- und Auswerteschaltung DSV zum Verarbeiten und Auswerten der vom Meßwandler 10 bereitgestellten (Schwingungs-)Meßsignalen, eine Treiberschaltung Exc zum Ansteuern des Meßwandlers bzw. dessen Erregeranordnung, eine interne Energieversorgungsschaltung VS zum Bereitstellen einer oder mehrerer interner Betriebsspannungen und/oder die vorbezeichnete, der Kommunikation mit einem übergeordneten Meßdatenverarbeitungssystem bzw. einem externen Feldbus dienliche Sende- und Empfangsschaltung COM, jeweils auf einer oder mehreren eigenen Leiterplatten angeordnet und/oder jeweils mittels eines oder mehreren eigenen Mikroprozessoren gebildet sind. Wie aus der Fig. 1 ersichtlich, kann die vorbezeichnete Sende- und Empfangsschaltung COM beispielsweise auch für eine der Ausgabe (xₘ) von, beispielsweise von der vorbezeichneten Meß- und Steuerschaltung DSV, Meßsystem intern ermittelten Meßwerten (X_{M}) vorgesehen sein. Dementsprechend kann die Sende- und Empfangsschaltung COM zudem eingerichtet sein, empfangene Meßwerte X_{M} in ein nämliche Meßwerte X_{M} bereitstellendes, beispielsweise zu einem Industriestandard, beispielsweise nämlich der DIN IEC 60381-1:1985-11, der IEC 61784-1 CPF1 (Foundation Fieldbus), der IEC 61784-1 CPF3 (Profibus), IEC 61158 oder der IEC 61784-1 CPF9 (HART), konformes, Ausgabesignal xₘ zu wandeln. Zum Visualisieren von Meßsystem intern erzeugten Meßwerten (X_{M}) und/oder Meßsystem intern generierten Statusmeldungen, wie etwa eine Fehlermeldung oder einen Alarm, vor Ort kann das Meßsystem desweiteren ein, zumindest zeitweise auch mit der Meßsystem-Elektronik 20 kommunizierendes Anzeige- und Bedienelement HMI aufweisen, wie etwa ein in vorbezeichnetem Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. Für den Fall, daß der Meßsystem das vorbezeichnete, zumal als Wandler-Schutzgehäuse ausgebildtes Trägergerüst 100 aufweist, kann das Elektronik-Schutzgehäuse 200, wie auch in Fig. 1 schematsich dargestell, beispielsweise an nämlichen Trägergerüst befestigt sein.

Die Meßsystem-Elektronik 20 des erfindungsgemäßen Meßsystems ist im besonderen dafür eingerichtet, den Schwingungserreger 31 zu bestromen, nämlich ein elektrisches erstes Treibersignal e1 in den ersten Schwingungserreger 31 einzuspeisen, sowie den zweiten Schwingungserreger 32 zu bestromen, nämlich ein elektrisches zweites Treibersignal e2 in den zweiten Schwingungserreger 32 einzuspeisen, wodurch das Rohr 111 bzw. die Rohre 111, 113 erzwungene mechanische Schwingungen, beispielsweise nämlich Biegeschwingungen, mit einer oder mehreren durch das Treibersignal e1 vorgegebenen Schwingungsfrequenzen und das Rohr 112 bzw. die Rohre 112, 114 erzwungene mechanische Schwingungen, beispielsweise nämlich Biegeschwingungen, mit einer oder mehreren durch das Treibersignal e2 vorgegebenen Schwingungsfrequenzen ausführen. Darüberhinaus ist die Meßsystem-Elektronik eingerichtet, in einem ersten Betriebsmodus sowohl das Treibersignal e1 mit einer ersten Nutz-Stromkomponenten eN1, nämlich einer hinsichtlich einer Stromstärke dominierenden oder einzigen sinusförmigen Stromkomponente mit einer (Wechselstrom-)Frequenz zu erzeugen und in den Schwingungserreger 31 einzuspeisen, als auch das zweite Treibersignal e2 mit wenigstens einer zweiten Nutz-Stromkomponenten eN2, nämlich einer hinsichtlich einer Stromstärke dominierenden oder einzigen sinusförmigen Stromkomponente mit einer (Wechselstrom-)Frequenz zu erzeugen und in den Schwingungserreger 32 einzuspeisen, derart, daß zumindest das Rohr 111 zumindest anteilig, insb. überwiegend, erste Nutzschwingungen, nämlich durch den (bestromten) Schwingungserreger 31 erzwungene mechanische Schwingungen mit wenigstens einer ersten Nutzfrequenz fN1, nämlich einer der (Wechselstrom-)Frequenz der Nutz-Stromkomponenten eN1 entsprechenden Schwingungsfrequenz und zumindest das Rohr 112 zumindest anteilig, insb. überwiegend, zweite Nutzschwingungen, nämlich durch den (bestromten) Schwingungserreger 32 erzwungene mechanische Schwingungen mit wenigstens einer zweiten Nutzfrequenz fN2, nämlich einer der (Wechselstrom-)Frequenz der Nutz-Stromkomponenten eN2 entsprechenden Schwingungsfrequenz ausführt, und daß jedes der Schwingungssignale s1, s2 - wie auch in Fig. 4 angedeutet - jeweils eine erste Nutz-Signalkomponente sN1 bzw. ein zweite Nutz-Signalkomponente sN2, nämlich eine jeweilige sinusförmige Signalkomponente mit einer der ersten Nutzfrequenz entsprechenden Frequenz und jedes der Schwingungssignale s3, s4 - wie auch in Fig. 4 angedeutet - jeweils eine dritte Nutz-Signalkomponente sN3 bzw. eine vierte Nutz-Signalkomponente sN4, nämlich eine jeweilige sinusförmige Signalkomponente mit einer der zweiten Nutzfrequenz fN2 entsprechenden Frequenz aufweist; dies beispielsweise auch derart, daß die ersten Nutzschwingungen und/oder zweiten Nutzschwingungen geeignet sind, im strömenden Meßstoff vom Massestrom abhängige Corioliskräfte zu bewirken. Zum Generieren der Treibersignale e1, e2 kann die Meßsystem-Elektronik 20 - wie auch in Fig. 1 schematisch dargestellt und wie bei derartigen Meßsystemen durchaus üblich - beispielsweise ein oder mehrere separate, insb. jeweils mittels einer oder mehreren dem Ermitteln und Einstellen der jeweiligen Nutzfrequenz fN1 bzw. fN2 dienlichen Phasenregelschleifen (PLL - phase locked loop) gebildete, Treiberschaltungen Exc aufweisen.

Die im Betrieb des Meßsystems in der Meßsystem-Elektronik 20, beispielsweise nämlich in einem oder mehreren der vorbezeichneten Mikroprozessoren bzw. digitalen Signalprozessoren der Meßsystem-Elektronik 20, ausgeführten Programm-Codes können jeweils z.B. in einem oder mehreren nicht flüchtigen, nämliche digitale Daten auch ohne eine angelegte Betriebsspannung, vorzuhaltenden Datenspeichern (EEPROM) der Meßsystem-Elektronik 20 persistent gespeichert sein und beim Starten derselben in einen in der Meßsystem-Elektronik 20 bzw. der vorbezeichneten Meß- und Auswerteschaltung DSV vorgesehenen, z.B. im Mikroprozessor integrierten, flüchtigen Datenspeicher (RAM) geladen werden. Die Schwingungsmeßsignale s1, s2, s3, s4 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung jedes der - hier elektrischen- Schwingungsmeßsignale s1, s2, s3, s4 jeweilis geeignete digitalisiert wird, vgl. hierzu beispielsweise die eingangs erwähnten US-B 63 11 136. Dementsprechend können in der Meßsystem-Elektronik 20, beispielsweise nämlich in der vorbezeichneten Meß- und Auswerteschaltung DSV, entsprechende Analog-zu-Digital-Wandler für die Schwingungsmeßsignal s1, s2, s3, s4 und/oder wenigstens ein nicht flüchtiger elektronischer Datenspeicher EEPROM vorgesehen sein, der dafür eingerichtet ist, digitale Daten, beispielsweise nämlich auch ohne eine angelegte Betriebsspannung, vorzuhalten.

Die vorbezeichnete (Wechselstrom-)Frequenz der Nutz-Stromkomponenten eN1, mithin die erste Nutzfrequenz fN1 kann beispielsweise einer von der Dichte des in der Rohranordnung geführten Meßstoffs FL abhängigen Resonanzfrequenz der Rohranordnung - beispielsweise nämlich einer niedrigsten Resonanzfrequenz des Rohrs 111 - entsprechen und die vorbezeichnete (Wechselstrom-)Frequenz der Nutz-Stromkomponenten eN2, mithin die zweite Nutzfrequenz fN2 kann beispielsweise einer von der Dichte des in der Rohranordnung geführten Meßstoffs FL abhängigen, ggf. auch von der vorbezeichneten ersten Resonanzfrequenz abweichenden, zweiten Resonanzfrequenz der Rohranordnung - beispielsweise nämlich einer niedrigsten Resonanzfrequenz des Rohrs 112 - entsprechen. Dementsprechend ist Meßsystem-Elektronik 20 nach einer weiteren Ausgestaltung der Erfindung ferner eingerichtet ist, die Nutz-Stromkomponente eN1 des Treibersignals e1 mit einer (Wechselstrom-)Frequenz bereitzustellen, die von einer Resonanzfrequenz fr1 des Rohrs 111 um weniger als 1% nämlicher Resonanzfrequenz fr1 und/oder um weniger als 1 Hz abweicht, und/oder die Nutz-Stromkomponente eN2 des Treibersignals e2 mit einer (Wechselstrom-)Frequenz bereitzustellen, die von einer Resonanzfrequenz fr2 des Rohrs 112 um weniger als 1% nämlicher Resonanzfrequenz fr2 und/oder um weniger als 1 Hz abweicht. Für den typischen Fall, daß die vorbezeichneten Resonanzfrequenzen fr1, fr2 gleich groß sind (fr1 = fr2), mithin die Rohre 111, 112 wenigstens eine gemeinsame Resonanzfrequenz fr12 aufweisen, kann die Meßsystem-Elektronik ferner insbesondere eingerichtet sein, die Nutz-Stromkomponente eN1, eN2 jeweils mit einer (Wechselstrom-)Frequenz bereitzustellen, die von der vorbezeichneten gemeinsamen Resonanzfrequenz fr12 um weniger als 1% nämlicher Resonanzfrequenz fr12 und/oder um weniger als 1 Hz abweicht, beispielsweise auch derart, daß zwischen den beiden Nutz-Stromkomponenten eN1, eN2 eine Phasendifferenz von 180° eingestellt ist. Bei der vorbezeichneten gemeinsame Resonanzfrequenz fr12 kann es sich beispielsweise um eine Resonanzfrequenz fr12 eines dem Meßwandler innewohnenden natürlichen Biegeschwingungsmode, beispielsweise nämlich eines Biegeschwingungsgrundmode, handeln, in dem die beiden Rohre 111, 112 gegenphasige mechanische Schwingungen ausführen können bzw. ausführen, mithin kann die Meßsystem-Elektronik auch eingerichtet sein, im ersten Betriebsmodus nämliche gegenphasigen mechanischen Schwingungen erzwingende Treibersignale e1, e2 in die Schwingungserreger 31, 32 einzuspeisen.

Neben der Generierung der beiden Treibersignale e1, e2 ist die Meßsystem-Elektronik 20 zudem eingerichtet, im ersten Betriebsmodus die Schwingungssignale s1, s2, s3, s4 zu empfangen und auszuwerten, nämlich anhand der Schwingungssignale s1, s2, s3, s4, nicht zuletzt zumindest anhand jeweils einer der vorbezeichneten Nutz-Signalkomponenten sN1, sN2, sN3, sN4, die vorbezeichneten Meßwerte für die wenigstens eine physikalische Meßgröße zu ermitteln, beispielsweise nämlich anhand von der vorbezeichneten ersten Phasendifferenz Δϕ12 und/oder anhand von der vorbezeichneten zweiten Phasendifferenz Δϕ34, Massenstrom-Meßwerte, nämlich die Massenstrom des Meßstoffs FL repräsentierende Meßwerte X_{M} zu generieren und/oder anhand wenigstens einer Signalfrequenz wenigstens eines der Schwingungsmeßsignale s41, s42, s43, s44, beispielsweise nämlich anhand einer der vorbezeichneten Nutzfrequenz fN1, fN2 wenigstens eines der Schwingungsmeßsignale s1, s2, s3, s4, Dichte-Meßwerte, nämlich die Dichte ρ des Meßstoffs FL repräsentierende Meßwerte zu generieren; dies beispielsweise auch in einer bei Meßsystemen der in Rede stehenden Art, nicht zuletzt auch in für die aus den eingangs erwähnten US-A 2006/0266129, der US-A 2007/0113678, der US-A 2010/0011882, der US-A 2012/0123705, der US-A 2017/0356777, der US-A 56 02 345, der US-A 59 26 096, der WO-A 2009/136943, der WO-A 2019/017891, der WO-A 2019/081169, der WO-A 2019/081170, der WO-A 87/06691, der WO-A 96/05484, der WO-A 96/08697, der WO-A 97/26508, der WO-A 99/39164 oder der eigenen nicht vorveröffentlichten internationalen Patentanmeldung PCT/EP2019/082044 bekannten Meßsystemen typischen Weise. Alternativ oder in Ergänzung kann die Meßsystem-Elektronik 20 auch dafür vorgesehen bzw. eingerichtet sein, anhand wenigstens eines der Schwingungsmeßsignale s41, s42, s43, s44, und/oder wenigstens eines der Treibersignale e1, e2 Viskositäts-Meßwerte, nämlich die Viskosität des Meßstoffs FL repräsentierende Meßwerte zu generieren. Die Verarbeitung der Schwingungsmeßsignale, ggf. auch ein bei derartigen Meßsystemen durchaus übliches Ansteuern der vorbezeichneten Treiberschaltung(en) Exc kann - wie auch in Fig. 1 schematisch dargestellt - beispielsweise auch mittels der vorbezeichneten Meß- und Auswerteschaltung DSV erfolgen.

Bei der Rohranordnung des Meßwandlers 10 sind deren Rohre 111, 112 bzw. deren deren Rohre 111, 112, 113, 114 naturgemäß zumindest über die beiden Strömungsteiler 21, 22, ggf. zusätzlich auch über die vorbezeichneten Kopplerelemente miteinander mechanisch gekoppelt, derart, daß erzwungene mechanische Schwingungen des Rohrs 111 damit gekoppelte mechanische Schwingungen des Rohrs 112 und erzwungene mechanische Schwingungen des Rohrs 112 damit gekoppelte mechanische Schwingungen des Rohrs 111 bewirken. Für den vorbezeichneten Fall, daß die Rohranordnung mittels vier Rohren gebildet ist, sind die auch die Rohre 113, 114 gleichermaßen zumindest über die beiden Strömungsteiler 21, 22 miteinander mechanisch gekoppelt, derart, daß erzwungene mechanische Schwingungen des Rohrs 113 damit gekoppelte mechanische Schwingungen zumindest des Rohrs 114 und erzwungene mechanische Schwingungen des Rohrs 114 damit gekoppelte mechanische Schwingungen des Rohrs 113 bewirken; insb. sind die Rohre 111, 112, 113, 114 so mit einander mechanisch gekoppelt, daß erzwungene mechanische Schwingungen der Rohre 111,113, nicht zuletzt gegengleiche Biegeschwingungen nämlicher Rohre 111, 113, damit gekoppelte mechanische Schwingungen jedes der Rohre 112, 114, beispielsweise auch gegengleiche Biegeschwingungen nämlicher Rohre 112, 114, und erzwungene mechanische Schwingungen der Rohre 112, 114, nicht zuletzt gegengleiche Biegeschwingungen nämlicher Rohre 112, 114, damit gekoppelte mechanische Schwingungen jedes der Rohre 111, 113, beispielsweise auch gegengleiche Biegeschwingungen der Rohre 111, 113, bewirken können bzw. daß erzwungene mechanische Schwingungen jedes der Rohr 111, 112 113, 114 damit jeweils gekoppelte mechanische Schwingungen jedes der anderen Rohre 111, 112 113, 114 bewirken können. Im Ergebnis der vorbezeichneten mechanischen Kopplung der Rohre der Rohranordnung führen das Rohr 112 bzw. die Rohre 112, 114 jeweils nicht nur die vorbezeichneten, nämlich mittels des durch das Treibersignal e2 bestromten Schwingungserreger 32 erzwungenen mechanische Schwingungen, sondern zudem auch mit wenigstens einer der Schwingungen des Rohrs 111 bzw. der Rohre 111, 113 gekoppelte mechanische Schwingungen und das Rohr 111 bzw. die Rohre 111, 113 jeweils nicht nur die vorbezeichneten, nämlich mittels des durch das Treibersignal e1 bestromten Schwingungserreger 31 erzwungenen mechanische Schwingungen, sondern zudem auch mit wenigstens einer der Schwingungen des Rohrs 112 bzw. der Rohre 112, 114 gekoppelte mechanische Schwingungen aus. Anhand dieser gekoppelten Schwingungen können beispielsweise ebenfalls die wenigstens eine physikalische Meßgröße repräsentierende Meßwerte ermittelt werden. Zudem kann anhand der gekoppelten Schwingungen auch ein Betriebszustand des Meßsystems charakterisiert werden bzw. damit einhergehend eine Funktionstüchtigkeit des Meßsystems im Betrieb überprüft werden. Der vorbezeichnete Betriebszustand kann beispielsweise einer dem Meßsystem innewohnenden, eine oder mehrere funktionelle Abhängigkeiten eines oder mehrerer der Schwingungsmeßsignale von einem oder mehreren der Treibersignale bestimmende Systemfunktion (oder auch Übertragungsfunktion) des Meßsystems entsprechen bzw. diese spezifizieren; dies insbesondere in der Weise, daß eine zeitliche Änderung nämlichen Betriebszustands bzw. eine - vorübergehende oder auch dauerhafte - Abweichung des Betriebszustands von einem dafür vorgegebenen Referenzzustand einer Veränderung der vorbezeichneten Systemfunktion des Meßsystems, mithin einer Beeinträchtigung der Funktionstüchtigkeit des Meßsystems entspricht.

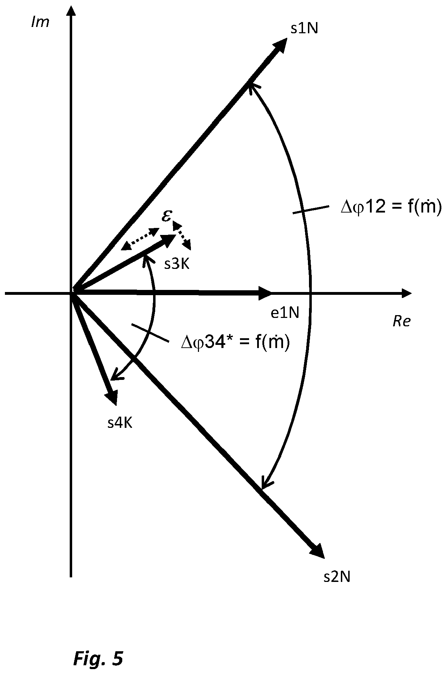

Erfindungsgemäß ist zudem die Meßsystem-Elektronik 20 ferner eingerichtet, in einem, beispielsweise deren vorbezeichneten ersten Betriebsmodus zeitlich vorausgehend und/oder zeitlich nachfolgend, ggf. auch durch die Meßsystem-Elektonik 20 automatisch aktivierten, zweiten Betriebsmodus zu operieren und währendessen zumindest vorübergehend das Treibersignal e1 mit der Nutz-Stromkomponenten eN1 zu erzeugen und in den Schwingungserreger 31 einzuspeisen, beispielsweise nämlich den Schwingungserreger 31 gleichermaßen wie im ersten Betriebsmodus zu bestromen, zugleich aber kein die Nutz-Stromkomponente eN2 enthaltendes Treibersignal in den Schwingungserreger 32 einzuspeisen, derart, daß das Rohr 111 bzw. die Rohre 111, 113 zumindest anteilig erste Nutzschwingungen und das Rohr 112 bzw. die Rohre 112, 114 jedoch mit nämlichen ersten Nutzschwingungen gekoppelte mechanische Schwingungen mit der Nutzfrequenz fN1, gleichwohl keine zweiten Nutzschwingungen ausführt, und daß infolgedessen jedes der Schwingungssignale s1, s2, jeweils die Nutz-Signalkomponente sN1 bzw. sN2 und jedes der Schwingungssignale s3, s4 - wie auch in Fig. 5 angedeutet - jeweils eine Koppel-Signalkomponente sK3 bzw. sk4, nämlich eine jeweilige sinusförmigen Signalkomponente mit einer der (Wechselstrom-)Frequenz der Nutz-Stromkomponenten eN1 des Treibersignals e1 entsprechenden Frequenz aufweist. Darüberhinaus ist die Meßsystem-Elektronik 20 eingerichtet, im zweiten Betriebsmodus zumindest das Schwingungssignal s3 und/oder das Schwingungssignal s4, ggf. auch beide Schwingungssignale s3, s4 und/oder auch das Schwingungssignal s1 und/oder auch das Schwingungssignal s2 oder auch sämtliche Schwingungssignale s1, s2, s3, s4 zu empfangen und auszuwerten, beispielsweise nämlich die wenigstens eine physikalische Meßgröße repräsentierende Meßwerte zu ermitteln und/oder um eine Funktionstüchtigkeit des Meßsystems zu überprüfen. Nach einer weiteren Ausgestaltung der Erfindung ist die Meßsystem-Elektronik dementsprechend ferner eingerichtet, von einem oder jedem der im zweiten Betriebsmodus empfangenen Schwingungssignale s3, s4 die jeweilige Koppel-Signalkomponente sK3 bzw. sK4 zu gewinnen bzw. zu ermitteln. Beispielsweise kann die Meßsystem-Elektronik 20 eingerichtet sein, zumindest im zweiten Betriebsmodus anhand der vorbezeichneten Phasendifferenz Δcp12 sowie anhand einer dritten Phasendifferenz Δϕ34*, nämlich einer Differenz zwischen einem auch vom Massestrom des Meßstoffs abhängigen Phasenwinkel der Koppel-Signalkomponente sK3 des Schwingungssignals s3 und einem ebenfalls vom Massestrom des Meßstoffs abhängigen Phasenwinkel der Koppel-Signalkomponente sK4 des Schwingungssignals s4 die vorbezeichneten Massestrom-Meßwerte zu ermitteln.

Nach einer weiteren Ausgestaltung der Erfindung ist die Meßsystem-Elektronik 20 im besonderen auch dafür eingerichtet, anhand zumindest eines der im zweiten Betriebsmodus empfangenen Schwingungssignale s3, s4, insb. nämlich deren jeweiliger Koppel-Signalkomponente sK3 bzw. sk4, zu detektieren, ob eine Störung ε des Meßsystems vorliegt, beispielsweise nämlich eine Störung die eine Funktionstüchtigkeit des Meßsystems vermindert bzw. eine Fehlfunktion des Meßsystems bewirkt und/oder die eine Integrität zumindest eines der Schwingungsmeßsignale s1, s2, s3, s4 herabsetz, mithin auch eine Integrität aus den Schwingungsmeßsignalen s1, s2, s3, s4 gewonnener Meßwerte herabsetzen und/oder einen Meßfehler nämlicher Meßwerte provozieren kann. Nämliche Störung ε kann - wie auch in Fig. 5 angedeutet - einen Phasenwinkel und/oder eine Amplitude wenigstens einer der Koppel-Signalkomponenten sK3 bzw. sk4 signifikant beeinflussen, beispielsweise derart, daß die vorbezeichnete Phasendifferenz Δcp34* von der Phasendifferenz Δcp12 und/oder einem entsprechenden Referenzwert um mehr als ein dafür zuvor ermitteltes Toleranzmaß abweicht. Zudem kann die Meßsystem-Elektronik 20 ferner eingerichtet sein, eine, beispielsweise auch als ein (Störungs-)Alarm deklarierte, (Störungs-)Meldung auszugeben, falls eine Störung des Meßsystems entsprechend festgestellt ist. Nämliche Störung ε des Meßsystems kann beispielsweise aufgrund eines Belags auf einer Innenseite der Rohrwandung eines oder mehrerer der Rohre, einer Reduzierung einer Wandstärke der Rohrwandung eines oder mehrerer der Rohre, einer Alterung eines oder mehrerer der Schwingungssensoren und/oder einer Alterung eines oder mehrerer der Schwingungserreger auftreten. Die vorbezeichnete Störung ε des Meßsystems kann im besonderen auch eine, ggf. auch irreversible Veränderung einer oder mehrerer Schwingungseigenschaften der Rohranordnung, etwa aufgrund einer Reduzierung einer Wandstärke der Rohrwandung eines oder mehrerer der Rohre und/oder aufgrund einer plastischen Verformung eines oder mehrerer der Rohre und/oder aufgrund eines Belags auf einer Innenseite der Rohrwandung eines oder mehrerer der Rohre und/oder aufgrund eines Risses in der Rohrwandung eines oder mehrerer der Rohre, umfassen. Für den Fall, daß das vorbezeichnete Trägergerüst und die Rohranordnung, wie auch in der eingangs erwähnten WO-A 96/08697 oder WO-A 2019/017891 vorgeschlagen, wieder lösbar aneinander befestigt sind, beispielsweise um ein Zusammenführen bzw. Montieren von Trägergerüst und Rohranordnung vor Ort an der jeweiligen Meßstelle bzw. in deren Nähe zu ermöglichen, kann die Störung ε des Meßsystems beispielsweise aber auch eine fehlerhafte Montage Trägergerüst und Rohranordnung umfassen. Zudem kann die Störung des Meßsystems auch eine, ggf. irreversible Veränderung einer oder mehrerer Strömungseigenschaften der Rohranordnung, etwa aufgrund einer Reduzierung eines Strömungsquerschnitts der Rohranordnung, beispielsweise nämlich infolge einer Verstopfung eines oder mehrerer der Rohre und/oder infolge eines Belags auf einer Innenseite der Rohrwandung eines oder mehrerer der Rohre und/oder eine, ggf. auch irreversible Veränderung einer oder mehrerer elektro-mechanischer Wandlereigenschaften, etwa aufgrund einer Alterung eines oder mehrerer der Schwingungssensoren und/oder Schwingungserreger und/oder aufgrund einer Änderung einer jeweiligen mechanischer Verbindung zwischen einem oder mehreren Schwingungssensoren bzw. einem oder mehreren Schwingungserregern und dem jeweiligen Rohr, umfassen. Störung des Meßsystems kann aber auch eine, ggf. auch irreversible, Veränderung eines (Skalen-)Nullpunkts des Meßsystems, der beispielsweise einer vorbezeichneten, gleichwohl bei ruhendem Meßstoff gemessenen Phasendifferenz Δϕ12, Δϕ34 entsprechen kann, und/oder eine, ggf. auch irreversible, Veränderung einer (Meß-)Empfindlichkeit des Meßsystems, die eine auf eine Änderung des Massenstroms bezogene Änderung der Phasendifferenz Δcp12, Δcp34 entsprechen kann, sein.

Die Detektion einer oder mehrerer der vorbezeichneten Störungen ε des Meßsystems kann beispielsweise mittels eines einfachen Vergleiches von anhand von im ersten Betriebsmodus empfangenen Schwingungssignalen ermittelten Meßwerten für die wenigstens eine Meßgröße mit anhand von im zweiten Betriebsmodus empfangenen Schwingungssignalen ermittelten Meßwerten für nämliche Meßgröße erfolgen. Beispielsweise können zum Überprüfen der Funktionstüchtigkeit des Meßsystems bzw. zur Detektion der vorbezeichneten Störung ε die im zweiten Beriebsmodus anhand der Phasendifferenzen Δcp12, Δcp34* ermittelten Massestrom-Meßwerte mit im ersten Betriebmodus anhand der Phasendifferenzen Δcp12, Δcp34 ermittelten Massestrom-Meßwerten und/oder können im zweiten Betriebmodus anhand der Phasendifferenzen Δcp34* ermittelte (Teil-)Massestrom-Meßwerten mit im zweiten Betriebmodus anhand der Phasendifferenzen Δcp12 ermittelten (Teil-)Massestrom-Meßwerten verglichen werden. Alternativ oder in Ergänzung können dafür auch die beiden, nominell proportionalen Phasendifferenzen Δϕ12, Δϕ34* mittels der Meßsystem-Elektronik 20 entsprechend mit einander verglichen werden. Dementsprechend ist die Meßsystem-Elektronik 20 nach einer weiteren Ausgestaltung der Erfindung ferner eingerichtet, die Phasendifferenz Δcp12 und die Phasendifferenz Δcp34* miteinander zu vergleichen, beispielsweise um bei einer zu großen, nämlich einen dafür vorgegebenen Bezugswert überschreitenden Abweichung die vorbezeichnete (Störungs-)Meldung auszugeben. Nicht zuletzt auch für den erwähnten Fall, daß das Rohr 111 eine von der Resonanzfrequenz fr2 des Rohrs 112 bzw. die Rohr 111, 113 eine von der Resonanzfrequenz fr2 der Rohrs 112, 114 jeweils abweichende Resonanzfrequenz fr1 aufweist bzw. aufweisen, kann die Meßsystem-Elektronik 20 vorteilhaft ferner auch eingerichtet sein, die Nutz-Stromkomponente eN1 des Treibersignals e1 mit einer (Wechselstrom-)Frequenz bereitzustellen, die von der vorbezeichneten Resonanzfrequenz fr2 um weniger als 1% nämlicher Resonanzfrequenz fr2 und/oder um weniger als 1 Hz abweicht und/oder die Nutz-Stromkomponente eN2 des Treibersignals e2 mit einer (Wechselstrom-)Frequenz bereitzustellen, die von der vorbezeichneten Resonanzfrequenz fr1 um weniger als 1% nämlicher Resonanzfrequenz fr1 und/oder um weniger als 1 Hz abweicht; dies beispielsweise auch derart, daß die im zweiten Betriebsmodus der Meßsystem-Elektronik 20 die mit den ersten Nutzschwingungen des Rohrs 111 gekoppelten mechanischen Schwingungen des Rohrs 112 bzw. die mit den ersten Nutzschwingungen der Rohre 111, 113 gekoppelten mechanischen Schwingungen der Rohre 112, 114 Resonanzschwingungen des Rohrs 112 bzw. der Rohre 112, 114 entsprechen.

Zwecks der Detektion einer allfällige Störung des Meßsystems ist die Meßsystem-Elektronik 20 nach einer weiteren Ausgestaltung der Erfindung ferner dafür eingerichtet, anhand eines oder mehrerer der im zweiten Betriebsmodus empfangenen Schwingungsmeßsignale zumindest gelegentlich, insb. wiederkehrend, einen oder mehrere Kennzahlenwerte für wenigstens eine Meßsystem-Kennzahl MK1 zu berechnen, die den vorbezeichneten Betriebszustand des Meßwandlers bzw. des damit gebildeten Meßsysetms charakterisiert; dies im besonderen in der Weise, daß nämliche Meßsystem-Kennzahl K1 von einem oder mehreren Parametern einer zwischen der Nutz-Stromkomponenten eN1 des Treibersignals e1 und der Koppel-Signalkomponente sK3 des Schwingungsmeßsignals s3 und/oder der Koppel-Signalkomponente sK4 des Schwingungsmeßsignals s4 vermittelnden Systemfunktion des Meßsystems bzw. von einer zeitlichen Änderung eines oder mehrerer der vorbezeichneten Parameter abhängig ist. Die Meßsystem-Kennzahl MK1 kann beispielsweise von einem System-Amplitudenverhältnis zwischen der Nutz-Stromkomponenten eN1 des Treibersignals e1 und der Koppel-Signalkomponente sK3 bzw. sK4 wenigstens eines des Schwingungsmeßsignale s3, s4, beispielsweise nämlich einer Summe sK3+sK4 der Koppel-Signalkomponente der Schwingungsmeßsignale s3, s4, (bzw. dessen Änderung) abhängig sein bzw. nämliches System-Amplitudenverhältnis (s3+s4)/e1 oder eine Änderung davon entsprechend bewerten und/oder quantifizieren. Alternativ oder in Ergänzung kann die Meßsystem-Kennzahl K1 auch von einer System-Phasendifferenz zwischen der Nutz-Signalkomponente sN1, sN2 wenigstens eines der Schwingungmeßsignale s1, s2, beispielsweise nämlicher einer Summe sN1+sN2 der Nutz-Signalkomponente sN1, sN2 der Schwingungsmeßsignale s1, s2, und der Koppel-Signalkomponente sK3 bzw. sK4 wenigstens eines der Schwingungmeßsignale s3, s4, beispielsweise nämlicher einer Summe sK3+sK4 der Koppel-Signalkomponente sk3, sK4 der Schwingungsmeßsignale s3, s4, (bzw. dessen Änderung) abhängig sein bzw. nämliche System-Phasendifferenz oder eine Änderung davon bewerten und/oder quantifizieren.

Zum Detektieren des Vorliegens eines die Funktionstüchtigkeit des Meßaufnehmers, mithin die Meßgenauigkeit des Meßsystems beeinträchtigenden Störung ist die Meßsystem-Elektronik 20 gemäß einer weiteren Ausgestaltung der Erfindung ferner eingerichtet, einen oder mehrere Kennzahlenwerte für die wenigstens eine Meßsystem-Kennzahl MK1 auszuwerten, beispielsweise nämlich jeweils mit einem oder mehreren für die nämliche Meßsystem-Kennzahl MK1 vorab ermittelten, beispielsweise nämlich in vorbezeichnetem nicht flüchtigen elektronischen Datenspeicher EEPROM gespeicherten, Bezugswerten BK1₁ (BK1₁, BK1₂,...BK1ᵢ...) zu vergleichen. Dementsprechend ist die Meßsystem-Elektronik 20 ferner auch dafür eingerichtet, zu ermitteln, ob ein oder mehrere Kennzahlenwerte für die Meßsystem-Kennzahl MK1 größer als einer oder mehrere solcher, beispielsweise nämlich ein nicht mehr intaktes Meßsystems repräsentierende, Bezugswerte für die Meßsystem-Kennzahl MK1 ist und ggf. beispielsweise auch die dies signalisierende (Störungs-)Meldung auszugeben, beispielsweise nämlich vor Ort anzuzeigen und/oder als Statusmeldung an das vorbezeichnete elektronischen Datenverarbeitungssystem zu übermitteln. Bei den vorbezeichneten Bezugswerten für die Meßsystem-Kennzahl MK1 kann es sich beispielsweise um eine (auf eine der vorbezeichneten Störungen zurückzuführende) verminderte Funktionstüchtigkeit des Meßaufnehmers bzw. eine (auf eine der vorbezeichneten Störungen zurückzuführende) Fehlfunktion des Meßaufnehmers repräsentierende Bezugswerte handeln. Nämliche Bezugswerte können beispielsweise vorab, beispielsweise nämlich vom Hersteller des Meßsystems bzw. bei einer während der Herstellung des Meßsystems vollzogenen (Werks-)Kalibrierung und/oder während der Inbetriebnahme vor Ort, und/oder im Betrieb des Meßsystems ermittelt werden; dies beispielsweise, derart, daß zunächst die jeweilige Meßsystem-Kennzahl MK1 für das fertiggestellte, mithin intakte Meßsystem ermittelt und mit einem einer noch tolerierbaren Beeinflussung entsprechenden Toleranzwert entsprechend in den Bezugswert BK1₁ umgerechnet und im Datenspeicher EEPROM abgespeichert wird.

Die Ermittlung der Kennzahlenwerte MK1 bzw. das Ermitteln des Vorliegens einer Störung des Meßsystems kann, wie bereits angedeutet, auch automatisiert, beispielsweise nämlich zeitgesteuert und/oder auch in Abhängigkeit von Änderungen von anderen Diagnosewerten, initiiert bzw. wieder ausgesetzt werden. Alternativ oder in Ergänzung kann die Ermittlung der Kennzahlenwerte aber auch von extern des Meßsystems initiiert und/oder ausgesetzt werden, beispielsweise nämlich ausgehend von vorbezeichnetem elektronischen Datenverarbeitungssystem über die vorbezeichnete Sende- und Empfangsschaltung COM und/oder ausgehend von Bedienpersonal vor Ort über die vorbezeichnete Anzeige- und Bedienelement HMI. Dementsprechend ist die Meßsystem-Elektronik 20 nach einer weiteren eingerichtet ist, einen zumindest die Ermittlung der Kennzahlenwerte für zumindest die Kennzahl K1, ggf. nämlich auch deren vorbezeichnete Auswertung initiierenden Start-Befehl zu empfangen und auszuwerten, nämlich einen Eingang des Start-Befehls zu detektieren und daraufhin eine Ermittlung der Kennzahlenwerte für die erste Meßsystem-Kennzahl MK1 in Gang zu setzen und/oder ist die Meßsystem-Elektronik eingerichtet, einen die Ermittlung der Kennzahlenwerte für die Meßsystem-Kennzahl MK1 zumindest vorübergehend unterbindenden Stop-Befehl zu empfangen und auszuwerten, nämlich einen Eingang des Stop-Befehls zu detektieren und daraufhin eine Ermittlung der Kennzahlenwerte für die Meßsystem-Kennzahl MK1 zumindest vorübergehend anzuhalten.

Zur weiteren Verbesserung der Genauigkeit bzw. Verläßlichkeit, mit der im Betrieb die Meßwerte und/oder das Auftreten der Störung ermittelt werden, ist die Meßsystem-Elektronik 20 nach einer weiteren Ausgestaltung der Erfindung ferner eingerichtet, in einem, beispielsweise dem zweiten Betriebsmodus zeitlich nachfolgend und/oder damit alternierend aktivierten, dritten Betriebsmodus zumindest vorübergehend das Treibersignal e2 mit der Nutz-Stromkomponenten eN2 zu erzeugen und in den Schwingungserreger 32 einzuspeisen, beispielsweise nämlich den Schwingungserreger 32 gleichermaßen wie im ersten Betriebsmodus zu bestromen, und zugleich kein die Nutz-Stromkomponente eN1 enthaltendes Treibersignal in den ersten Schwingungserreger einzuspeisen, derart, daß das Rohr 112 zumindest anteilig zweite Nutzschwingungen und das Rohr 111 entsprechend mit nämlichen zweiten Nutzschwingungen gekoppelte mechanische Schwingungen mit der Nutzfrequenz fN2, gleichwohl keine ersten Nutzschwingungen ausführt, und daß infolgedessen jedes der Schwingungssignale s3, s4 jeweils die Nutz-Signalkomponente sN3 bzw. sN4 und jedes der Schwingungssignale s1, s2 jeweils eine Koppel-Signalkomponente sK1, sk2, nämlich eine jeweilige sinusförmigen Signalkomponente mit einer der (Wechselstrom-)Frequenz der Nutz-Stromkomponenten eN2 entsprechenden Frequenz aufweist. Zudem kann die Meßsystem-Elektronik 20 ferner eingerichtet sein, im dritten Betriebsmodus, zumindest das Schwingungssignal s1 und/oder das Schwingungssignal s2, beispielsweise nämlich auch das Schwingungssignal s3 und/oder das Schwingungssignal s4, zu empfangen und auszuwerten, beispielsweise nämlich (analog zum zweiten Betriebsmodus) Meßwerte für die wenigstens eine Meßgröße zu ermitteln und/oder zu ermitteln, ob die vorbezeichnete Störung ε des Meßsystems vorliegt.

## Patentansprüche

1. Vibronisches Meßsystem, insb. Coriolis-Massedurchfluß-Meßgerät oder Coriolis-Massedurchfluß-/Dichte-Meßgerät, zum Messen und/oder Überwachen wenigstens eines, insb. zeitlich veränderlichen, Strömungsparameters, insb. eines Massenstrome, eines Volumenstroms und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Meßstoffs, insb. eines Gases, einer Flüssigkeit oder einer Dispersion, welches Meßsystem, insb. als In-Line-Meßgerät und/oder Meßgerät in Kompaktbauweise ausgebildete, Meßsystem umfaßt:
- einen Meßwandler (10)
-- mit einer Rohranordnung zum Führen des strömenden Meßstoffs,
-- mit einer Erregeranordnung zum Wandeln elektrischer Leistung in dem Anregen und Aufrechterhalten erzwungener mechanischer Schwingungen der Rohranordnung dienliche mechanische Leistung
-- und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen;
- sowie eine mit dem Meßwandler (10), nämlich sowohl mit dessen Erregeranordnung als auch mit dessen Sensoranordnung, insb. mittels elektrischer Verbindungsleitungen, elektrisch gekoppelte, insb. mittels wenigstens eines Mikroprozessors gebildete und/oder in Elektronik-Schutzgehäuse angeordnete, Meßsystem-Elektronik (20) zum Ansteuern des Meßwandlers und zum Auswerten von vom Meßwandler gelieferten Schwingungsmeßsignalen;
- wobei die Rohranordnung
-- einen, insb. als Leitungsverzweigung dienlichen und/oder einlaßseitigen, ersten Strömungsteiler (21) mit wenigstens zwei Strömungsöffnungen,
-- einen, insb. dem ersten Strömungsteiler (21) baugleichen und/oder als Leitungsvereinigung dienlichen und/oder auslaßseitigen, zweiten Strömungsteiler (22) mit wenigstens zwei Strömungsöffnungen
-- sowie ein, insb. zumindest abschnittsweise gekrümmtes und/oder zumindest abschnittsweise gerades, erstes Rohr (111) und wenigstens ein, insb. zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr (112) aufweist,
-- wobei jedes der ersten und zweiten Rohre der Rohranordnung sich jeweils von einem jeweiligen ersten Ende des jeweiligen Rohrs bis zu einem jeweiligen zweiten Ende nämlichen Rohrs mit einer jeweiligen Rohrlänge erstreckt und jeweils ein von einer, insb. metallischen, Rohrwandung umschlossenes, sich jeweils vom jeweiligen ersten Ende des jeweiligen Rohrs bis zum jeweiligen zweiten Ende nämlichen Rohrs erstreckenden Lumen aufweist,
-- wobei jedes der ersten und zweiten Rohre der Rohranordnung jeweils an jeden der ersten und zweiten Strömungsteiler angeschlossen ist, derart, daß
--- das erste Rohr mit dessen ersten Ende in eine erste Strömungsöffnung des ersten Strömungsteilers (21) und mit dessen zweiten Ende in eine erste Strömungsöffnung des zweiten Strömungsteilers (22)
--- und das zweite Rohr mit dessen ersten Ende in eine zweite Strömungsöffnung des ersten Strömungsteilers (21) und mit dessen zweiten Ende in eine zweite Strömungsöffnung des zweiten Strömungsteilers (22) mündet,
--- wobei die ersten und zweiten Rohre der Rohranordnung zumindest über die ersten und zweiten Strömungsteiler miteinander mechanisch gekoppelt sind, derart, daß erzwungene mechanische Schwingungen des ersten Rohrs damit gekoppelte mechanische Schwingungen des zweiten Rohrs und erzwungene mechanische Schwingungen des zweiten Rohrs damit gekoppelte mechanische Schwingungen des ersten Rohrs bewirken;
--- und wobei jedes der ersten und zweiten Rohre der Rohranordnung jeweils eingerichtet ist, von Meßstoff durchströmt und währenddessen vibrieren gelassen zu werden;
- wobei die Erregeranordnung zwei, insb. elektrodynamische und/oder baugleiche, Schwingungserreger (31, 32) aufweist, von denen
-- ein erster Schwingungserreger (31) mechanisch mit dem ersten Rohr verbunden, insb. mittig am ersten Rohr positioniert,
-- und ein zweiter Schwingungserreger (32) mechanisch mit dem zweiten Rohr verbunden, insb. mittig am zweiten Rohr positioniert, ist,
- wobei jeder der erste und zweiten Schwingungserreger jeweils eingerichtet ist, elektrische Leistung mit einem zeitlich veränderlichen elektrischen Strom in mechanische Leistung zu wandeln, insb. derart, daß an einem jeweiligen, mittels des jeweiligen Schwingungserregers am damit jeweils mechanisch verbundenen Rohr gebildeten Angriffspunkt eine zeitlich veränderliche Antriebskraft auf das erste bzw. zweite Rohr wirkt;
- wobei die Sensoranordnung wenigstens vier, insb. elektrodynamische und/oder baugleiche und/oder voneinander beabstandete, Schwingungssensoren aufweist, von denen
-- ein erster Schwingungssensor (41) und ein zweiter Schwingungssensor (42) voneinander beabstandet, insb. symmetrisch zum ersten Schwingungserreger (31), am ersten Rohr positioniert, insb. nämlich zumindest anteilig mit dem ersten Rohr mechanisch verbunden,
-- und ein dritter Schwingungssensor (43) und ein vierter Schwingungssensor (44) voneinander beabstandet, insb. symmetrisch zum zweiten Schwingungserreger (32), am zweiten Rohr positioniert, insb. nämlich zumindest anteilig mit dem zweiten Rohr mechanisch verbunden, sind;
- wobei jeder der ersten und zweiten Schwingungssensoren jeweils eingerichtet ist, Schwingungsbewegungen des ersten Rohrs zu erfassen und in ein nämliche Schwingungsbewegungen repräsentierendes, insb. elektrisches oder optisches, erstes bzw. zweites Schwingungsmeßsignal zu wandeln, insb. derart, daß jedes der ersten und zweiten Schwingungsmeßsignale jeweils eine oder mehrere sinusförmige Signalkomponenten mit jeweils einer einer Schwingungsfrequenz von Schwingungsbewegungen des ersten Rohrs entsprechenden Frequenz enthält;
- wobei jeder der dritten und vierten Schwingungssensoren jeweils eingerichtet ist, Schwingungsbewegungen des zweiten Rohrs zu erfassen und in ein nämliche Schwingungsbewegungen repräsentierendes, insb. elektrisches oder optisches, drittes bzw. viertes Schwingungsmeßsignal zu wandeln, insb. derart, daß jedes der dritten und vierten Schwingungsmeßsignale jeweils eine oder mehrere sinusförmige Signalkomponenten mit jeweils einer einer Schwingungsfrequenz von Schwingungsbewegungen des zweiten Rohrs entsprechenden Frequenz enthält;
- wobei die Meßsystem-Elektronik (20) eingerichtet ist,
-- den ersten Schwingungserreger (31) zu bestromen, nämlich ein elektrisches erstes Treibersignal (e1) in den ersten Schwingungserreger (31) einzuspeisen, wodurch
--- das erste Rohr erzwungene mechanische Schwingungen, insb. Biegeschwingungen, mit einer oder mehreren durch das erste Treibersignal (e1) vorgegebenen Schwingungsfrequenzen
--- und das zweite Rohr mit wenigstens einer der Schwingungen des ersten Rohrs gekoppelte mechanische Schwingungen ausführt,
-- sowie den zweiten Schwingungserreger (32) zu bestromen, nämlich ein elektrisches zweites Treibersignal (e2) in den zweiten Schwingungserreger (32) einzuspeisen, wodurch
--- das zweite Rohr erzwungene mechanische Schwingungen, insb. Biegeschwingungen, mit einer oder mehreren durch das zweite Treibersignals (e2) vorgegebenen Schwingungsfrequenzen
--- und das erste Rohr mit Schwingungen des zweiten Rohrs gekoppelte mechanische Schwingungen ausführt;
- wobei die Meßsystem-Elektronik eingerichtet ist:
-- in einem ersten Betriebsmodus
-- sowohl das erste Treibersignal (e1) mit einer ersten Nutz-Stromkomponenten (eN1), nämlich einer hinsichtlich einer Stromstärke dominierenden oder einzigen sinusförmigen Stromkomponente mit einer (Wechselstrom-)Frequenz zu erzeugen und in den ersten Schwingungserreger einzuspeisen,
-- als auch das zweite Treibersignal (e2) mit wenigstens einer zweiten Nutz-Stromkomponenten (eN2), nämlich einer hinsichtlich einer Stromstärke dominierenden oder einzigen sinusförmigen Stromkomponente mit einer (Wechselstrom-)Frequenz zu erzeugen und in den zweiten Schwingungserreger einzuspeisen, derart,
--- daß das erste Rohr zumindest anteilig, insb. überwiegend, erste Nutzschwingungen, nämlich durch den (bestromten) ersten Schwingungserreger erzwungene mechanische Schwingungen mit wenigstens einer ersten Nutzfrequenz, nämlich einer der (Wechselstrom-)Frequenz der ersten Nutz-Stromkomponenten entsprechenden Schwingungsfrequenz und das zweite Rohr zumindest anteilig, insb. überwiegend, zweite Nutzschwingungen, nämlich durch den (bestromten) zweiten Schwingungserreger erzwungene mechanische Schwingungen mit wenigstens einer zweiten Nutzfrequenz, nämlich einer der (Wechselstrom-)Frequenz der zweiten Nutz-Stromkomponenten entsprechenden Schwingungsfrequenz ausführt, insb. derart, daß die ersten Nutzschwingungen und/oder zweiten Nutzschwingungen geeignet sind, im strömenden Meßstoff vom Massestrom abhängige Corioliskräfte zu bewirken,
--- und daß jedes der ersten und zweiten Schwingungssignale, jeweils eine erste bzw. zweite Nutz-Signalkomponente (sN1; sN2), nämlich eine jeweilige sinusförmige Signalkomponente mit einer der ersten Nutzfrequenz entsprechenden Frequenz und jedes der dritten und vierten Schwingungssignale, jeweils eine dritte bzw. vierte Nutz-Signalkomponente (sN3; sN4), nämlich eine jeweilige sinusförmige Signalkomponente mit einer der zweiten Nutzfrequenz entsprechenden Frequenz aufweist,
- und in einem, insb. dem ersten Betriebsmodus zeitlich vorausgehend und/oder zeitlich nachfolgend aktivierten, zweiten Betriebsmodus
-- zumindest vorübergehend das erste Treibersignal (e1) mit der ersten Nutz-Stromkomponenten (eN1) zu erzeugen und in den ersten Schwingungserreger einzuspeisen, insb. nämlich den ersten Schwingungserreger gleichermaßen wie im ersten Betriebsmodus zu bestromen, und zugleich kein die zweite Nutz-Stromkomponente enthaltendes Treibersignal in den zweiten Schwingungserreger einzuspeisen, derart,
--- daß das erste Rohr zumindest anteilig erste Nutzschwingungen und das zweite Rohr mit nämlichen ersten Nutzschwingungen gekoppelte mechanische Schwingungen mit der ersten Nutzfrequenz, gleichwohl keine zweiten Nutzschwingungen ausführt,
--- und daß jedes der ersten und zweiten Schwingungssignale, jeweils die Nutz-Signalkomponente und jedes der dritten und vierten Schwingungssignale jeweils eine Koppel-Signalkomponente (sK3; sk4), nämlich eine jeweilige sinusförmigen Signalkomponente mit einer der (Wechselstrom-)Frequenz der ersten Nutz-Stromkomponenten (eN1) entsprechenden Frequenz aufweist;
- und wobei die Meßsystem-Elektronik eingerichtet ist:
-- im ersten Betriebsmodus die ersten, zweiten, dritten und vierten Schwingungssignale zu empfangen und auszuwerten, nämlich anhand der Schwingungssignale, insb. nämlich zumindest anhand jeweils einer der Nutz-Signalkomponenten, die wenigstens ein physikalische Meßgröße (zeitlich aufeinanderfolgend) quantifizierende Meßwerte zu ermitteln,
-- sowie im zweiten Betriebsmodus zumindest das dritte Schwingungssignal und/oder das vierte Schwingungssignal, insb. sowohl das dritte Schwingungssignal als auch das vierte Schwingungssignal, zu empfangen und auszuwerten, insb. nämlich die ersten, zweiten, dritten und vierten Schwingungssignale zu empfangen und auszuwerten.

2. Meßsystem nach dem vorherigen Anspruch,
- wobei die Meßsystem-Elektronik (20) eingerichtet ist, im zweiten Betriebsmodus auch das erste Schwingungssignal und/oder das zweite Schwingungssignal zu empfangen und auszuwerten; und/oder
- wobei die Meßsystem-Elektronik eingerichtet ist, anhand zumindest eines der im zweiten Betriebsmodus empfangenen dritten und vierten Schwingungssignale, insb. nämlich jedem der dritten und vierten Schwingungssignale, die wenigstens ein physikalische Meßgröße (zeitlich aufeinanderfolgend) quantifizierende Meßwerte zu ermitteln, insb. auch mit anhand von im ersten Betriebsmodus empfangenen Schwingungssignalen ermittelten Meßwerten für nämliche Meßgröße zu vergleichen; und/oder
- wobei die Meßsystem-Elektronik eingerichtet ist, sowohl von wenigstens einem der im ersten Betriebsmodus, insb. nämlich sowohl im ersten Betriebsmodus als auch im zweiten Betriebsmodus, empfangenen ersten und zweiten Schwingungssignale, insb. von jedem der ersten und zweiten Schwingungssignale, die jeweilige Nutz-Signalkomponente zu gewinnen bzw. zu ermitteln als auch von wenigstens einem der im ersten Betriebsmodus empfangenen dritten und vierten Schwingungssignale, insb. von jedem der dritten und vierten Schwingungssignale, die jeweilige Nutz-Signalkomponente zu gewinnen bzw. zu ermitteln.

3. Meßsystem nach einem der vorherigen Ansprüche, wobei jede der Nutz-Signalkomponenten der ersten, zweiten, dritten und vierten Schwingungssignale jeweils einen von einem Massestrom des Meßstoffs abhängigen Phasenwinkel aufweist.

4. Meßsystem nach dem vorherigen Anspruch, wobei die Meßsystem-Elektronik (20) eingerichtet ist, zumindest im ersten Betriebsmodus anhand einer ersten Phasendifferenz, nämlich einer Differenz zwischen dem Phasenwinkel der Nutz-Signalkomponente des ersten Schwingungssignals und dem Phasenwinkel der Nutzkomponente des zweiten Schwingungssignals sowie anhand einer zweiten Phasendifferenz, nämlich einer Differenz zwischen dem Phasenwinkel der Nutz-Signalkomponente des dritten Schwingungssignals und dem Phasenwinkel der Nutz-Signalkomponente des vierten Schwingungssignals Massestrom-Meßwerte, nämlich den Massestrom des strömenden Meßstoffs repräsentierende Meßwerte zu ermitteln, insb. nämlich zu berechnen.

5. Meßsystem nach einem der vorherigen Ansprüche, wobei die Meßsystem-Elektronik eingerichtet ist, von wenigstens einem der im zweiten Betriebsmodus empfangenen dritten und vierten Schwingungssignale, insb. von jedem der dritten und vierten Schwingungssignale, die jeweilige Koppel-Signalkomponente zu gewinnen bzw. zu ermitteln.

6. Meßsystem nach einem der vorherigen Ansprüche, wobei jede der Koppel-Signalkomponenten der dritten und vierten Schwingungssignale jeweils einen von einem Massestrom des Meßstoffs abhängigen Phasenwinkel aufweist.

7. Meßsystem nach den Ansprüchen 3, 4, 5 und 6, wobei die Meßsystem-Elektronik (20) eingerichtet ist, zumindest im zweiten Betriebsmodus anhand der ersten Phasendifferenz sowie anhand einer dritten Phasendifferenz, nämlich einer Differenz zwischen dem Phasenwinkel der Koppel-Signalkomponente des dritten Schwingungssignals und dem Phasenwinkel der Koppel-Signalkomponente des vierten Schwingungssignals Massestrom-Meßwerte zu ermitteln, insb. nämlich zu berechnen und/oder mit anhand der ersten und zweiten Phasendifferenzen ermittelten Massestrom-Meßwerten zu vergleichen.

8. Meßsystem nach dem vorherigen Anspruch, wobei die Meßsystem-Elektronik (20) eingerichtet ist, die erste Phasendifferenz und die dritte Phasendifferenz miteinander zu vergleichen, und bei einer zu großen, nämlich einen dafür vorgegebenen Bezugswert überschreitenden Abweichung eine, insb. als (Störungs-)Alarm deklarierte, Meldung auszugeben.

9. Meßsystem nach einem der vorherigen Ansprüche, wobei die Meßsystem-Elektronik eingerichtet ist, anhand zumindest eines der im zweiten Betriebsmodus empfangenen dritten und vierten Schwingungssignale, insb. nämlich deren jeweiliger Koppel-Signalkomponente, zu detektieren, ob eine, insb. eine Funktionstüchtigkeit des Meßsystems vermindernde und/oder eine Fehlfunktion des Meßsystems bewirkende und/oder eine Integrität zumindest eines der ersten, zweiten, dritten und vierten Schwingungsmeßsignale bzw. daraus gewonner Meßwerte herabsetzende und/oder einen Meßfehler daraus gewonnener Meßwerte provozierende, Störung des Meßsystems, insb. aufgrund eines Belags auf einer Innenseite der Rohrwandung eines oder mehrerer der Rohre und/oder aufgrund einer Reduzierung einer Wandstärke der Rohrwandung eines oder mehrerer der Rohre und/oder aufgrund einer Alterung eines oder mehrerer der Schwingungssensoren und/oder Schwingungserreger, vorliegt, insb. mittels eines Vergleiches von anhand von im ersten Betriebsmodus empfangenen Schwingungssignalen ermittelten Meßwerten für die wenigstens eine Meßgröße mit anhand von im zweiten Betriebsmodus empfangenen Schwingungssignalen ermittelten Meßwerten für nämliche Meßgröße.

10. Meßsystem nach dem vorherigen Anspruch,
- wobei die Störung des Meßsystems eine, insb. irreversible, Veränderung einer oder mehrerer Schwingungseigenschaften der Rohranordnung, insb. aufgrund einer Reduzierung einer Wandstärke der Rohrwandung eines oder mehrerer der Rohre und/oder aufgrund einer plastischen Verformung eines oder mehrerer der Rohre und/oder aufgrund eines Belags auf einer Innenseite der Rohrwandung eines oder mehrerer der Rohre und/oder aufgrund eines Risses in der Rohrwandung eines oder mehrerer der Rohre, umfaßt;
- und/oder wobei die Störung des Meßsystems eine, insb. irreversible, Veränderung einer oder mehrerer Strömungseigenschaften der Rohranordnung, insb. aufgrund einer Reduzierung eines Strömungsquerschnitts der Rohranordnung, insb. infolge einer Verstopfung eines oder mehrerer der Rohre und/oder infolge eines Belags auf einer Innenseite der Rohrwandung eines oder mehrerer der Rohre, umfaßt;
- und/oder wobei die Störung des Meßsystems eine, insb. irreversible, Veränderung einer oder mehrerer elektro-mechanischer Wandlereigenschaften, insb. aufgrund einer Alterung eines oder mehrerer der Schwingungssensoren und/oder Schwingungserreger und/oder aufgrund einer Änderung einer jeweiligen mechanischer Verbindung zwischen einem oder mehreren Schwingungssensoren bzw. einem oder mehreren Schwingungserregern und dem jeweiligen Rohr, umfaßt.

11. Meßsystem nach Anspruch 4 und 9, wobei die Störung des Meßsystems eine, insb. irreversible, Veränderung eines (Skalen-)Nullpunkts des Meßsystems, der einer bei ruhendem Meßstoff gemessenen ersten und/oder zweiten Phasendifferenz entspricht, und/oder einer (Meß-)Empfindlichkeit des Meßsystems, die eine auf eine Änderung des Massenstroms bezogene Änderung der ersten und/oder zweiten Phasendifferenz entspricht, umfaßt.

12. Meßsystem nach einem der vorherigen Ansprüche, wobei die Meßsystem-Elektronik eingerichtet ist, anhand eines oder mehrerer der im zweiten Betriebsmodus empfangenen Schwingungsmeßsignale einen oder mehrere Kennzahlenwerte für wenigstens eine Meßsystem-Kennzahl (MK1) zu berechnen, die einen, insb. eine dem Meßsystem innewohnende, eine oder mehrere funktionelle Abhängigkeiten eines oder mehrerer der Schwingungsmeßsignale von einem oder mehreren der Treibersignale bestimmende Systemfunktion (Übertragungsfunktion) bzw. eine Funktionstüchtigkeit des Meßsystems bestimmenden, Betriebszustand charakterisiert, insb. derart, daß nämliche Meßsystem-Kennzahl von einem oder mehreren Parametern einer zwischen der ersten Nutz-Stromkomponenten des ersten Treibersignals (e1) und der Koppel-Signalkomponente des dritten und/oder vierten Schwingungsmeßsignals vermittelnden Systemfunktion des Meßsystems abhängig ist.

13. Meßsystem nach dem vorherigen Anspruch, wobei die Meßsystem-Elektronik (20) eingerichtet ist, einen oder mehrere Kennzahlenwerte für die Meßsystem-Kennzahl jeweils mit einem oder mehreren für die Meßsystem-Kennzahl, insb. vom Hersteller des Meßsystems und/oder bei der Herstellung und/oder einer Inbetriebnahme des Meßsystems, ermittelten Bezugswerten, insb. einem oder mehreren eine verminderte Funktionstüchtigkeit des Meßwandlers repräsentierenden Bezugswerten und/oder einem oder mehreren eine Fehlfunktion des Meßwandlers repräsentierenden Bezugswerten und/oder einem oder mehreren einen defekten Meßwandler repräsentierenden Bezugswerten, zu vergleichen, insb. eine Abweichung eines oder mehrere der Kennzahlenwerte von einem oder mehreren der Bezugswerte zu bewerten und/oder zu quantifizieren.

14. Meßsystem nach dem vorherigen Anspruch, wobei die Meßsystem-Elektronik (20) eingerichtet ist, zu ermitteln, ob eine oder mehrere Kennzahlenwerte für die Meßsystem-Kennzahl (MK1) größer als der wenigstens eine Bezugswert für die Meßsystem-Kennzahl ist, insb. nämlich falls ein oder mehrere Kennzahlenwerte für die Meßsystem-Kennzahl größer als ein oder mehrere eine verminderte Funktionstüchtigkeit des Meßwandlers repräsentierende Bezugswerte und/oder größer als ein oder mehrere eine Fehlfunktion des Meßwandlers repräsentierende Bezugswerte ist und/oder größer als ein oder mehrere ein nicht mehr intakten Meßwandler repräsentierenden Bezugswerten ist, eine dies signalisierende, insb. als (Störungs-)Alarm deklarierte, Meldung auszugeben.

15. Meßsystem nach einem der vorherigen Ansprüche, wobei die Meßsystem-Elektronik (20) einen nicht-flüchtigen elektronischen Datenspeicher (EEPROM) aufweist, der dafür eingerichtet ist, digitale Daten, insb. auch ohne eine angelegte Betriebsspannung, vorzuhalten, insb. nämlich einen oder mehrere vorab ermittelte Bezugswerte für die Meßsystem-Kennzahl zu speichern.

16. Meßsystem nach einem der Ansprüche 13 bis 14 jeweils in Verbindung mit Anspruch 15,
- wobei im elektronischen Datenspeicher ein oder mehrere, insb. vom Hersteller des Meßsystems und/oder bei der Herstellung des Meßsystems und/oder im Betrieb des Meßsystems vorab ermittelte, Bezugswerte für die Meßsystem-Kennzahl, insb. nämlich ein oder mehrere eine verminderte Funktionstüchtigkeit des Meßwandlers repräsentierende Bezugswerte und/oder nämlich ein oder mehrere eine Fehlfunktion des Meßwandlers repräsentierende Bezugswerte, gespeichert sind,
- und wobei die Meßsystem-Elektronik (20) eingerichtet ist, einen oder mehrere Kennzahlenwerte für die Meßsystem-Kennzahl jeweils mit einem oder mehreren im Datenspeicher gespeicherten Bezugswerten für die Meßsystem-Kennzahl zu vergleichen.

17. Meßsystem nach einem der vorherigen Ansprüche,
- wobei die Meßsystem-Elektronik (20) eingerichtet ist, die erste Nutz-Stromkomponente des ersten Treibersignals mit einer (Wechselstrom-)Frequenz bereitzustellen, die von einer Resonanzfrequenz, fr1, des ersten Rohrs um weniger als 1% nämlicher Resonanzfrequenz, fr1, und/oder um weniger als 1 Hz abweicht; und/oder
- wobei die Meßsystem-Elektronik (20) eingerichtet ist, die zweite Nutz-Stromkomponente des zweiten Treibersignals mit einer (Wechselstrom-)Frequenz bereitzustellen, die von einer Resonanzfrequenz, fr2, des zweiten Rohrs um weniger als 1% nämlicher Resonanzfrequenz, fr2, und/oder um weniger als 1 Hz abweicht; und/oder
- wobei die Meßsystem-Elektronik (20) eingerichtet ist, die des Nutz-Stromkomponente des ersten Treibersignals mit einer (Wechselstrom-)Frequenz bereitzustellen, die von einer Resonanzfrequenz, fr2, des zweiten Rohrs um weniger als 1% nämlicher Resonanzfrequenz, fr2, und/oder um weniger als 1 Hz abweicht; und/oder
- wobei die Meßsystem-Elektronik (20) eingerichtet ist, die zweite Nutz-Stromkomponente des zweiten Treibersignals mit einer (Wechselstrom-)Frequenz bereitzustellen, die von einer Resonanzfrequenz, fr1, des ersten Rohrs um weniger als 1% nämlicher Resonanzfrequenz, fr1, und/oder um weniger als 1 Hz abweicht; und/oder
- wobei die ersten und zweiten Rohre wenigstens eine gemeinsame Resonanzfrequenz, fr12, aufweisen, und wobei die Meßsystem-Elektronik eingerichtet ist, die ersten und zweiten Nutz-Stromkomponente des ersten bzw. zweiten Treibersignals jeweils mit einer (Wechselstrom-)Frequenz bereitzustellen, die von nämlicher gemeinsamen Resonanzfrequenz, fr12, der ersten und zweiten Rohre um weniger als 1% nämlicher Resonanzfrequenz, fr12, und/oder um weniger als 1 Hz abweicht, insb. derart, daß zwischen der ersten und zweiten Nutz-Stromkomponenten eine Phasendifferenz von 180° eingestellt ist; und/oder
- wobei dem Meßwandler ein natürlicher Biegeschwingungsmode, insb. ein Biegeschwingungsgrundmode, innewohnt, in dem die ersten und zweiten Rohre gegenphasige mechanische Schwingungen ausführen können bzw. ausführen, und wobei die Meßsystem-Elektronik eingerichtet ist, im ersten Betriebsmodus nämliche gegenphasigen mechanischen Schwingungen erzwingende erste und zweite Treibersignale in die ersten bzw. zweiten Schwingungserreger einzuspeisen, insb. nämlich die ersten und zweiten Nutz-Stromkomponenten mit einer (Wechselstrom-)Frequenz bereitzustellen, die von einer Resonanzfrequenz, fr12, des Biegeschwingungsmodes um weniger als 1% nämlicher Resonanzfrequenz und/oder um weniger als 1 Hz abweicht; und/oder
- wobei die Meßsystem-Elektronik (20) eingerichtet ist, in einem, insb. dem zweiten Betriebsmodus zeitlich nachfolgend aktivierten, dritten Betriebsmodus:
-- sowohl zumindest vorübergehend das zweite Treibersignal (e2) mit der zweiten Nutz-Stromkomponenten (eN2) zu erzeugen und in den zweiten Schwingungserreger einzuspeisen, insb. nämlich den zweiten Schwingungserreger gleichermaßen wie im ersten Betriebsmodus zu bestromen, und zugleich kein die erste Nutz-Stromkomponente enthaltendes Treibersignal in den ersten Schwingungserreger einzuspeisen, derart,
--- daß das zweite Rohr zumindest anteilig zweite Nutzschwingungen und das erste Rohr mit nämlichen zweiten Nutzschwingungen gekoppelte mechanische Schwingungen mit der zweiten Nutzfrequenz, gleichwohl keine ersten Nutzschwingungen ausführt,
--- und daß jedes der dritten und vierten Schwingungssignale, jeweils die Nutz-Signalkomponente und jedes der ersten und zweiten Schwingungssignale jeweils eine
Koppel-Signalkomponente (sK1; sk2), nämlich eine jeweilige sinusförmigen Signalkomponente mit einer der (Wechselstrom-)Frequenz der zweiten Nutz-Stromkomponenten (eN2) entsprechenden Frequenz aufweist,
-- als auch zumindest das erste Schwingungssignal und/oder das zweite Schwingungssignal, insb. sowohl das erste Schwingungssignal als auch das zweite Schwingungssignal, zu empfangen und auszuwerten, insb. nämlich die ersten, zweiten, dritten und vierten Schwingungssignale zu empfangen und auszuwerten.

18. Meßsystem nach einem der vorherigen Ansprüche, weiters umfassend ein, insb. als ein Wandler-Schutzgehäuse ausgebildetes, Trägergerüst (100), wobei Trägergerüst und Rohranordnung mittels deren ersten und zweiten Strömungsteiler aneinander, insb. wieder lösbar, befestigt ist.

19. Meßsystem nach dem vorherigen Anspruch,
- wobei die ersten und zweiten Schwingungserreger (31) mechanisch mit dem Trägergerüst verbunden sind; und/oder
- wobei die ersten, zweiten, dritten und vierten Schwingungssensoren mechanisch mit dem Trägergerüst verbunden sind.

20. Meßsystem nach einem Ansprüche 1 bis 18,
- wobei sowohl der erste Strömungsteiler (21) als auch der zweite Strömungsteiler (22) jeweils, insb. genau, vier Strömungsöffnungen aufweist,
- und wobei die Rohranordnung ein, insb. zumindest abschnittsweise gekrümmtes und/oder zumindest abschnittsweise gerades und/oder zum ersten Rohr zumindest abschnittsweise paralleles, drittes Rohr (113) und ein, insb. zumindest abschnittsweise gekrümmtes und/oder zumindest abschnittsweise gerades und/oder zum dritten Rohr baugleiches und/oder zum dritten Rohr zumindest abschnittsweise paralleles, viertes Rohr (114) aufweist,
-- wobei jedes der dritten und vierten Rohre der Rohranordnung sich jeweils von einem jeweiligen ersten Ende des jeweiligen Rohrs bis zu einem jeweiligen zweiten Ende nämlichen Rohrs mit einer jeweiligen Rohrlänge erstreckt und jeweils ein von einer, insb. metallischen, Rohrwandung umschlossenes, sich jeweils vom jeweiligen ersten Ende des jeweiligen Rohrs bis zum jeweiligen zweiten Ende nämlichen Rohrs erstreckenden Lumen aufweist,
-- wobei jedes der dritten und vierten Rohre der Rohranordnung jeweils an jeden der ersten und zweiten Strömungsteiler angeschlossen ist, derart, daß
--- das dritte Rohr mit dessen ersten Ende in eine dritte Strömungsöffnung des ersten Strömungsteilers (21) und mit dessen zweiten Ende in eine dritte Strömungsöffnung des zweiten Strömungsteilers (22)
--- und das vierte Rohr mit dessen ersten Ende in eine vierte Strömungsöffnung des ersten Strömungsteilers (21) und mit dessen zweiten Ende in eine vierte Strömungsöffnung des zweiten Strömungsteilers (22) mündet,
--- und wobei jedes der dritten und vierten Rohre der Rohranordnung jeweils eingerichtet ist, von Meßstoff durchströmt und währenddessen vibrieren gelassen zu werden.

21. Meßsystem nach dem vorherigen Anspruch,
- wobei die dritten und vierten Rohre der Rohranordnung zumindest über die ersten und zweiten Strömungsteiler miteinander mechanisch gekoppelt sind, derart,
-- daß erzwungene mechanische Schwingungen des dritten Rohrs damit gekoppelte mechanische Schwingungen des vierten Rohrs und erzwungene mechanische Schwingungen des vierten Rohrs damit gekoppelte mechanische Schwingungen des dritten Rohrs bewirken; und/oder
-- daß erzwungene mechanische Schwingungen der ersten und dritten Rohre, insb. gegengleiche Biegeschwingungen der ersten und dritten Rohre, damit gekoppelte mechanische Schwingungen jedes der zweiten und vierten Rohre, insb. gegengleiche Biegeschwingungen der zweiten und vierten Rohre, und erzwungene mechanische Schwingungen der zweiten und vierten Rohre, insb. gegengleiche Biegeschwingungen der zweiten und vierten Rohre, damit gekoppelte mechanische Schwingungen jedes der ersten und dritten Rohre, insb. gegengleiche Biegeschwingungen der ersten und dritten Rohre, bewirken; und/oder
-- daß erzwungene mechanische Schwingungen jedes der ersten, zweiten, dritten und vierten Rohr damit jeweils gekoppelte mechanische Schwingungen jedes der anderen ersten, zweiten, dritten bzw. vierten Rohr bewirken; und/oder
- wobei der erste Schwingungserreger (31) eingerichtet ist, mechanische Schwingungen der ersten und dritten Rohre, insb. differenziell, anzuregen und wobei der zweite Schwingungserreger (32) eingerichtet ist, mechanische Schwingungen der zweiten und vierten Rohre, insb. differenziell, anzuregen; und/oder
- wobei der erste Schwingungserreger (31) mechanisch sowohl mit dem ersten Rohr als auch mit dem dritten Rohr verbunden ist, und wobei der zweite Schwingungserreger (32) mechanisch sowohl mit dem zweiten Rohr als auch mit dem vierten Rohr verbunden ist; und/oder
- wobei jeder der ersten und zweiten Schwingungssensoren jeweils eingerichtet ist, Schwingungsbewegungen der ersten und dritten Rohre, insb. differenziell, zu erfassen, derart, daß jedes der ersten und zweiten Schwingungsmeßsignale, insb. gegenphasige, Schwingungsbewegungen der ersten und dritten Rohre repräsentiert, und wobei jeder der dritten und vierten Schwingungssensoren jeweils eingerichtet ist, Schwingungsbewegungen der zweiten und vierten Rohre, insb. differenziell, zu erfassen, derart, daß jedes der dritten und vierten Schwingungsmeßsignale, insb. gegenphasige, Schwingungsbewegungen der zweiten und vierten Rohre repräsentiert; und/oder
- wobei die ersten und zweiten Schwingungssensoren mechanisch jeweils sowohl mit dem ersten Rohr als auch dem dritten Rohr verbunden sind und wobei die dritten und vierten Schwingungssensoren mechanisch jeweils sowohl mit dem zweiten Rohr als auch dem vierten Rohr verbunden sind; und/oder
- wobei die ersten, zweiten, dritten und vierten Rohre lediglich paarweise baugleich sind, insb. derart, daß das erste Rohr lediglich zum dritten Rohr baugleich ist und daß das zweite Rohr lediglich zum vierten Rohr baugleich ist; und/oder
- wobei jedes der vier Rohre ein Kaliber aufweist, das gleich einem Kaliber jedes der anderen Rohre ist; und/oder
- wobei die Rohrwandung jedes der vier Rohre eine Wandstärke aufweist, die gleich einer Wandstärke jedes der anderen Rohre ist; und/oder
- wobei die Rohranordung ein, insb. vom zweiten Strömungsteiler (22) weiter entfernt als vom ersten Strömungsteiler (21) positioniertes, mit jedem der Rohre mechanisch verbundenes, insb. plattenförmiges, erstes Kopplerelement sowie ein, insb. vom ersten Strömungsteiler (21) weiter entfernt als vom zweiten Strömungsteiler (22) positioniertes, mit jedem der Rohre mechanisch verbundenes, insb. plattenförmiges und/oder zum ersten Kopplerelement baugleiches, zweites Kopplerelement aufweist.

22. Meßsystem nach einem der vorherigen Ansprüche, weiters umfassend: ein, insb. an einem Trägergerüst des Meßwandlers befestigtes, Elektronik-Schutzgehäuse (200) für die Meßsystem-Elektronik (20).

23. Verwenden eines Meßsystems gemäß einem der vorherigen Ansprüche zum Messen wenigstens eines Strömungsparameters, insb. eines Massestroms und/oder eines Volumenstroms, und/oder wenigstens eines Stoffparameters, insb. einer Dichte und/oder einer Viskosität, eines, insb. in einer Rohrleitung strömenden, fluiden Meßstoffs, insb. eines Gases, einer Flüssigkeit oder einer Dispersion.

## Claims

1. Vibronic measuring system, in particular a Coriolis mass flow meter or Coriolis mass flow/density meter, for measuring and/or monitoring at least one, in particular time-variable, flow parameter, in particular a mass flow, a volume flow and/or a flow velocity, and/or for measuring and/or monitoring at least one, in particular time-variable, substance parameter, in particular a density and/or a viscosity, of a flowing measured substance, in particular a gas, a liquid or a dispersion, which measuring system, in particular a measuring system configured as an in-line measuring device and/or measuring device in compact construction, comprises:
- a measuring transducer (10)
- with a tube arrangement for conveying the flowing measured substance,
- with an exciter arrangement for converting electrical power into mechanical power serving for exciting and maintaining forced mechanical oscillations of the tube arrangement,
- and with a sensor arrangement for registering mechanical oscillations of the tube arrangement and for providing oscillation measurement signals each representing oscillatory movements of the tube arrangement;
- and measuring system electronics (20) electrically coupled to the measuring transducer (10), that is to say both to its exciter arrangement and to its sensor arrangement, in particular by means of electrical connection lines, and formed, in particular, by means of at least one microprocessor and/or arranged in an electronics protective housing, for operating the measuring transducer and for evaluating oscillation measurement signals delivered from the measuring transducer;
- wherein the tube arrangement has
- a first flow divider (21), in particular serving as a line branching and/or on the inlet side, with at least two flow openings,
- a second flow divider (22), in particular of identical structure to the first flow divider (21) and/or serving as a line junction and/or on the outlet side, with at least two flow openings
- and a first tube (111), in particular at least sectionally bent and/or at least sectionally straight, and at least a second tube (112), in particular at least sectionally bent and/or at least sectionally straight and/or of identical structure to the first tube and/or at least sectionally parallel to the first tube,
- wherein each of the first and second tubes of the tube arrangement extends in each case from a respective first end of the respective tube to a respective second end of said tube with a respective tube length and has in each case a lumen surrounded by an, in particular metal, tube wall and extending in each case from the respective first end of the respective tube to the respective second end of said tube,
- wherein each of the first and second tubes of the tube arrangement is connected in each case to each of the first and second flow dividers, such that
- the first tube opens with its first end into a first flow opening of the first flow divider (21) and with its second end into a first flow opening of the second flow divider (22)
- and the second tube opens with its first end into a second flow opening of the first flow divider (21) and with its second end into a second flow opening of the second flow divider (22),
- wherein the first and second tubes of the tube arrangement are mechanically coupled to one another at least via the first and second flow dividers such that forced mechanical oscillations of the first tube therefore bring about coupled mechanical oscillations of the second tube and forced mechanical oscillations of the second tube therefore bring about coupled mechanical oscillations of the first tube;
- and wherein each of the first and second tubes of the tube arrangement in each case is adapted to be flowed through by measured substance and during that to be caused to vibrate;
- wherein the exciter arrangement has two, in particular electrodynamic and/or structurally identical, oscillation exciters (31, 32) of which
- a first oscillation exciter (31) is mechanically connected to the first tube, in particular positioned centrally on the first tube,
- and a second oscillation exciter (32) is mechanically connected to the second tube, in particular positioned centrally on the second tube,
- wherein each of the first and second oscillation exciters is in each case adapted to convert electrical power of a time-variable electrical current into mechanical power, in particular such that at a respective point of engagement formed by means of the respective oscillation exciter on the tube mechanically connected to it in each case, a time-variable driving force acts on the first or second tube;
- wherein the sensor arrangement has at least four, in particular electrodynamic and/or structurally identical and/or spaced apart from one another, oscillation sensors, of which
- a first oscillation sensor (41) and a second oscillation sensor (42) are positioned spaced apart from one another, in particular symmetrically to the first oscillation exciter (31), on the first tube, that is to say, in particular, at least partially mechanically connected to the first tube,
- and a third oscillation sensor (43) and a fourth oscillation sensor (44) are positioned spaced apart from one another, in particular symmetrically to the second oscillation exciter (32), on the second tube, that is to say, in particular, at least partially mechanically connected to the second tube;
- wherein each of the first and second oscillation sensors is in each case adapted to register oscillatory movements of the first tube and to convert them into an, in particular electrical or optical, first or second oscillation measurement signal representing said oscillatory movements, in particular such that each of the first and second oscillation measurement signals in each case contains one or more sinusoidal signal components with in each case a frequency corresponding to an oscillation frequency of oscillatory movements of the first tube;
- wherein each of the third and fourth oscillation sensors is in each case adapted to register oscillatory movements of the second tube and to convert them into an, in particular electrical or optical, third or fourth oscillation measurement signal representing said oscillatory movements, in particular such that each of the third and fourth oscillation measurement signals in each case contains one or more sinusoidal signal components with in each case a frequency corresponding to an oscillation frequency of oscillatory movements of the second tube;
- wherein the measuring system electronics (20) are adapted
- to supply electrical current to the first oscillation exciter (31), that is to say to supply an electrical first driver signal (e1) to the first oscillation exciter (31), whereby
- the first tube executes forced mechanical oscillations, in particular bending oscillations, with one or more oscillation frequencies predetermined by the first driver signal (e1),
- and the second tube executes mechanical oscillations coupled with at least one of the oscillations of the first tube,
- and to supply electrical current to the second oscillation exciter (32), that is to say to supply an electrical second driver signal (e2) to the second oscillation exciter (32), whereby
- the second tube executes forced mechanical oscillations, in particular bending oscillations, with one or more oscillation frequencies predetermined by the second driver signal (e2),
- and the first tube executes mechanical oscillations coupled with oscillations of the second tube;
- wherein the measuring system electronics are adapted:
- in a first operating mode
- to produce both the first driver signal (e1) with a first useful current component (eN1), that is to say a current component that is dominating as regards a current strength or a single sinusoidal current component, with an (alternating current) frequency, and to supply this to the first oscillation exciter,
- and to produce the second driver signal (e2) with at least a second useful current component (eN2), that is to say a current component that is dominating as regards a current strength or a single sinusoidal current component, with an (alternating current) frequency, and to supply this to the second oscillation exciter such
- that the first tube executes at least partially, in particular predominantly, first useful oscillations, that is to say mechanical oscillations forced by the first oscillation exciter (supplied with current) and with at least a first useful frequency, that is to say an oscillation frequency corresponding to the (alternating current) frequency of the first useful current component, and the second tube executes at least partially, in particular predominantly, second useful oscillations, that is to say mechanical oscillations forced by the second oscillation exciter (supplied with current) and with at least a second useful frequency, that is to say an oscillation frequency corresponding to the (alternating current) frequency of the second useful current component, such that, in particular, the first useful oscillations and/or second useful oscillations are suitable for bringing about in the flowing measured substance Coriolis forces dependent on the mass flow,
- and that each of the first and second oscillation signals has in each case a first or second useful signal component (sN1;sN2), that is to say a respective sinusoidal signal component with a frequency corresponding to the first useful frequency and each of the third and fourth oscillation signals has in each case a third or fourth useful signal component (sN3;sN4), that is to say a respective sinusoidal signal component with a frequency corresponding to the second useful frequency;
- and in a second operating mode, in particular activated before and/or after the first operating mode
- at least temporarily to produce the first driver signal (e1) with the first useful current component (eN1) and to supply it to the first oscillation exciter, that is to say, in particular, to supply electrical current to the first oscillation exciter in the same way as in the first operating mode, and at the same time not to supply a driver signal containing the second useful current component to the second oscillation exciter, such
- that the first tube executes at least partially first useful oscillations and the second tube executes mechanical oscillations coupled with said first useful oscillations and having the first useful frequency, although no second useful oscillations,
- and that each of the first and second oscillation signals has in each case the useful signal component and each of the third and fourth oscillation signals has in each case a coupling signal component (sK3;sk4), that is to say a respective sinusoidal signal component with a frequency corresponding to the (alternating current) frequency of the first useful current component (eN1);
- and wherein the measuring system electronics are adapted:
- in the first operating mode to receive and to evaluate the first, second, third and fourth oscillation signals, that is to say by reference to the oscillation signals, in particular at least reference to in each case one of the useful signal components, to ascertain measured values quantifying the at least one physical measured variable (sequentially in time),
- and in the second operating mode to receive and to evaluate at least the third oscillation signal and/or the fourth oscillation signal, in particular both the third oscillation signal and the fourth oscillation signal, that is to say in particular, to receive and to evaluate the first, second, third and fourth oscillation signals.

2. Measuring system according to the preceding claim,
- wherein the measuring system electronics (20) are adapted, in the second operating mode also to receive and to evaluate the first oscillation signal and/or the second oscillation signal; and/or
- wherein the measuring system electronics are adapted, by reference to at least one of the third and fourth oscillation signals received in the second operating mode, that is to say, in particular, each of the third and fourth oscillation signals, to ascertain measured values quantifying the at least one physical measured variable (sequentially in time), in particular also to compare these measured values with measured values ascertained for said measured variable by reference to oscillation signals received in the first operating mode;
and/or
- wherein the measuring system electronics are adapted to obtain or to ascertain the respective useful signal component both from at least one of the first and second oscillation signals received in the first operating mode, that is to say, in particular, both in the first operating mode and in the second operating mode, in particular from each of the first and second oscillation signals, and to obtain or to ascertain the respective useful signal component from at least one of the third and fourth oscillation signals received in the first operating mode, in particular from each of the third and fourth oscillation signals.

3. Measuring system according to one of the preceding claims, wherein each of the useful signal components of the first, second, third and fourth oscillation signals has in each case a phase angle dependent on a mass flow of the measured substance.

4. Measuring system according to the preceding claim, wherein the measuring system electronics (20) are adapted, at least in the first operating mode, to ascertain, that is to say, in particular, to calculate mass flow measured values, that is to say measured values representing the mass flow of the flowing measured substance, by reference to a first phase difference, that is to say a difference between the phase angle of the useful signal component of the first oscillation signal and the phase angle of the useful component of the second oscillation signal as well as by reference to a second phase difference, that is to say a difference between the phase angle of the useful signal component of the third oscillation signal and the phase angle of the useful signal component of the fourth oscillation signal.

5. Measuring system according to one of the preceding claims, wherein the measuring system electronics are adapted to obtain or to ascertain the respective coupling signal component from at least one of the third and fourth oscillation signals received in the second operating mode, in particular from each of the third and fourth oscillation signals.

6. Measuring system according to one of the preceding claims, wherein each of the coupling signal components of the third and fourth oscillation signals in each case has a phase angle dependent on a mass flow of the measured substance.

7. Measuring system according to claims 3, 4, 5 and 6, wherein the measuring system electronics (20) are adapted, at least in the second operating mode, to ascertain, that is to say, in particular, to calculate mass flow measured values by reference to the first phase difference and by reference to a third phase difference, that is to say a difference between the phase angle of the coupling signal component of the third oscillation signal and the phase angle of the coupling signal component of the fourth oscillation signal, and/or to compare these with mass flow measured values ascertained by reference to the first and second phase differences.

8. Measuring system according to the preceding claim, wherein the measuring system electronics (20) are adapted to compare the first phase difference and the third phase difference with one another, and in the case of too large a difference, that is to say a difference exceeding a reference value predetermined therefor, to output a report, in particular declared as a (disturbance) alarm.

9. Measuring system according to one of the preceding claims, wherein the measuring system electronics are adapted, by reference to at least one of the third and fourth oscillation signals received in the second operating mode, that is to say, in particular, their respective coupling signals component, to detect whether there is a disturbance of the measuring system, in particular a disturbance lessening an ability of the measuring system to function and/or bringing about a malfunctioning of the measuring system and/or reducing an integrity of at least one of the first, second, third and fourth oscillation measurement signals, or measured values obtained therefrom and/or provoking a measurement error of measured values obtained therefrom, in particular a disturbance due to a deposit on an inside of the tube wall of one or more of the tubes and/or due to a reduced thickness of the tube wall of one or more of the tubes and/or due to an aging of one or more of the oscillation sensors and/or oscillation exciters, in particular by means of a comparison of measured values for the at least one measured variable ascertained by reference to oscillation signals received in the first operating mode with measured values for said measured variable ascertained by reference to oscillation signals received in the second operating mode.

10. Measuring system according to the preceding claim,
- wherein the disturbance of the measuring system comprises an, in particular irreversible, change of one or more oscillation characteristics of the tube arrangement, in particular due to a reduced thickness of the tube wall of one or more of the tubes and/or due to a plastic deformation of one or more of the tubes and/or due to a deposit on an inside of the tube wall of one or more of the tubes and/or due to a crack in the tube wall of one or more of the tubes;
- and/or wherein the disturbance of the measuring system comprises an, in particular irreversible, change of one or more flow characteristics of the tube arrangement, in particular due to a reduced flow cross section of the tube arrangement, in particular as a result of a plugging of one or more of the tubes and/or as a result of a deposit on an inside of the tube wall of one or more of the tubes;
- and/or wherein the disturbance of the measuring system comprises an, in particular irreversible, change of one or more electromechanical transducer properties, in particular due to an aging of one or more of the oscillation sensors and/or oscillation exciters and/or due to a change of a respective mechanical connection between one or more oscillation sensors or one or more oscillation exciters and the respective tube.

11. Measuring system according to claims 4 and 9, wherein the disturbance of the measuring system comprises an, in particular irreversible, change of a (scale) zero point of the measuring system that corresponds to a first and/or second phase difference measured at resting measured substance, and/or a (measuring) sensitivity of the measuring system that corresponds to a change of the first and/or second phase difference by reference to a change of the mass flow.

12. Measuring system according to one of the preceding claims, wherein the measuring system electronics are adapted, by reference to one or more of the oscillation measurement signals received in the second operating mode, to calculate one or more values of at least one measuring system characterizing number (MK1) that characterizes an operating state, in particular a system function (transfer function) inherent in the measuring system and determining one or more functional dependencies of one or more of the oscillation measurement signals of one or more of the driver signals, or determining a functionality of the measuring system, in particular such that said measuring system characterizing number is dependent on one or more parameters of a system function of the measuring system mediating between the first useful current component of the first driver signal (e1) and the coupling signal component of the third and/or fourth oscillation measurement signal.

13. Measuring system according to the preceding claim, wherein the measuring system electronics (20) are adapted to compare one or more values for the measuring system characterizing number in each case with one or more reference values ascertained for the measuring system characterizing number, in particular by the manufacturer of the measuring system and/or during manufacture and/or a start-up of the measuring system, in particular one or more reference values representing a lessened functionality of the measuring transducer and/or one or more reference values representing a malfunctioning of the measuring transducer and/or one or more reference values representing a defective measuring transducer, in particular to evaluate and/or to quantify a deviation of one or more of the characterizing number values from one or more of the reference values.

14. Measuring system according to the preceding claim, wherein the measuring system electronics (20) are adapted to ascertain whether one or more values for the measuring system characterizing number (MK1) is greater than the at least one reference value for the measuring system characterizing number, that is to say, in particular, if one or more values for the measuring system characterizing number is greater than one or more reference values representing a lessened functionality of the measuring transducer and/or greater than one or more reference values representing a malfunctioning of the measuring transducer and/or greater than one or more reference values representing a no longer intact measuring transducer, to output a report signaling this, in particular declared as a (disturbance) alarm.

15. Measuring system according to one of the preceding claims, wherein the measuring system electronics (20) have a non-volatile electronic data memory (EEPROM) that is adapted to provide digital data, in particular also without an applied operating voltage, that is to say, in particular, to store one or more previously ascertained reference values for the measuring system characterizing number.

16. Measuring system according to one of claims 13 to 14 in each case in conjunction with claim 15,
- wherein there are stored in the electronic data memory one or more reference values for the measuring system characterizing number, in particular previously ascertained by the manufacturer of the measuring system and/or during manufacture of the measuring system and/or during operation of the measuring system, that is to say, in particular, one or more reference values representing a lessened functionality of the measuring transducer and/or that is to say one or more reference values representing a malfunctioning of the measuring transducer,
- and wherein the measuring system electronics (20) are adapted to compare one or more values for the measuring system characterizing number in each case with one or more reference values for the measuring system characterizing number stored in the data memory.

17. Measuring system according to one of the preceding claims,
- wherein the measuring system electronics (20) are adapted to provide the first useful current component of the first driver signal with an (alternating current) frequency that differs from a resonant frequency, fr1, of the first tube by less than 1% of said resonant frequency, fr1, and/or by less than 1 Hz; and/or
- wherein the measuring system electronics (20) are adapted to provide the second useful current component of the second driver signal with an (alternating current) frequency that differs from a resonant frequency, fr2, of the second tube by less than 1% of said resonant frequency, fr2, and/or by less than 1 Hz; and/or
- wherein the measuring system electronics (20) are adapted to provide the useful current component of the first driver signal with an (alternating current) frequency that differs from a resonant frequency, fr2, of the second tube by less than 1% of said resonant frequency, fr2, and/or by less than 1 Hz; and/or
- wherein the measuring system electronics (20) are adapted to provide the second useful current component of the second driver signal with an (alternating current) frequency that differs from a resonant frequency, fr1, of the first tube by less than 1% of said resonant frequency, fr1, and/or by less than 1 Hz; and/or
- wherein the first and second tubes have at least one common resonant frequency, fr12, and wherein the measuring system electronics are adapted to provide the first and second useful current components of the first and second driver signals in each case with an (alternating current) frequency that differs from said common resonant frequency, fr12, of the first and second tubes by less than 1% of said resonant frequency, fr12, and/or by less than 1 Hz, in particular such that a phase difference of 180° is set between the first and second useful current components; and/or
- wherein the measuring transducer has a natural bending oscillation mode, in particular a bending oscillation basic mode, in which the first and second tubes execute or can execute opposite phase mechanical oscillations, and wherein the measuring system electronics are adapted in the first operating mode to supply first and second driver signals forcing said opposite phase mechanical oscillations to the first and second oscillation exciters, that is to say, in particular, and to provide the first and second useful current components with an (alternating current) frequency that differs from a resonant frequency, fr12, of the bending oscillation mode by less than 1% of said resonant frequency and/or by less than 1 Hz; and/or
- wherein the measuring system electronics (20) are adapted in a third operating mode, in particular activated following the second operating mode in time:
- both at least temporarily to produce the second driver signal (e2) with the second useful current component (eN2) and to supply it to the second oscillation exciter, that is to say, in particular, to supply electrical current to the second oscillation exciter in the same way as in the first operating mode, and at the same time not to supply a driver signal containing the first useful current component to the first oscillation exciter, such
- that the second tube executes at least partially second useful oscillations and the first tube executes mechanical oscillations coupled with said second useful oscillations and having the second useful frequency, though executing no first useful oscillations,
- and that each of the third and fourth oscillation signals has in each case the useful signal component and each of the first and second oscillation signals has in each case a coupling signal component (sK1; sk2), that is to say a respective sinusoidal signal component with a frequency corresponding to the (alternating current) frequency of the second useful current component (eN2),
- and to receive and to evaluate at least the first oscillation signal and/or the second oscillation signal, in particular both the first oscillation signal and the second oscillation signal, that is to say, in particular, to receive and to evaluate the first, second, third and fourth oscillation signals.

18. Measuring system according to one of the preceding claims, further comprising a support structure (100), in particular embodied as a transducer protective housing, wherein support structure and tube arrangement are secured, in particular releasably, to one another by means of their first and second flow dividers.

19. Measuring system according to the preceding claim,
- wherein the first and second oscillation exciters (31) are mechanically connected to the support structure; and/or
- wherein the first, second, third and fourth oscillation sensors are mechanically connected to the support structure.

20. Measuring system according to one of claims 1 to 18,
- wherein both the first flow divider (21) and the second flow divider (22) in each case have, in particular precisely, four flow openings,
- and wherein the tube arrangement has a third tube (113), in particular at least sectionally bent and/or at least sectionally straight and/or at least sectionally parallel to the first tube, and a fourth tube (114), in particular at least sectionally bent and/or at least sectionally straight and/or structurally identical to the third tube and/or at least sectionally parallel to the third tube,
- wherein each of the third and fourth tubes of the tube arrangement extends in each case from a respective first end of the respective tube to a respective second end of said tube with a respective tube length and in each case has a lumen surrounded by an, in particular metal, tube wall and extending in each case from the respective first end of the respective tube to the respective second end of said tube,
- wherein each of the third and fourth tubes of the tube arrangement is in each case connected to each of the first and second flow dividers, such that
- the third tube opens with its first end into a third flow opening of the first flow divider (21) and with its second end into a third flow opening of the second flow divider (22)
- and the fourth tube opens with its first end into a fourth flow opening of the first flow divider (21) and with its second end into a fourth flow opening of the second flow divider (22),
- and wherein each of the third and fourth tubes of the tube arrangement is in each case adapted to be flowed through by measured substance and during that to be caused to vibrate.

21. Measuring system according to the preceding claim,
- wherein the third and fourth tubes of the tube arrangement are mechanically coupled to one another at least via the first and second flow dividers, such
- that forced mechanical oscillations of the third tube therefore bring about coupled mechanical oscillations of the fourth tube and forced mechanical oscillations of the fourth tube therefore bring about coupled mechanical oscillations of the third tube; and/or
- that forced mechanical oscillations of the first and third tubes, in particular opposite and equal bending oscillations of the first and third tubes, therefore bring about coupled mechanical oscillations of each of the second and fourth tubes, in particular opposite and equal bending oscillations of the second and fourth tubes, and forced mechanical oscillations of the second and fourth tubes, in particular opposite and equal bending oscillations of the second and fourth tubes, therefore bring about coupled mechanical oscillations of each of the first and third tubes, in particular opposite and equal bending oscillations of the first and third tubes; and/or
- that forced mechanical oscillations of each of the first, second, third and fourth tubes therefore in each case bring about coupled mechanical oscillations of each of the other first, second, third, and fourth tubes; and/or
- wherein the first oscillation exciter (31) is adapted to excite mechanical oscillations of the first and third tubes, in particular differentially, and wherein the second oscillation exciter (32) is adapted to excite mechanical oscillations of the second and fourth tubes, in particular differentially; and/or
- wherein the first oscillation exciter (31) is mechanically connected both to the first tube and to the third tube, and wherein the second oscillation exciter (32) is mechanically connected both to the second tube and to the fourth tube; and/or
- wherein each of the first and second oscillation sensors is in each case adapted to register oscillatory movements of the first and third tubes, in particular differentially, such that each of the first and second oscillation measurement signals represents, in particular opposite phase, oscillatory movements of the first and third tubes, and wherein each of the third and fourth oscillation sensors is in each case adapted to register oscillatory movements of the second and fourth tubes, in particular differentially, such that each of the third and fourth oscillation measurement signals represents, in particular opposite phase, oscillatory movements of the second and fourth tubes; and/or
- wherein the first and second oscillation sensors are in each case mechanically connected both to the first tube and to the third tube and wherein the third and fourth oscillation sensors are in each case mechanically connected both to the second tube and to the fourth tube; and/or
- wherein the first, second, third and fourth tubes are only structurally identical pairwise, in particular such that the first tube is only structurally identical to the third tube and the second tube is only structurally identical to the fourth tube; and/or
- wherein each of the four tubes has a caliber which equals a caliber of each of the other tubes; and/or
- wherein the tube wall of each of the four tubes has a wall thickness which equals a wall thickness of each of the other tubes; and/or
- wherein the tube arrangement has an, in particular plate-shaped, first coupling element, in particular mechanically connected to each of the tubes and positioned further away from the second flow divider (22) than from the first flow divider (21), and a second coupling element which is, in particular, plate-shaped and/or structurally identical to the first coupling element, in particular mechanically connected to each of the tubes and positioned further away from the first flow divider (21) than from the second flow divider (22).

22. Measuring system according to one of the preceding claims, further comprising: an electronics protective housing (200) for the measuring system electronics (20), in particular secured to a support structure of the measuring transducer.

23. Use of a measuring according to one of the preceding claims for measuring at least one flow parameter, in particular a mass flow and/or a volume flow and/or at least one substance parameter, in particular a density and/or a viscosity, of a flowing measured substance, in particular flowing in a tube, in particular a gas, a liquid or a dispersion.

## Revendications

1. Système de mesure vibronique, notamment un débitmètre massique Coriolis ou un débitmètre massique/densimètre Coriolis, lequel système est destiné à la mesure et/ou à la surveillance d'au moins un paramètre d'écoulement, notamment variable dans le temps, notamment d'un débit massique, d'un débit volumique et/ou d'une vitesse d'écoulement, et/ou à la mesure et/ou à la surveillance d'au moins un paramètre de matière, notamment variable dans le temps, notamment d'une densité et/ou d'une viscosité, d'un produit en écoulement, notamment d'un gaz, d'un liquide ou d'une dispersion, lequel système de mesure est notamment réalisé sous forme d'appareil de mesure en ligne et/ou d'appareil de mesure de construction compacte, lequel système de mesure comprend :
- un transducteur (10)
-- avec un arrangement de tubes destiné à guider le produit en écoulement,
-- avec un dispositif d'excitation destiné à convertir la puissance électrique en puissance mécanique servant à exciter et à maintenir des vibrations mécaniques forcées de l'arrangement de tubes
-- et avec un arrangement de capteurs destiné à mesurer les vibrations mécaniques de l'arrangement de tubes et à fournir des signaux de mesure de vibrations représentant respectivement les mouvements de vibration de l'arrangement de tubes ;
- ainsi qu'une électronique de système de mesure (20) couplée électriquement au transducteur (10), à savoir aussi bien à son dispositif d'excitation qu'à son arrangement de capteurs, notamment au moyen de lignes de liaison électriques, laquelle électronique est notamment formée au moyen d'au moins un microprocesseur et/ou disposée dans un boîtier de protection électronique, et laquelle électronique est conçue pour commander le transducteur et pour évaluer les signaux de mesure de vibrations fournis par le transducteur ;
- l'arrangement de capteurs comprenant
-- un premier diviseur de débit (21), notamment servant de dérivation de conduites et/ou situé côté entrée, lequel diviseur comporte au moins deux ouvertures d'écoulement,
-- un deuxième diviseur de débit (22), notamment de construction identique au premier diviseur de débit (21) et/ou servant de jonction de conduites et/ou situé côté sortie, lequel diviseur comporte au moins deux ouvertures d'écoulement
-- ainsi qu'un premier tube (111), notamment au moins partiellement courbé et/ou au moins partiellement droit et au moins un deuxième tube (112), notamment au moins partiellement courbé et/ou au moins partiellement droit et/ou de construction identique au premier tube et/ou au moins partiellement parallèle au premier tube,
-- chacun des premier et deuxième tubes de l'arrangement de tubes s'étendant respectivement d'une première extrémité respective du tube respectif jusqu'à une deuxième extrémité respective du même tube avec une longueur de tube respective et présentant respectivement un canal intérieur entouré par une paroi de tube, notamment métallique, lequel canal s'étend respectivement de la première extrémité respective du tube respectif jusqu'à la deuxième extrémité respective du même tube,
-- chacun des premier et deuxième tubes de l'arrangement de tubes étant raccordé respectivement à chacun des premier et deuxième diviseurs de débit, de telle sorte
--- que le premier tube débouche par sa première extrémité dans une première ouverture d'écoulement du premier diviseur de débit (21) et par sa deuxième extrémité dans une première ouverture d'écoulement du deuxième diviseur de débit (22),
--- et que le deuxième tube débouche par sa première extrémité dans une deuxième ouverture d'écoulement du premier diviseur de débit (21) et par sa deuxième extrémité dans une deuxième ouverture d'écoulement du deuxième diviseur de débit (22),
--- les premier et deuxième tubes de l'arrangement de tubes étant couplés mécaniquement l'un à l'autre au moins par l'intermédiaire des premier et deuxième diviseurs de débit, de telle sorte que des vibrations mécaniques forcées du premier tube provoquent des vibrations mécaniques du deuxième tube qui leur sont couplées et que des vibrations mécaniques forcées du deuxième tube provoquent des vibrations mécaniques du premier tube qui leur sont couplées ;
--- et chacun des premier et deuxième tubes de l'arrangement de tubes étant respectivement conçu pour être traversé par un produit et pour vibrer pendant ce temps ;
- le dispositif d'excitation présentant deux excitateurs de vibrations (31, 32), notamment électrodynamiques et/ou de construction identique, parmi lesquels
-- un premier excitateur de vibrations (31) est relié mécaniquement au premier tube, notamment positionné au centre du premier tube,
-- et un deuxième excitateur de vibrations (32) est relié mécaniquement au deuxième tube, notamment positionné au centre du deuxième tube,
- chacun des premier et deuxième excitateurs de vibrations étant respectivement conçu pour convertir une puissance électrique avec un courant électrique variable dans le temps en une puissance mécanique, notamment de telle sorte qu'en un point d'attaque respectif formé au moyen de l'excitateur de vibrations respectif sur le tube qui lui est respectivement relié mécaniquement, une force d'entraînement variable dans le temps agit sur le premier ou le deuxième tube ;
- l'arrangement de capteurs présentant au moins quatre capteurs de vibrations, notamment électrodynamiques et/ou de construction identique et/ou espacés les uns des autres, parmi lesquels
-- un premier capteur de vibrations (41) et un deuxième capteur de vibrations (42) sont positionnés sur le premier tube à distance l'un de l'autre, notamment symétriquement par rapport au premier excitateur de vibrations (31), notamment à savoir reliés mécaniquement au moins en partie au premier tube, et un troisième capteur de vibrations (43) et un quatrième capteur de vibrations (44) sont positionnés sur le deuxième tube à distance l'un de l'autre, notamment symétriquement par rapport au deuxième excitateur de vibrations (32), notamment à savoir reliés mécaniquement au moins en partie au deuxième tube ;
- chacun des premier et deuxième capteurs de vibrations étant respectivement conçu pour détecter des mouvements de vibration du premier tube et pour les convertir en un premier ou un deuxième signal de mesure de vibrations représentant lesdits mouvements de vibration, lequel signal est notamment électrique ou optique, notamment de telle sorte que chacun des premier et deuxième signaux de mesure de vibrations contienne respectivement une ou plusieurs composantes de signal sinusoïdales avec respectivement une fréquence correspondant à une fréquence de vibration des mouvements de vibration du premier tube ;
- chacun des troisième et quatrième capteurs de vibrations étant respectivement conçu pour détecter des mouvements de vibration du deuxième tube et pour les convertir en un troisième ou quatrième signal de mesure de vibrations représentant lesdits mouvements de vibration, lequel signal est notamment électrique ou optique, notamment de telle sorte que chacun des troisième et quatrième signaux de mesure de vibrations contienne respectivement une ou plusieurs composantes de signal sinusoïdales avec respectivement une fréquence correspondant à une fréquence de vibration des mouvements de vibration du deuxième tube ;
- l'électronique de système de mesure (20) étant conçue pour,
-- alimenter le premier excitateur de vibrations (31), à savoir injecter un premier signal d'attaque électrique (e1) dans le premier excitateur de vibrations (31), ce par quoi
--- le premier tube exécute des vibrations mécaniques forcées, notamment des vibrations de flexion, avec une ou plusieurs fréquences de vibration prédéfinies par le premier signal d'excitation (e1) et
--- le deuxième tube exécute des vibrations mécaniques couplées à au moins une des vibrations du premier tube,
-- ainsi que pour alimenter le deuxième excitateur de vibrations (32), à savoir injecter un deuxième signal d'attaque électrique (e2) dans le deuxième excitateur de vibrations (32), ce par quoi
--- le deuxième tube exécute des vibrations mécaniques forcées, notamment des vibrations de flexion, avec une ou plusieurs fréquences de vibration prédéfinies par le deuxième signal d'excitation (e2) et
--- le premier tube exécute des vibrations mécaniques couplées à des vibrations du deuxième tube ;
- l'électronique de système de mesure (20) étant conçue pour,
-- dans un premier mode de fonctionnement
-- générer aussi bien le premier signal d'attaque (e1) avec une première composante de courant utile (eN1), à savoir une composante de courant sinusoïdale dominant en termes d'intensité de courant ou unique avec une fréquence (de courant alternatif) et l'injecter dans le premier excitateur de vibrations,
-- que le deuxième signal d'attaque (e2) avec au moins une deuxième composante de courant utile (eN2), à savoir une composante de courant sinusoïdale dominant en termes d'intensité de courant ou unique avec une fréquence (de courant alternatif) et l'injecter dans le deuxième excitateur de vibrations, de telle sorte
--- que le premier tube présente au moins partiellement, notamment pour l'essentiel, des premières vibrations utiles, à savoir des vibrations mécaniques forcées par le premier excitateur de vibrations (alimenté) avec au moins une première fréquence utile, à savoir une fréquence de vibration correspondant à la fréquence (de courant alternatif) des premières composantes de courant utile, et que le deuxième tube présente au moins partiellement, notamment pour l'essentiel, des deuxièmes vibrations utiles, à savoir des vibrations mécaniques forcées par le deuxième excitateur de vibrations (alimenté) avec au moins une deuxième fréquence utile, à savoir une fréquence de vibration correspondant à la fréquence (de courant alternatif) des deuxièmes composantes de courant utiles, notamment de telle sorte que les premières vibrations utiles et/ou les deuxièmes vibrations utiles sont appropriées pour provoquer dans le produit en écoulement des forces de Coriolis dépendant du débit massique,
--- et que chacun des premier et deuxième signaux de vibrations présente respectivement une première composante de signal utile (sN1 ; sN2), à savoir une composante de signal sinusoïdale respective avec une fréquence correspondant à la première fréquence utile et chacun des troisième et quatrième signaux de vibrations présente respectivement une troisième composante de signal utile (sN3 ; sN4), à savoir une composante de signal sinusoïdale respective avec une fréquence correspondant à la deuxième fréquence utile,
- et, dans un deuxième mode de fonctionnement, notamment activé avant et/ou après le premier mode de fonctionnement,
-- générer au moins temporairement le premier signal d'attaque (e1) avec la première composante de courant utile (eN1) et l'injecter dans le premier excitateur de vibrations, notamment alimenter le premier excitateur de vibrations de la même manière que dans le premier mode de fonctionnement, et en même temps ne pas injecter de signal d'attaque contenant la deuxième composante de courant utile dans le deuxième excitateur de vibrations, de telle sorte
--- que le premier tube exécute au moins en partie des premières vibrations utiles et le deuxième tube des vibrations mécaniques couplées aux premières vibrations utiles avec la première fréquence utile, mais pas de deuxièmes vibrations utiles,
--- et que chacun des premier et deuxième signaux de vibrations présente respectivement la composante de signal utile et chacun des troisième et quatrième signaux de vibration présente respectivement une composante de signal de couplage (sK3 ; sk4), à savoir une composante de signal sinusoïdale respective avec une fréquence correspondant à la fréquence (de courant alternatif) des premières composantes de courant utiles (eN1) ;
- et l'électronique de système de mesure étant conçue :
-- dans le premier mode de fonctionnement, pour recevoir et évaluer les premier, deuxième, troisième et quatrième signaux de vibrations, à savoir pour déterminer à l'aide des signaux de vibrations, notamment à l'aide respectivement d'au moins l'une des composantes de signal utiles, des valeurs mesurées quantifiant (successivement dans le temps) l'au moins une grandeur de mesure physique,
-- ainsi que, dans le deuxième mode de fonctionnement, pour recevoir et évaluer au moins le troisième signal de vibrations et/ou le quatrième signal de vibrations, notamment aussi bien le troisième signal de vibrations que le quatrième signal de vibrations, à savoir recevoir et évaluer les premier, deuxième, troisième et quatrième signaux de vibrations.

2. Système de mesure selon la revendication précédente,
- pour lequel l'électronique de système de mesure (20) est conçue pour recevoir et évaluer également le premier signal de vibrations et/ou le deuxième signal de vibrations dans le deuxième mode de fonctionnement ; et/ou
- pour lequel l'électronique de système de mesure est conçue pour déterminer, à l'aide d'au moins l'un des troisième et quatrième signaux de vibrations reçus dans le deuxième mode de fonctionnement, notamment à l'aide de chacun des troisième et quatrième signaux de vibrations, des valeurs mesurées quantifiant (successivement dans le temps) l'au moins une grandeur de mesure physique, notamment pour les comparer également à des valeurs mesurées déterminées à l'aide de signaux de vibrations reçus dans le premier mode de fonctionnement pour ladite grandeur de mesure ; et/ou
- pour lequel l'électronique de système de mesure est conçue pour obtenir ou déterminer la composante de signal utile respective à partir d'au moins l'un des premier et deuxième signaux de vibrations reçus dans le premier mode de fonctionnement, notamment aussi bien dans le premier mode de fonctionnement que dans le deuxième mode de fonctionnement, notamment à partir de chacun des premier et deuxième signaux de vibrations, ainsi que pour obtenir ou déterminer la composante de signal utile respective à partir d'au moins l'un des troisième et quatrième signaux de vibrations reçus dans le premier mode de fonctionnement, notamment à partir de chacun des troisième et quatrième signaux de vibrations.

3. Système de mesure selon l'une des revendications précédentes, pour lequel chacune des composantes de signal utiles des premier, deuxième, troisième et quatrième signaux de vibrations présente respectivement un angle de phase dépendant d'un débit massique du produit mesuré.

4. Système de mesure selon la revendication précédente, pour lequel l'électronique de système de mesure (20) est conçue pour déterminer, notamment également pour calculer - au moins dans le premier mode de fonctionnement, à l'aide d'une première différence de phase, à savoir une différence entre l'angle de phase de la composante de signal utile du premier signal de vibrations et l'angle de phase de la composante utile du deuxième signal de vibrations, ainsi qu'à l'aide d'une deuxième différence de phase, à savoir une différence entre l'angle de phase de la composante de signal utile du troisième signal de vibrations et l'angle de phase de la composante de signal utile du quatrième signal de vibrations - des valeurs mesurées de débit massique, à savoir des valeurs mesurées représentant le débit massique du produit en écoulement.

5. Système de mesure selon l'une des revendications précédentes, pour lequel l'électronique de système de mesure est conçue pour obtenir ou déterminer la composante de signal de couplage respective à partir d'au moins l'un des troisième et quatrième signaux de vibrations reçus dans le deuxième mode de fonctionnement, notamment à partir de chacun des troisième et quatrième signaux de vibrations.

6. Système de mesure selon l'une des revendications précédentes, pour lequel chacune des composantes de signal de couplage du troisième et du quatrième signal de vibrations présente respectivement un angle de phase dépendant d'un débit massique du produit mesuré.

7. Système de mesure selon les revendications 3, 4, 5 et 6, pour lequel l'électronique de système de mesure (20) est conçue pour déterminer, au moins dans le deuxième mode de fonctionnement, des valeurs mesurées de débit massique à l'aide de la première différence de phase ainsi qu'à l'aide d'une troisième différence de phase, à savoir une différence entre l'angle de phase de la composante de signal de couplage du troisième signal de vibrations et l'angle de phase de la composante de signal de couplage du quatrième signal de vibrations, notamment pour calculer et/ou pour comparer des valeurs mesurées de débit massique déterminées à l'aide de la première et de la deuxième différence de phase.

8. Système de mesure selon la revendication précédente, pour lequel l'électronique de système de mesure (20) est conçue pour comparer entre elles la première différence de phase et la troisième différence de phase, et pour émettre un message, notamment déclaré comme alarme (de défaut), en cas d'écart trop important, à savoir dépassant une valeur de référence prédéfinie à cet effet.

9. Système de mesure selon l'une des revendications précédentes, pour lequel l'électronique de système de mesure est conçue pour détecter, à l'aide d'au moins l'un des troisième et quatrième signaux de vibrations reçus dans le deuxième mode de fonctionnement, notamment à savoir leur composante de signal de couplage respective, si une perturbation du système de mesure, notamment réduisant une capacité de fonctionnement du système de mesure et/ou provoquant un dysfonctionnement du système de mesure et/ou réduisant une intégrité d'au moins l'un des premier, deuxième, troisième et quatrième signaux de mesure de vibrations ou de valeurs mesurées obtenues à partir de ceux-ci et/ou provoquant une erreur de mesure de valeurs mesurées obtenues à partir de ceux-ci, est présente, notamment en raison d'un dépôt sur une face interne de la paroi d'un ou de plusieurs des tubes et/ou en raison d'une réduction d'une épaisseur de la paroi d'un ou de plusieurs des tubes et/ou en raison d'un vieillissement d'un ou de plusieurs des capteurs de vibrations et/ou des excitateurs de vibrations, notamment au moyen d'une comparaison de valeurs mesurées déterminées à l'aide de signaux de vibrations reçus dans le premier mode de fonctionnement pour l'au moins une grandeur de mesure avec des valeurs mesurées déterminées à l'aide de signaux de vibrations reçus dans le deuxième mode de fonctionnement pour la même grandeur de mesure.

10. Système de mesure selon la revendication précédente,
- pour lequel la perturbation du système de mesure comprend une modification, notamment irréversible, d'une ou plusieurs propriétés vibratoires de l'arrangement de tubes, notamment en raison d'une réduction d'une épaisseur de la paroi d'un ou plusieurs des tubes et/ou en raison d'une déformation plastique d'un ou plusieurs des tubes et/ou en raison d'un dépôt sur une face interne de la paroi d'un ou plusieurs des tubes et/ou en raison d'une fissure dans la paroi d'un ou plusieurs des tubes ;
- et/ou pour lequel la perturbation du système de mesure comprend une modification, notamment irréversible, d'une ou de plusieurs propriétés d'écoulement de l'arrangement de tubes, notamment en raison d'une réduction d'une section d'écoulement de l'arrangement de tubes, notamment suite à une obstruction d'un ou de plusieurs des tubes et/ou suite à un dépôt sur une face interne de la paroi d'un ou de plusieurs des tubes ;
- et/ou pour lequel la perturbation du système de mesure comprend une modification, notamment irréversible, d'une ou de plusieurs propriétés de transducteur électromécaniques, notamment en raison d'un vieillissement d'un ou de plusieurs des capteurs de vibrations et/ou des excitateurs de vibrations et/ou en raison d'une modification d'une liaison mécanique respective entre un ou plusieurs capteurs de vibrations ou un ou plusieurs excitateurs de vibrations et le tube respectif.

11. Système de mesure selon la revendication 4 et 9, pour lequel la perturbation du système de mesure comprend une modification, notamment irréversible, d'un point zéro (d'échelle) du système de mesure, qui correspond à une première et/ou une deuxième différence de phase mesurée lorsque le produit est au repos, et/ou une sensibilité (de mesure) du système de mesure, laquelle correspond à une modification de la première et/ou de la deuxième différence de phase rapportée à une modification du débit massique.

12. Système de mesure selon l'une des revendications précédentes, pour lequel l'électronique de système de mesure est conçue pour calculer, à l'aide d'un ou de plusieurs des signaux de mesure de vibrations reçus dans le deuxième mode de fonctionnement, une ou plusieurs valeurs caractéristiques pour au moins un indice de système de mesure (MK1), lequel indice caractérise un état de fonctionnement, notamment une fonction du système (fonction de transmission) inhérente au système de mesure, déterminant une ou plusieurs dépendances fonctionnelles d'un ou de plusieurs des signaux de mesure de vibrations par rapport à un ou plusieurs des signaux d'attaque, ou une capacité de fonctionnement du système de mesure, notamment de telle sorte que ledit indice de système de mesure dépend d'un ou de plusieurs paramètres d'une fonction du système de mesure faisant la liaison entre la première composante de courant utile du premier signal d'attaque (e1) et la composante de signal de couplage du troisième et/ou du quatrième signal de mesure de vibrations.

13. Système de mesure selon la revendication précédente, pour lequel l'électronique de système de mesure (20) est conçue pour comparer une ou plusieurs valeurs caractéristiques pour l'indice de système de mesure respectivement avec une ou plusieurs valeurs de référence déterminées pour l'indice de système de mesure, notamment par le fabricant du système de mesure et/ou lors de la fabrication et/ou d'une mise en service du système de mesure, notamment une ou plusieurs valeurs de référence représentant une capacité de fonctionnement réduite du transducteur et/ou une ou plusieurs valeurs de référence représentant un dysfonctionnement du transducteur et/ou une ou plusieurs valeurs de référence représentant un transducteur défectueux, notamment pour évaluer et/ou quantifier un écart d'une ou plusieurs des valeurs caractéristiques par rapport à une ou plusieurs des valeurs de référence.

14. Système de mesure selon la revendication précédente, pour lequel l'électronique de système de mesure (20) est conçue pour déterminer si une ou plusieurs valeurs caractéristiques pour l'indice de système de mesure (MK1) est/sont supérieure(s) à l'au moins une valeur de référence pour l'indice de système de mesure, notamment si une ou plusieurs valeurs caractéristiques pour l'indice de système de mesure est/sont supérieure(s) à une ou plusieurs valeurs de référence représentant une capacité de fonctionnement réduite du transducteur et/ou est/sont supérieure(s) à une ou plusieurs valeurs de référence représentant un dysfonctionnement du transducteur et/ou est/sont supérieure(s) à une ou plusieurs valeurs de référence représentant un transducteur qui n'est plus intact, pour émettre un message le signalant, lequel message est notamment déclaré comme alarme (de défaut).

15. Système de mesure selon l'une des revendications précédentes, pour lequel l'électronique de système de mesure (20) comporte une mémoire de données électronique non volatile (EEPROM), laquelle est conçue pour conserver des données numériques, notamment même en l'absence d'une tension de service appliquée, notamment à savoir pour mémoriser une ou plusieurs valeurs de référence déterminées au préalable pour l'indice du système de mesure.

16. Système de mesure selon l'une des revendications 13 à 14, respectivement en liaison avec la revendication 15,
- pour lequel une ou plusieurs valeurs de référence pour l'indice du système de mesure, notamment déterminées au préalable par le fabricant du système de mesure et/ou lors de la fabrication du système de mesure et/ou lors du fonctionnement du système de mesure, notamment à savoir une ou plusieurs valeurs de référence représentant une capacité de fonctionnement réduite du transducteur et/ou à savoir une ou plusieurs valeurs de référence représentant un dysfonctionnement du transducteur, sont enregistrées dans la mémoire électronique de données,
- et pour lequel l'électronique de système de mesure (20) est conçue pour comparer une ou plusieurs valeurs caractéristiques pour le système de mesure avec une ou plusieurs valeurs de référence pour le système de mesure enregistrées dans la mémoire de données.

17. Système de mesure selon l'une des revendications précédentes,
- pour lequel l'électronique de système de mesure (20) est conçue pour fournir la première composante de courant utile du premier signal d'attaque avec une fréquence (de courant alternatif) qui s'écarte d'une fréquence de résonance, fr1, du premier tube de moins de 1 % de la même fréquence de résonance, fr1, et/ou de moins de 1 Hz ; et/ou
- pour lequel l'électronique de système de mesure (20) est conçue pour fournir la deuxième composante de courant utile du deuxième signal d'attaque avec une fréquence (de courant alternatif) qui s'écarte d'une fréquence de résonance, fr2, du deuxième tube de moins de 1 % de la fréquence de résonance, fr2, et/ou de moins de 1 Hz ; et/ou
- pour lequel l'électronique de système de mesure (20) est conçue pour fournir la composante de courant utile du premier signal d'attaque avec une fréquence (de courant alternatif) qui s'écarte d'une fréquence de résonance, fr2, du deuxième tube de moins de 1 % de la fréquence de résonance, fr2, et/ou de moins de 1 Hz ; et/ou
- pour lequel l'électronique de système de mesure (20) est conçue pour fournir la deuxième composante de courant utile du deuxième signal d'attaque avec une fréquence (de courant alternatif) qui s'écarte d'une fréquence de résonance, fr1, du premier tube de moins de 1 % de la fréquence de résonance, fr1, et/ou de moins de 1 Hz ; et/ou
- pour lequel les premier et deuxième tubes présentent au moins une fréquence de résonance commune, fr12, et
pour lequel l'électronique de système de mesure est conçue pour fournir les première et deuxième composantes de courant utiles du premier ou du deuxième signal d'attaque respectivement avec une fréquence (de courant alternatif) qui s'écarte de la même fréquence de résonance commune, fr12, des premier et deuxième tubes de moins de 1 % de la même fréquence de résonance, fr12, et/ou de moins de 1 Hz, notamment de telle sorte qu'une différence de phase de 180° est réglée entre les première et deuxième composantes de courant utiles ; et/ou
- un mode de vibration de flexion naturel, notamment un mode fondamental de vibration de flexion, étant inhérent au transducteur, mode dans lequel les premier et deuxième tubes peuvent exécuter ou exécutent des vibrations mécaniques en opposition de phase, et l'électronique de système de mesure étant conçue, dans le premier mode de fonctionnement, pour injecter des premier et deuxième signaux d'attaque imposant des vibrations mécaniques en opposition de phase dans les premier et deuxième excitateurs de vibrations, notamment pour fournir les première et deuxième composantes de courant utiles avec une fréquence (de courant alternatif) qui s'écarte d'une fréquence de résonance, fr12, du mode de vibration de flexion de moins de 1 % de la fréquence de résonance et/ou de moins de 1 Hz ; et/ou
- l'électronique de système de mesure (20) étant conçue pour, dans un troisième mode de fonctionnement, notamment activé à la suite du deuxième mode de fonctionnement :
-- à la fois générer, au moins temporairement, le deuxième signal d'attaque (e2) avec la deuxième composante de courant utile (eN2) et l'injecter dans le deuxième excitateur de vibrations, notamment alimenter le deuxième excitateur de vibrations de la même manière que dans le premier mode de fonctionnement, et en même temps ne pas injecter de signal d'attaque contenant la première composante de courant utile dans le premier excitateur de vibrations, de telle sorte
--- que le deuxième tube exécute au moins en partie des deuxièmes vibrations utiles et le premier tube des vibrations mécaniques couplées aux deuxièmes vibrations utiles avec la deuxième fréquence utile, mais pas de premières vibrations utiles,
--- et que chacun des troisième et quatrième signaux de vibrations, respectivement la composante de signal utile et chacun des premier et deuxième signaux de vibrations, présente respectivement une composante de signal de couplage (sk1 ; sk2), à savoir une composante de signal sinusoïdale respective avec une fréquence correspondant à la fréquence (de courant alternatif) des deuxièmes composantes de courant utiles (eN2),
-- ainsi que recevoir et évaluer au moins le premier signal de vibrations et/ou le deuxième signal de vibrations, notamment aussi bien le premier signal de vibrations que le deuxième signal de vibrations, notamment à savoir recevoir et évaluer les premier, deuxième, troisième et quatrième signaux de vibrations.

18. Système de mesure selon l'une des revendications précédentes, comprenant en outre une structure de support (100), réalisée notamment sous la forme d'un boîtier de protection de transducteur, la structure de support et l'arrangement de tubes étant fixés l'un à l'autre, notamment de manière amovible, au moyen de leurs premier et deuxième diviseurs de débit.

19. Système de mesure selon la revendication précédente,
- pour lequel les premier et deuxième excitateurs de vibrations (31) sont reliés mécaniquement à la structure de support ; et/ou
- pour lequel les premier, deuxième, troisième et quatrième capteurs de vibrations sont reliés mécaniquement à la structure de support.

20. Système de mesure selon l'une des revendications 1 à 18,
- pour lequel aussi bien le premier diviseur de débit (21) que le deuxième diviseur de débit (22) présentent chacun, notamment exactement, quatre ouvertures d'écoulement,
- et pour lequel l'arrangement de tubes comprend un troisième tube (113), notamment au moins partiellement courbé et/ou au moins partiellement droit et/ou au moins partiellement parallèle au premier tube, et un deuxième tube (114), notamment au moins partiellement courbé et/ou au moins partiellement droit et/ou de construction identique au troisième tube et/ou au moins partiellement parallèle au troisième tube,
-- chacun des troisième et quatrième tubes de l'arrangement de tubes s'étendant respectivement d'une première extrémité respective du tube respectif jusqu'à une deuxième extrémité respective du même tube avec une longueur de tube respective et présentant respectivement un canal intérieur entouré par une paroi de tube, notamment métallique, lequel canal s'étend respectivement de la première extrémité respective du tube respectif jusqu'à la deuxième extrémité respective du même tube,
-- chacun des troisième et quatrième tubes de l'arrangement de tubes étant raccordé respectivement à chacun des premier et deuxième diviseurs de débit, de telle sorte
--- que le troisième tube débouche par sa première extrémité dans une troisième ouverture d'écoulement du premier diviseur de débit (21) et par sa deuxième extrémité dans une troisième ouverture d'écoulement du deuxième diviseur de débit (22),
--- et que le quatrième tube débouche par sa première extrémité dans une quatrième ouverture d'écoulement du premier diviseur de débit (21) et par sa deuxième extrémité dans une quatrième ouverture d'écoulement du deuxième diviseur de débit (22),
--- et chacun des troisième et quatrième tubes de l'arrangement de tubes étant respectivement conçu pour être traversé par un produit et pour être laissé vibrer pendant ce temps.

21. Système de mesure selon la revendication précédente,
- pour lequel les troisième et quatrième tubes de l'arrangement de tubes sont couplés mécaniquement les uns aux autres au moins par l'intermédiaire des premier et deuxième diviseurs de débit, de telle sorte
-- que des vibrations mécaniques forcées du troisième tube provoquent des vibrations mécaniques couplées du quatrième tube et que des vibrations mécaniques forcées du quatrième tube provoquent des vibrations mécaniques couplées du troisième tube ; et/ou
-- que des vibrations mécaniques forcées des premier et troisième tubes, notamment des vibrations de flexion opposées des premier et troisième tubes, des vibrations mécaniques couplées à celles-ci de chacun des deuxième et quatrième tubes, notamment des vibrations de flexion opposées des deuxième et quatrième tubes, et des vibrations mécaniques forcées des deuxième et quatrième tubes, notamment des vibrations de flexion opposées des deuxième et quatrième tubes, provoquent des vibrations mécaniques couplées à celles-ci de chacun des premier et troisième tubes, notamment des vibrations de flexion opposées des premier et troisième tubes ; et/ou
-- que des vibrations mécaniques forcées de chacun des premier, deuxième, troisième et quatrième tubes provoquent des vibrations mécaniques couplées de chacun des autres premier, deuxième, troisième et quatrième tubes ; et/ou
- le premier excitateur de vibrations (31) étant conçu pour exciter des vibrations mécaniques des premier et troisième tubes, notamment de manière différentielle, et le deuxième excitateur de vibrations (32) étant conçu pour exciter des vibrations mécaniques des deuxième et quatrième tubes, notamment de manière différentielle ; et/ou
- le premier excitateur de vibrations (31) étant relié mécaniquement à la fois au premier tube et au troisième tube, et le deuxième excitateur de vibrations (32) étant relié mécaniquement à la fois au deuxième tube et au quatrième tube ; et/ou
- chacun des premier et deuxième capteurs de vibrations étant respectivement conçu pour détecter des mouvements de vibration des premier et troisième tubes, notamment de manière différentielle, de telle sorte que chacun des premier et deuxième signaux de mesure de vibrations représente des mouvements de vibration, notamment en opposition de phase, des premier et troisième tubes, et chacun des troisième et quatrième capteurs de vibrations étant respectivement conçu pour détecter des mouvements de vibration des deuxième et quatrième tubes, notamment de manière différentielle, de telle sorte que chacun des troisième et quatrième signaux de mesure de vibrations représente des mouvements de vibration, notamment en opposition de phase, des deuxième et quatrième tubes ; et/ou
- les premier et deuxième capteurs de vibrations étant reliés mécaniquement à la fois au premier tube et au troisième tube, et les troisième et quatrième capteurs de vibrations étant reliés mécaniquement à la fois au deuxième tube et au quatrième tube ; et/ou
- les premier, deuxième, troisième et quatrième tubes étant identiques uniquement par paires, notamment de telle sorte que le premier tube soit identique uniquement au troisième tube et que le deuxième tube soit identique uniquement au quatrième tube ; et/ou
- chacun des quatre tubes présentant un calibre égal à un calibre de chacun des autres tubes ; et/ou
- la paroi de chacun des quatre tubes présentant une épaisseur de paroi égale à une épaisseur de paroi de chacun des autres tubes ; et/ou
- l'arrangement de tubes présentant un premier élément de couplage, notamment en forme de plaque, lequel élément est relié mécaniquement à chacun des tubes et notamment positionné plus loin du deuxième diviseur de débit (22) que du premier diviseur de débit (21), ainsi qu'un deuxième élément de couplage, notamment en forme de plaque et/ou de construction identique au premier élément de couplage, lequel élément est relié mécaniquement à chacun des tubes et notamment positionné plus loin du premier diviseur de débit (21) que du deuxième diviseur de débit (22).

22. Système de mesure selon l'une des revendications précédentes, comprenant en outre : un boîtier de protection électronique (200) pour l'électronique (20) du système de mesure, fixé notamment sur une structure de support du transducteur.

23. Utilisation d'un système de mesure selon l'une des revendications précédentes, lequel est destiné à mesurer au moins un paramètre d'écoulement, notamment un débit massique et/ou un débit volumique, et/ou au moins un paramètre de matière, notamment une densité et/ou une viscosité, d'un produit fluide, notamment un gaz, un liquide ou une dispersion, s'écoulant dans une conduite.
